(19) Europäisches Patentamt
European Patent Office
Office européen des brevets

(11) EP 4 322 661 A1

(12) EUROPEAN PATENT APPLICATION
published in accordance with Art. 153(4) EPC

(43) Date of publication:
14.02.2024 Bulletin 2024/07

(51) International Patent Classification (IPC):
H04W 72/04 (2023.01)    H04W 72/12 (2023.01)

(21) Application number: 22784375.2

(52) Cooperative Patent Classification (CPC):
H04W 72/04; H04W 72/12

(22) Date of filing: 02.03.2022

(86) International application number:
PCT/JP2022/008727

(87) International publication number:
WO 2022/215390 (13.10.2022 Gazette 2022/41)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 06.04.2021 JP 2021064901

(71) Applicant: Panasonic Intellectual Property
Corporation
of America
Torrance, CA 90504 (US)

(72) Inventors:
• YAMAMOTO, Tetsuya
  Kadoma-shi, Osaka 571-0057 (JP)
• SUZUKI, Hidetoshi
  Kadoma-shi, Osaka 571-0057 (JP)
• OGAWA, Yoshihiko
  Kadoma-shi, Osaka 571-0057 (JP)

(74) Representative: Grünecker Patent- und
Rechtsanwälte
PartG mbB
Leopoldstraße 4
80802 München (DE)

(54) TERMINAL, BASE STATION, AND COMMUNICATION METHOD

(57) This terminal is provided with: a control circuit which, if a transmission resource allocated to transmission of an uplink shared channel employing a plurality of slots and a transmission resource of an uplink control channel overlap in the time domain, determines a second resource amount to be used to transmit uplink control information, on the basis of the size of data to be transmitted on the uplink shared channel in the plurality of slots, and/or a first resource amount of the uplink shared channel in the plurality of slots; and a transmission circuit for multiplexing and transmitting the uplink control information in a resource having the determined second resource amount, and the data.

200

205 CONTROLLER — 209 RECEIVER

FIG. 4

EP 4 322 661 A1

**Description**

Technical Field

The present disclosure relates to a terminal, a bast station, and a communication method.

Background Art

In recent years, a dramatic growth of Internet of Things (IoT) has been expected with the expansion and diversification of radio services as a background. The usage of mobile communication is expanding to all fields such as automobiles, houses, home electric appliances, or industrial equipment in addition to information terminals such as smart phones. In order to support the diversification of services, a substantial improvement in the performance and function of mobile communication systems has been required for various requirements such as an increase in the number of connected devices or low latency in addition to an increase in system capacity. The 5th generation mobile communication systems (5G) has features such as enhanced mobile broadband (eMBB), massive machine type communication (mMTC), and ultra reliable and low latency communication (URLLC), and can flexibly provide radio communication in response to a wide variety of needs.

The 3rd Generation Partnership Project (3GPP) as an international standardizing body has been specifying New Radio (NR) as one of 5G radio interfaces.

Citation List

Non-Patent Literature

NPL 1
3GPP TS38.104, "NR Base Station (BS) radio transmission and reception (Release 15)," December 2020.
NPL 2
RP-202928, "New WID on NR coverage enhancements," China Telecom, December 2020.
NPL 3
3GPP TS38.211, "NR Physical channels and modulation (Release 16)," December 2020.
NPL 4
3GPP TS38.212, "NR Multiplexing and channel coding (Release 16)," December 2020.
NPL 5
3GPP TS38.213, "NR Physical layer procedures for control (Release 16)," December 2020.
NPL 6
3GPP TS38.214, "NR Physical layer procedures for data (Release 16)," December 2020.
NPL 7
R1-2102241, "FL summary of TB processing over multi-slot PUSCH (SI 8.8.1.2)," Moderator (Nokia, Nokia Shanghai Bell), January 25th-February 5th, 2021.

Summary of Invention

Technical Problem

In NR, resources for different channels may overlap with each other. There is scope for further study, however, on control (or operation) when the resources for the different channels overlap with each other.

One non-limiting and exemplary embodiment of the present disclosure facilitates providing a terminal, a base station, and a communication method each capable of executing an appropriate control when resources for different channels overlap with each other.

A terminal according to an exemplary embodiment of the present disclosure includes: control circuitry, which, in operation, in a case where a transmission resource allocated for transmission of an uplink shared channel using a plurality of slots and a transmission resource for an uplink control channel overlap in time with each other, determines a second resource amount used for transmission of uplink control information, based on a size of data to be transmitted through the uplink shared channel in the plurality of slots and/or a first resource amount of the uplink shared channel in the plurality of slots; and transmission circuitry, which, in operation, multiplexes the uplink control information in a resource of the determined second resource amount and the data, and transmits the multiplexed uplink control information and data.

It should be noted that general or specific embodiments may be implemented as a system, a method, an integrated circuit, a computer program, a storage medium, or any selective combination thereof.

According to an exemplary embodiment of the present disclosure, it is possible to execute an appropriate control when resources for different channels overlap with each other.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1 illustrates an example of overlapping in time between a Physical Uplink Control Channel (PUCCH) transmission in a singl slot and a Physical Uplink Shared Channel (PUSCH) transmission using multiple slots;
FIG. 2 illustrates an example of overlapping in time between a plurality of PUCCH transmissions in single slot and a PUSCH transmission using multiple slots;
FIG. 3 is a block diagram illustrating an exemplary configuration focused on part of a base station;
FIG. 4 is a block diagram illustrating an exemplary configuration focused on part of a terminal;
FIG. 5 is a block diagram illustrating an exemplary configuration of the base station;
FIG. 6 is a block diagram illustrating an exemplary configuration of the terminal;
FIG. 7 is a flowchart describing an exemplary operation in Embodiment 1;
FIG. 8A illustrates an example of Variation 2;
FIG. 8B illustrates the example of Variation 2;
FIG. 9A illustrates an example of Embodiment 2;
FIG. 9B illustrates the example of Embodiment 2;
FIG. 10 is a flowchart describing an exemplary operation in Embodiment 2;
FIG. 11 is a diagram for describing a constraint on Uplink Control Information (UCI) on PUSCH in NR Rel. 15/16;
FIG. 12 illustrates an exemplary relation between a Transport block processing over multi-slot PUSCH (TBoMS) transmission and retransmission in a downlink transmission;
FIG. 13 is a flowchart describing an exemplary operation in Method 1 of Embodiment 3;
FIG. 14 illustrates the exemplary operation in Method 1 of Embodiment 3;
FIG. 15 is a flowchart describing an exemplary operation in Method 2 of Embodiment 3;
FIG. 16 illustrates the exemplary operation in Method 2 of Embodiment 3;
FIG. 17 is a flowchart describing an exemplary operation in Method 3 of Embodiment 3;
FIG. 18 illustrates the exemplary operation in Method 3 of Embodiment 3;
FIG. 19 illustrates an exemplary operation according to Variation 2;
FIG. 20 illustrates another exemplary operation according to Variation 2;
FIG. 21 illustrates an example of classification according to Variation 3;
FIG. 22 illustrates an exemplary operation according to Complement 4;
FIG. 23 illustrates an exemplary operation according to Complement 5;
FIG. 24 illustrates an exemplary operation according to Complement 7;
FIG. 25 illustrates an exemplary architecture of a 3GPP NR system;
FIG. 26 schematically illustrates a functional split between Next Generation-Radio Access Network (NG-RAN) and 5th Generation Core (5GC);
FIG. 27 is a sequence diagram of a Radio Resource Control (RRC) connection setup/reconfiguration procedure;
FIG. 28 schematically illustrates usage scenarios of enhanced Mobile BroadBand (eMBB), massive Machine Type Communications (mMTC), and Ultra Reliable and Low Latency Communications (URLLC); and
FIG. 29 is a block diagram illustrating an exemplary 5G system architecture for a non-roaming scenario.

Description of Embodiments

Hereinafter, embodiments of the present disclosure will be described in detail with reference to the accompanying drawings.

In NR, for example, in addition to a frequency band of 6 GHz or less, mainly within 700 MHz to 3.5 GHz band (e.g., may be referred to as Frequency Range 1 (FR1)), which has been used for cellular communication, a millimeter-wave band such as 28 GHz or 39 GHz band capable of ensuring a wide band (e.g., may be referred to as FR2) can be utilized (e.g., see Non-Patent Literature (hereinafter referred to as "NPL") 1). Further, for example, in FR1, a high frequency band is possibly used compared with the frequency band used in Long Term Evolution (LTE) or 3rd Generation mobile communication systems (3G) such as 3.5 GHz band.

The higher the frequency band is, the greater a radio wave propagation loss is, and thus, the reception quality of radio waves is likely to deteriorate. Hence, in NR, for example, it is expected to ensure almost the same communication area (or coverage) as in the Radio Access Technology (RAT) such LTE or 3G, in other words, to ensure an appropriate communication quality when the high frequency band is used compared with LTE or 3G. In one example, in Release 17 (e.g., referred to as "Rel. 17"), a method of improving the coverage in NR has been studied (e.g., see NPL 2).

In NR, a terminal transmits and receives data in accordance with resource allocation indicated by a layer-1 control signal (e.g., Downlink Control Information (DCI)) on a downlink control channel (Physical Downlink Control Channel (PDCCH)) from a base station, for example (e.g., see NPLs 3 to 6).

The terminal, for example, feeds back a response signal (Acknowledgement/Negative Acknowledgement (ACK/NACK)) that indicates success or failure of decoding on a downlink data channel (Physical Downlink Shared Channel (PDSCH)), by using an uplink control channel (Physical Uplink Control Channel (PUCCH)) (e.g., see NPL 5).

The terminal can also, for example, use PUCCH to transmit, to the base station, downlink channel-state information (Channel State Information (CSI)) indicaing a state of a downlink channel, in addition to ACK/NACK. These ACK/NACK and CSI are also called, for example, uplink control information (UCI).

Note that, in the following, transmitting at least one of data and control information by using PUCCH may be abbreviated as "transmitting PUCCH" or "PUCCH transmision." Moreover, receiving at least one of data and control information by using PUCCH may be abbreviated as "receiving PUCCH" or "PUCCH reception." For other channels, an operation of at least one of transmission and reception may be also abbreviated, as with PUCCH.

When transmitting ACK/NACK for PDSCH assigned by the DCI, for example, the terminal transmits PUCCH in accordance with resource allocation indicated by the DCI from the base station. Control information included in the DCI may include information on a PUCCH resource. For example, information on the PUCCH resource may include information on the timing of how many slots later PUCCH is transmitted since the slot in which the terminal has received PDSCH. The information on the timing may be referred as K1 or PDSCH-to-HARQ_feedback timing indication. Incidentally, HARQ is an abbreviation for Hybrid Automatic Repeat reQuest.

In uplink, for example, the terminal transmits an uplink data channel (Physical Uplink Shared Channel (PUSCH)) in accordance with resource allocation (e.g.,Grant) indicated by the DCI on PDCCH from the base station (e.g., see NPLs 3 to 6). Control information included in the DCI may include, for example, information on a time-domain resource with which PUSCH is transmitted.

For example, the information on the time-domain resource may be information on the timing of how many slots later PUSCH is transmitted since the slot in which the terminal has received PDCCH (e.g., information referred to as K2), or information on at least one of a PUSCH start symbol position in a slot and the number of symbols for transmitting PUSCH.

<Determination of TBS>

In NR Rel. 15/16 (Release 15 and/or 16), a data size or a transport block size (TBS) is determined based on a resource amount in units of slots (hereinafter may also be referred to as "a slot unit") and/or based on a resource amount allocated for an initial PUSCH transmission in Repetition. Incidentally, the resource amount may be expressed by, for example, the number of symbols or the number of resource elements. Further, the TBS may be described as a TB size.

Meanwhile, in NR Rel. 17, when PUSCH is transmitted using multiple slots, the following methods have been studied: a method of determining a TBS based on a resource amount of the number of slots used for the PUSCH transmission; and a method of determining a TBS by multiplying a TBS calculated from a resource amount in units of slots or a resource amount allocated for an itinial PUSCH transmission in Repetition by a scaling coefficient that is greater than one (e.g., see NPL 7). The method of calculating a TBS from a resource amount in units of slots or a resource amount allocated for an itinial PUSCH transmission in Repetition may be, for example, the method defined in NR Rel. 15/16 as mentoned above.

<Temporal Overlap between PUCCH and PUSCH>

In an uplink transmission by a terminal, a transmission resource for PUCCH and a transmission resource for PUSCH may overlap (collide) in time with each other. Hereinafter, a resource in which the transmission resource for PUCCH and the transmission resource for PUSCH overlap in time with each other may be referred to as a resource (or slot) in which PUCCH and PUSCH collide with each other.

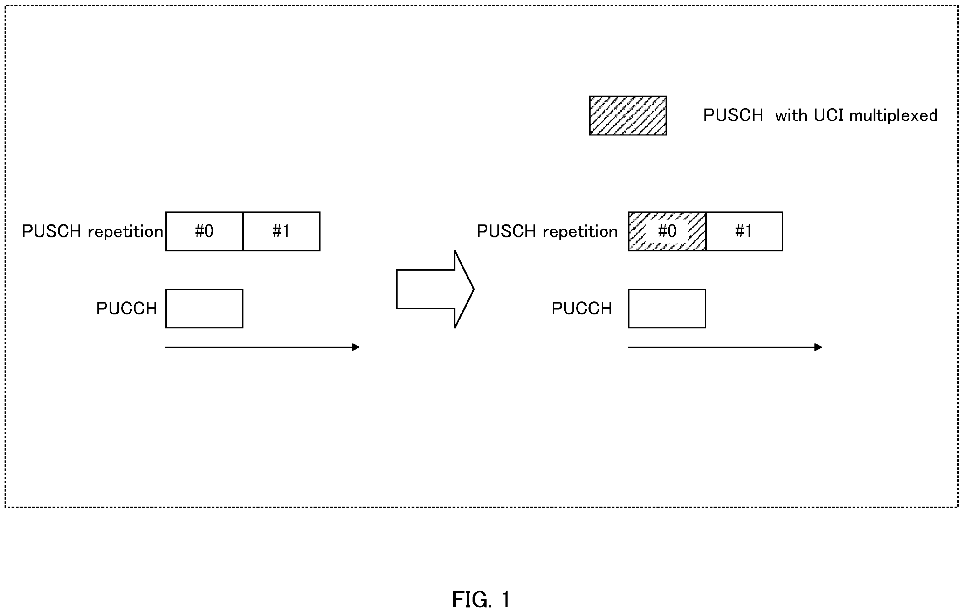

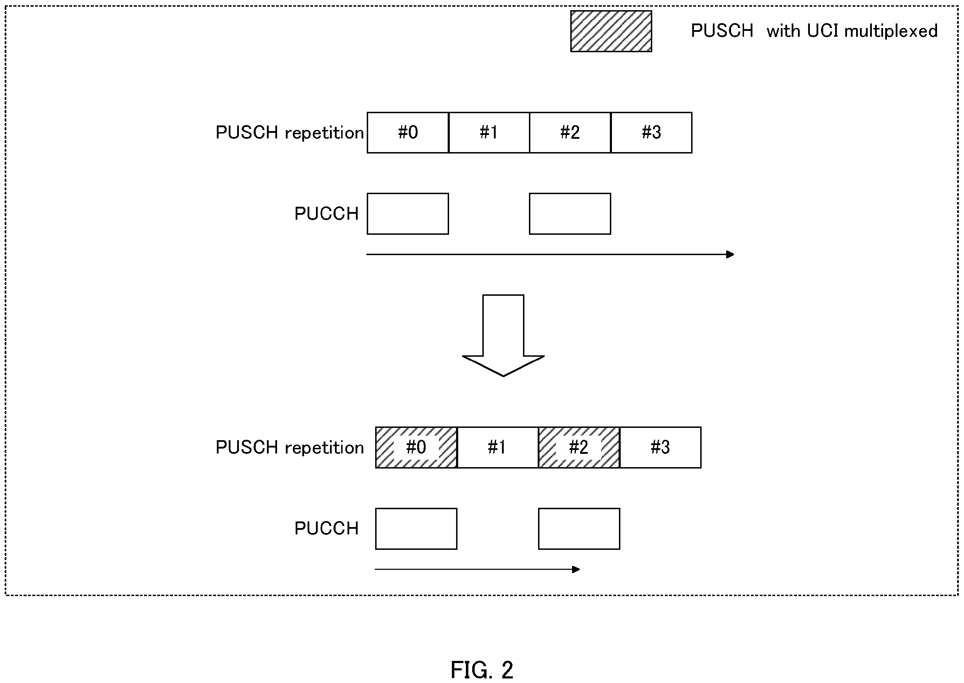

FIG. 1 illustrates an example of overlapping in time between a PUCCH transmission in a single slot and a PUSCH transmission using multiple slots. FIG. 2 illustrates an example of overlapping in time between a plurality of PUCCH transmissions in a single slot and a PUSCH transmission using multiple slots.

As illustrated in FIGS. 1 and 2, when a PUCCH transmission ("PUCCH" in FIGS. 1 and 2) and a PUSCH transmission using multiple slots (PUSCH repetition in FIGS. 1 and 2) overlap in time with each other, in NR Rel. 15/16, a terminal may transmit UCI and uplink data by multiplexing on PUSCH (e.g., see NPLs 4 and 5).

In NR Rel. 15/16, for example, as illustrated in FIG. 1, a PUCCH transmission in a single slot may overlap in time with some of slots for a PUSCH transmission using multiple slots (e.g., Repetition). In this case, a terminal may transmit UCI and uplink data by multiplexing on PUSCH in a slot where the PUCCH transmission and the PUSCH transmission overlap in time with each other, for example (e.g., see NPL 5).

Further, for example, as illustrated in FIG. 2, a plurality of PUCCH transmissions in single slot may overlap in time with some of slots (in example of FIG. 2, slot #0 and slot #2) for a PUSCH transmission using multiple slots (e.g., Repetition). In this case, the terminal may transmit UCI and uplink data by multiplexing on PUSCH in each slot where the PUCCH transmission and the PUSCH transmission overlap in time with each other.

< Calculation Example of Resource Amount for UCI>

When a UCI (e.g., ACK/NACK) is transmitted by being multiplexed on PUSCH, a resource amount (the number of resource elements) allocated for the UCI in PUSCH may be calculated by Equation 1 (e.g., see NPL 4):

$$
Q_{ACK} = \min \left\{ \left\lceil \frac{(O_{ACK}+L_{ACK}) \cdot \beta_{offset}^{PUSCH} \cdot \sum_{l=0}^{N_{symb, all}^{PUSCH} -1} M_{sc}^{UCI}(l)}{\sum_{r=0}^{C_{UL-SCH}-1} K_r} \right\rceil, \left\lceil \alpha \cdot \sum_{l=l_0}^{N_{symb, all}^{PUSCH} -1} M_{sc}^{UCI}(l) \right\rceil \right\} \qquad \cdots
$$

(Equation 1).

The following are used, herein:

$O_{ACK}$: Number of bits of UCI (e.g., ACK/NACK);

$L_{ACK}$ : Number of bits of Cyclic Redundancy Check (CRC) for UCI (e.g., ACK/NACK);

$\beta_{offset}^{PUSCH}$ : Parameter for controlling coding rate of UCI;

$C_{UL-SCH}$: Number of code blocks for UL-SCH transmitted through PUSCH;

$K_r$: Code block size of the r-th code block;

$M_{sc}^{UCI}(l)$ : Number of resource elements available for UCI transmission in first OFDM symbol;

$N_{symb, all}^{PUSCH}$ : Number of OFDM symbols of PUSCH; and

$\alpha$: Parameter for controlling upper limit of resource amount allocated for UCI in PUSCH.

Additionally:

$M_{sc}^{UCI}(l)$ may be:

$M_{sc}^{UCI}(l) = 0$ for symbol that transmits Demodulation Reference Signal (DMRS) or

$M_{sc}^{UCI}(l) = M_{sc}^{PUSCH} - M_{sc}^{PTRS}$ for symbol that does not transmit DMRS;

$M_{sc}^{PUSCH}$ : Bandwidth of PUSCH (number of subcarriers); and

$M_{sc}^{PTRS}$ : Number of subcarriers used for Phase-Tracking Reference Signal (PT-RS). Further,

$l_0$: Symbol number of symbol that does not transmit DMRS after the first DMRS symbol in PUSCH (optinally).

In NR Rel. 15/16, $K_r$ that represents a code block size (or TBS) is a value determined by a resource amount in units of slots or by a resource amount allocated for an initial PUSCH transmission in Repetition.

Further, for $N_{symb, all}^{PUSCH}$ that represents the number of OFDM symbols of PUSCH, the number of OFDM symbols of PUSCH in each slot (individual slot) is used.

Further, y = min (α, β) is a function in which y takes the smaller value of α and β (hereinafter sometimes referred to as "min function"). In the following, in min (α, β), α may be referred to as a first element, and β may be referred to as a second element.

For example, Equation 1 is used to deteremine a resource amount for a UCI (hereinafter may also be referred to as a "UCI resource amount") in a slot where PUCCH and PUSCH collide with each other, and the UCI and uplink data are then transmitted by being multiplexed on PUSCH.

In NR Rel. 17, as described above, when PUSCH is transmitted using multiple slots, the following methods have been studied: a method of determining a TBS based on a resource amount of the number of slots used for the PUSCH transmission; and a method of determining a TBS by multiplying a TBS calculated from a resource amount in units of slots or a resource amount allocated for an itinial PUSCH transmission in Repetition by a scaling coefficient that is greater than one. In the following, these two methods of determining the TBS may be referred to as "TBS determination methods in Rel. 17."

In addition, a PUSCH transmission has been studied in which a TB of the TBS calculated by the above-described TBS determination methods in Rel. 17 is transmitted in multiple slots. This PUSCH transmission in which the TB is transmitted in the multiple slots may be referred to as TB processing over multi-slot (TBoMS) PUSCH or a TBoMS transmission. In some cases, a transmission resource for the TBoMS transmission (transmission resource for PUSCH) and a transmission resource for PUCCH overlap in time with each other. There is scope for further study, however, on a transmission method of a UCI in this situation.

For example, the resource amount allocated for a UCI when the UCI and uplink data are transmitted by being multiplexed on PUSCH is conceivably calculated by using the UCI resource-amount calculation method in NR Rel. 15/16. By way of example, in the UCI resource-amount calculation method in NR Rel. 15/16 (e.g., Equation 1), a resource amount allocated for the UCI may be calculated by replacing the number of OFDM symbols of PUSCH, $N_{\text{symb, all}}^{\text{PUSCH}}$, with the number of symbols used for the TBoMS transmission, that is, the number of symbols included in the multiple slots, while replacing the code block size (or TBS), $K_r$, with a TBS calculated by the TBS determination methods in Rel. 17. However, when the resource amount for the UCI calculated by making these kinds of replacement is used, the UCI may not be appropriately mapped to a slot where PUCCH and PUSCH collide with each other.

For example, a UCI may be mapped to multiple slots. In one example, a UCI before multiplexing with uplink data can be transmitted through PUCCH of a single slot, whereas, when a UCI after multiplexing with the uplink data is mapped to the multiple slots, at least one of decoding latency and a decoding processing complexity of the UCI may be increased. For example, when the multiple slots used for the TBoMS transmission are non-consecutive slots, an increasing tendency of at least one of the decoding latency and the decoding processing complexity of the UCI becomes significant. Further, when a slot where PUCCH and PUSCH collide with each other is the last slot in the TBoMS transmission while the UCI after multiplexing with the uplink data is mapped to the multiple slots, there may be a shortage of PUSCH resources for the UCI multiplexing.

A non-limiting and exemplary embodiment of the present disclosure is to provide a terminal, a base station, and a communication method each capable of appropriately determining a resource amount for a UCI to be multiplexed on PUSCH in a case where transmission resources for a PUCCH transmission and a transmission resource for a PUSCH transmission using multiple slots (TBoMS transmission) overlap in time with each other while a TBS transmitted through TBoMS is larger than a TBS calculated from a resource amount in units of slots or a resource amount allocated for an initial PUSCH transmission in Repetition.

For example, a resource amount for a UCI to be multiplexed on PUSCH may be determined based on a resource amount in units of slots or a resource amount allocated for an initial PUSCH transmission in Repetition. In this determination, for example, the number of OFDM symbols, which is a parameter used for the determination of the UCI resource amount, may be a value different from the number of symbols allocated for the TBoMS transmission. Moreover, in this determination, for example, a code block size (or TBS), which is a parameter used for the determination of the UCI resource amount, may be a value different from a code block size (or TBS) transmitted through TBoMS.

In the following, some embodiments will be described.

[Overview of Communication System]

A communication system according to each embodiment of the present disclosure includes, for example, at least one base station and at least one terminal.

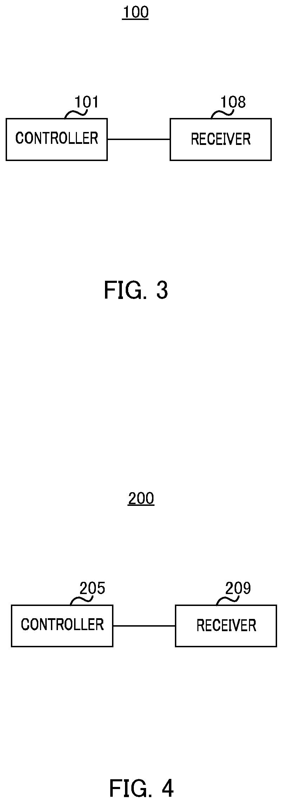

FIG. 3 is a block diagram illustrating an exemplary configuration of part of base station 100 according to an exemplary embodiment of the present disclosure, and FIG. 4 is a block diagram illustrating an exemplary configuration of part of terminal 200 according to an exemplary embodiment of the present disclosure.

In base station 100 illustrated in FIG. 3, for example, in a case where a transmission resource allocated for transmission of an uplink shared channel (PUSCH) using a plurality of slots and a transmission resource for an uplink control channel (PUCCH) overlap in time with each other, controller 101 determines a second resource amount used for transmission of uplink control information (UCI), based on the size of data (e.g., code block size or TBS) to be transmitted through PUSCH in the plurality of slots and/or a first resource amount for PUSCH in the plurality of slots. Receiver 108 receives the UCI in the determined second resource amount and the multiplexed data.

In terminal 200 illustrated in FIG. 4, for example, in a case where a transmission resource allocated for transmission of an uplink shared channel (PUSCH) using a plurality of slots and a transmission resource for an uplink control channel (PUCCH) overlap in time with each other, controller 205 determines a second resource amount used for transmission of uplink control information (UCI), based on the size of data (e.g., code block size or TBS) to be transmitted through PUSCH in the plurality of slots and/or a first resource amount for PUSCH in the plurality of slots. Transmitter 209, for example, multiplexes the UCI in the determined second resource amount and the data and transmits the multiplexed UCI and data.

(Embodiment 1)

[Configuration of Base Station]

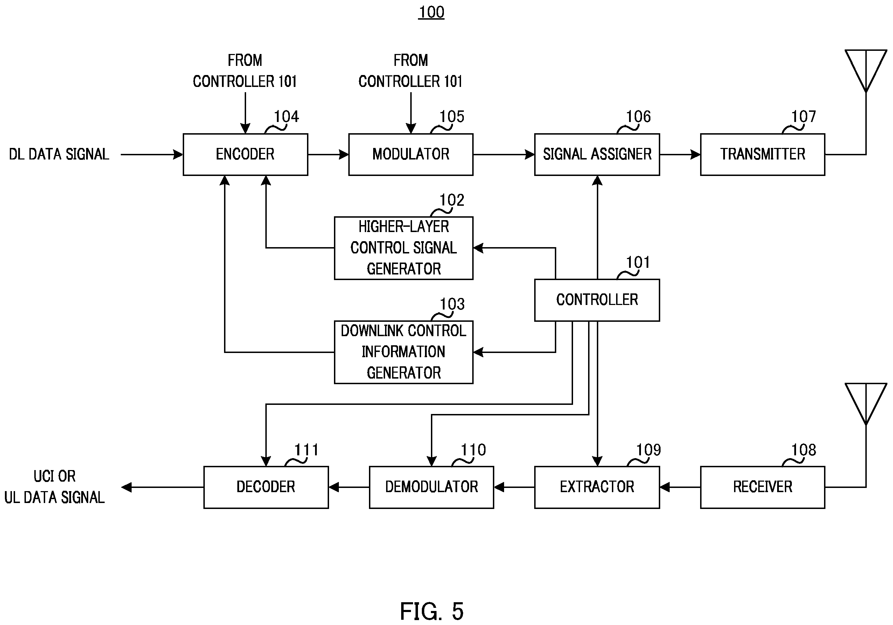

FIG. 5 is a block diagram illustrating an exemplary configuration of base station 100. The exemplary configuration of base station 100 illustrated in FIG. 5 may be common throughout the present disclosure including other embodiments and variations to be described later.

As illustrated in FIG. 5, base station 100 may include, for example, controller 101, higher-layer control signal generator 102, downlink control information generator 103, encoder 104, modulator 105, signal assigner 106, and transmitter 107. Base station 100 may further include, for example, receiver 108, extractor 109, demodulator 110, and decoder 111.

Controller 101, for example, determines at least one of information on a PDSCH reception, information on a PUSCH transmission, and information on a PUCCH transmission, which are for terminal 200, and outputs the determined information to higher-layer control signal generator 102. The information on the PDSCH reception and the information on the PUSCH transmission may include at least one of information on a Time Domain Resource Allocation (TDRA) table and information on the number of transmission slots (e.g., the presence/absence of TBoMS transmission). The information on the PUCCH transmission may include at least one of information on a PUCCH resource set and information on K1.

Controller 101 also determines, for example, a coding/modulation scheme and radio resource allocation for a downlink data signal or a higher-layer control signal and a downlink signal that is for transmitting downlink control information. The determined information may be outputted to encoder 104, modulator 105, and signal assigner 106, for example. The coding/modulation scheme and information on the radio resource allocation for the data signal or the higher-layer control signal may be outputted to downlink control information generator 103, for example.

Controller 101 also determines, for example, a PUCCH resource for terminal 200 to transmit PUCCH, and outputs the determined information to higher-layer control signal generator 102 or downlink control information generator 103. Controller 101, for example, outputs the determined information also to extractor 109, demodulator 110, and decoder 111.

Controller 101 also determines, for example, a coding/modulation scheme and radio resource allocation for terminal 200 to transmit an uplink data signal, and outputs the determined information to downlink control information generator 103, extractor 109, demodulator 110, and decoder 111. Further, controller 101 determines a TBS and outputs information on the determined TBS to decoder 111, for example.

Additionally, controller 101 may, for example, determine whether to apply the TBoMS transmission to the PUSCH transmission and whether a PUCCH resource for transmitting PUCCH (e.g., UCI) and a radio resource for transmitting uplink data overlap in time with each other. When the resources overlap in time with each other, controller 101 may identify, for example, a UCI resource amount in PUSCH. The identified information may be outputted to extractor 109, demodulator 110, and decoder 111, for example. Incidentally, the term "identify" may be mutually replaced with other terms such as "determine," "compute," and "calculate."

Higher-layer control signal generator 102 generates, for example, a higher-layer control signal (e.g., bit sequence (or bit string)) by using the control information inputted from controller 101. The generated signal may be outputted to encoder 104, for example.

Downlink control information generator 103 generates, for example, a DCI (e.g., bit sequence) by using the control information inputted from controller 101 and outputs the generated DCI to encoder 104. Note that the control information may be transmitted to a plurality of terminals 200.

Encoder 104 encodes, for example, downlink data, the bit sequence obtained from higher-layer control signal generator 102, or the DCI inputted from downlink control information generator 103, and then outputs the encoded bit sequence to modulator 105.

Modulator 105 modulates, for example, the encoded bit sequence received from encoder 104 and outputs the modulated bit sequence to signal assigner 106.

Signal assigner 106 maps, to a radio resource indicated by controller 101, the downlink data signal or control signal inputted from modulator 105 as a symbol sequence, for example. Further, signal assigner 106 outputs the signal mapped to the radio resource to transmitter 107.

Transmitter 107 performs, for example, transmission-waveform generation processing such as orthogonal Frequency Division Multiplexing (OFDM) on the signal outputted from signal assigner 106. In the case of an OFDM transmission using a cyclic prefix (CP), transmitter 107 may add the CP to the signal resulting from Inverse Fast Fourier Transform (IFFT).

Further, transmitter 107 performs, for example, radio (e.g., radio frequency (RF)) processing such as Digital-Analog (D/A) conversion and/or up-conversion on the signal outputted from signal assigner 106, and then outputs the resultant radio signal to terminal 200 via an antenna.

Receiver 108 performs, for example, RF processing such as down-conversion and/or Analog-Digital (A/D) conversion on an uplink signal received from terminal 200 via an antenna.

Further, in the case of the OFDM transmission, receiver 108 applies the FFT to a received signal so as to generate a frequency-domain signal, and then outputs the signal to extractor 109.

Extractor 109 extracts, from the received signal, a radio resource part with which PUSCH or PUCCH has been transmitted, based on the information received from controller 101, for example, and outputs the extracted signal for PUSCH or PUCCH to demodulator 110.

Demodulator 110, for example, demodulates PUSCH or PUCCH based on the information received from controller 101 and then outputs a demodulation result to decoder 111.

Decoder 111, for example, performs error correction decoding on PUSCH or PUCCH based on the information received from controller 101 and the demodulation result received from demodulator 110, and thereby obtains a reception bit sequence (e.g., UL data signal or UCI) after the decoding.

[Configuration of Terminal]

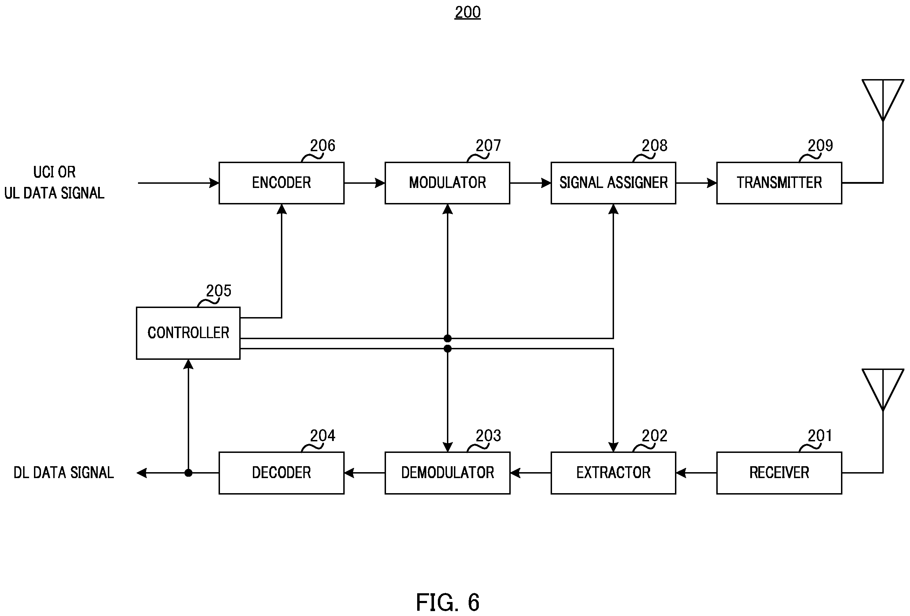

Next, an exemplary configuration of terminal 200 will be described with reference to FIG. 6. As illustrated in FIG. 6, terminal 200 includes receiver 201, extractor 202, demodulator 203, decoder 204, and controller 205. Terminal 200 may further include encoder 206, modulator 207, signal assigner 208, and transmitter 209.

Receiver 201 receives via an antenna, for example, a data signal or a downlink control signal transmitted from base station 100, performs the RF processing such as the down-conversion and/or the A/D conversion on the received radio signal, thereby generating a baseband signal.

Further, when receiving an OFDM signal, receiver 201 performs the FFT processing on the received signal to convert the received signal into that in the frequency domain.

Extractor 202, for example, extracts, from the received signal received from receiver 201, a radio resource part, which includes the downlink control signal, by using information on a radio resource for a control signal inputted from controller 205, and then outputs the extracted signal to demodulator 203. Further, extractor 202 extracts a radio resource part, which includes the data signal, by using information on a radio resource for the data signal inputted from controller 205, and then outputs the extracted signal to demodulator 203.

Demodulator 203, for example, based on information received from controller 205, demodulates PDCCH or PDSCH and outputs a demodulation result to decoder 204.

Decoder 204, for example, performs error correction decoding on PDCCH or PDSCH, using the information received from controller 205 and the demodulation result obtained by demodulator 203, thereby obtaining downlink reception data, higher-layer control information, or downlink control information. The obtained higher-layer control information and downlink control information may be outputted to controller 205, for example. Further, decoder 204 may generate an ACK/NACK signal, using the decoding result for the downlink reception data.

Controller 205, for example, identifies (or determines) a radio resource for a PDSCH reception, a PUSCH transmission, or a PUCCH transmission, based on radio resource allocation information that is obtained from the higher-layer control signal and the downlink control information. Additionally, controller 205, for example, outputs the determined information to signal assigner 208, extractor 202, and demodulator 203.

Additionally, controller 205 may, for example, determine whether to apply the TBoMS transmission to the PUSCH transmission and whether a PUCCH resource for transmitting PUCCH and a radio resource for transmitting uplink data overlap in time with each other. When the resources overlap in time with each other, controller 205 may identify a UCI resource amount in PUSCH. The identified information may be outputted to encoder 206, modulator 207, and signal assigner 208, for example.

Encoder 206 encodes, for example, a UCI or an uplink data signal, based on the information inputted from controller 205, and then outputs the encoded bit sequence to modulator 207.

Modulator 207 modulates, for example, the encoded bit sequence received from encoder 206 to generate a modulated symbol sequence, thus outputting the modulated symbol sequence to signal assigner 208.

Signal assigner 208 maps, to a radio resource indicated by controller 205, the signal inputted from modulator 207, for example. Further, signal assigner 208 outputs the signal mapped to the radio resource to transmitter 209.

Transmitter 209, for example, performs transmission signal-waveform generation such as OFDM on the signal input from signal assigner 208. In addition, in the case of the OFDM transmission using the CP, for example, transmitter 209 may add the CP to the signal after the IFFT. Alternatively, when a single-carrier waveform is generated, a Discrete Fourier Transformer (DFT) may be provided at a rear stage of modulator 207 or a front stage of signal assigner 208.

Further, transmitter 209 performs, for example, the RF processing such as the D/A conversion and/or the up-conversion on the transmission signal, and then outputs the radio signal via an antenna.

In Embodiment 1, the number of OFDM symbols and a code block size (or TBS), which are parameters used for determination of a UCI resource amount, are determined based on, for example, a resource amount in units of slots and a resource amount allocated for an initial PUSCH transmission in Repetition. Note that a resource amount may be defined by, for example, the number of symbols or resource elements.

[TBS Calculation Methods for PUSCH Transmission (TBoMS Transmission) using Multiple Slots]

TBS calculation methods for the TBoMS transmission will be described. A TBS to be transmitted through TBoMS may be calculated by any of the following methods. Incidentally, the term "calculate" may be mutually replaced with other terms such as "derive" and "determine."

<TBS-Approach 1>

In TBS-Approach 1, a TBS is determined based on a resource amount of the number of slots used for the PUSCH transmission. In the case of TBoMS, the number of slots used for the PUSCH transmission is an integer of two or more. For example, a resource amount, $N_{RE}$, of the number of slots used for the PUSCH transmission may be calculated by the following Equation 2. Incidentally, $N_{RE}$ represents a resource amount expressed by the number of resource elements:

$$N_{RE} = \min(156 N_{slot}, N'_{RE})\, n_{PRB} \qquad \dots \text{(Equation 2)}.$$

The following are used, herein:

$N_{slot}$: Number of slots used for PUSCH transmission; and
$n_{PRB}$: Number of resource blocks allocated for PUSCH transmission.

In Equation 2, an upper limit of the number of REs in a slot is set to 156. Note that the upper limit value is not limited to 156. Further, in Equation 2, $N'_{RE}$ represents the number of REs to be allocated in multiple slots used for the PUSCH transmission. In one example, $N'_{RE}$ may represent the total value of the numbers of REs, each number in one resource block, respectively in $N_{slot}$ slots used for the PUSCH transmission. For example, $N'_{RE}$ may be calculated by the following Equation 3:

$$N'_{RE} = N_{sc}^{RB} N_{symbol}^{sh} - N_{DMRS}^{RPB} - N_{oh}^{PRB} \qquad \dots \text{(Equation 3)}.$$

The following are used, herein:

$N_{sc}^{RB}$ : Number of subcarriers per resource block (e.g., 12);
$N_{symbol}^{sh}$ : Number of OFDM symbols allocated for PUSCH over multiple slots;
$N_{DMRS}^{RPB}$ : Number of DMRS resource elements allocated for PUSCH transmission; and
$N_{oh}^{PRB}$ : Overhead coefficient indictaed to terminal 200 by higher layer (RRC layer).

A TB size, $N_{info}$, may be calculated by the following Equation 4, by using the resource amount, $N_{RE}$, of the number of slots used for the PUSCH transmission that has been calculated by Equation 2:

$$N_{info} = N_{RE} \cdot R \cdot Q_m \cdot v \quad \ldots \text{(Equation 4)}.$$

The following are used, herein:

$R$: Coding rate;
$Q_m$: Modulation order; and
v: Number of MIMO layers.

<TBS-Approach 2>

In TBS-Approach 2, a TBS is determined by multiplying a TBS calculated from a resource amount in units of slots or a resource amount allocated for an itinial PUSCH transmission in Repetition by a scaling coefficient that is greater than one. For example, the resource amount, $N_{RE}$, in units of slots or allocated for the itinial PUSCH transmission in Repetition may be calculated by the following Equation 5. Incidentally, $N_{RE}$ represents a resource amount expressed by the number of resource elements:
[5]

$$N_{RE} = \min(156, N'_{RE})\, n_{PRB} \quad \ldots \text{(Equation 5)}.$$

The following is used, herein,
$n_{PRB}$: Number of resource blocks allocated for PUSCH transmission.
In Equation 5, as with Equation 2, an upper limit value of the number of REs in a slot may be set to 156, for example. Note that the upper limit value is not limited to 156.
$N'_{RE}$ may be calculated by, for example, the following Equation 6:
[6]

$$N'_{RE} = N_{sc}^{RB} N_{symbol}^{sh} - N_{DMRS}^{RPB} - N_{oh}^{PRB} \quad \ldots \text{(Equation 6)}.$$

The following are used, herein:

$N_{sc}^{RB}$ : Number of subcarriers per resource block (e.g., 12);

$N_{symbol}^{sh}$ : Number of OFDM symbols in units of slots or allocated for initial PUSCH transmission in Repetition;

$N_{DMRS}^{RPB}$ : Number of DMRS resource elements in units of slots or allocated for initial PUSCH transmission in Repetition; and

$N_{oh}^{PRB}$ : Overhead coefficient indictaed to terminal 200 by RRC.

For example, the number of OFDM symbols in units of slots or allocated for an initial PUSCH transmission in Repetition, may be indicated, to terminal 200, by information on a symbol length of time-domain resource allocation (TDRA).
A TB size, $N_{info}$, may be calculated by the following Equation 7, by using the resource amount, $N_{RE}$, in units of slots or allocated for the initial PUSCH transmission in Repetition that has been calculated by Equation 5:

$$N_{info} = N_{RE} \cdot R \cdot Q_m \cdot v \cdot K \quad \ldots \text{(Equation 7)}.$$

The following are used, herein:

$R$: Coding rate;
$Q_m$: Modulation order;
v: Number of MIMO layers; and

K: Scaling coefficient greater than one.

Incidentally, the TBS calculation method is not limited to the above-described methods. For example, any value is posible as long as a TBS transmitted through TBoMS is larger than a TBS calculated from a resource amount in units of slots or allocated for an initial PUSCH transmission in Repetition.

[Rate Matching Methods for PUSCH Transmission (TBoMS) Using Multiple Slots]

A TB having the TB size determined by the above-mentioned methods may be transmitted using multiple slots with the following methods.

<RM-Approach 1>

In NR, a Circular Buffer is used in retransmission control, for example. The Circular Buffer is a memory that stores encoder outputs. The Circular Buffer reads out, from a predetermined reading start position (Redundancy Version (RV)) in the Circular Buffer, encoder outputs of the number of bits corresponding to an allocated resource amount. In RM-Approach 1, for example, encoder outputs of the number of bits corresponding to a resource amount of the number of slots used for the PUSCH transmission may be read out from the predetermined RV position and mapped to PUSCH resources over multiple slots.

<RM-Approach 2>

In RM-Approach 2, for example, encoder outputs of the number of bits corresponding to a resource amount in units of slots or allocated for an initial PUSCH transmission in Repetition may be read out from a predetermined RV position and mapped to PUSCH resources for the respective slots or Repetitions. Alternatively, an RV may be varied between slots or between Repetitions.

[Determination Method of UCI Resource Amount]

In a slot where transmission resources for PUCCH and PUSCH overlap in time with each other, a UCI resource amount to be allocated on PUSCH may be determined based on, for example, a resource amount in units of slots or a resource amount allocated for an initial PUSCH transmission in Repetition. For example, the UCI resource amount may be expressed by the number of resource elements, and the resource amount in units of slots or allocated for the initial PUSCH transmission in Repetition may be expressed by the number of symbols or the number of resource elements.

For example, a UCI resource amount may be calculated by the following Equation 8:

$$Q_{ACK} = \min\left\{ \left\lceil \frac{(O_{ACK}+L_{ACK})\cdot\beta_{offset}^{PUSCH}\cdot\sum_{l=0}^{N_{symb,\,nominal}^{PUSCH}-1} M_{sc}^{UCI}(l)}{\sum_{r=0}^{C_{UL-SCH}-1} K_{r,nominal}} \right\rceil, \left\lceil \alpha\cdot\sum_{l=l_0}^{N_{symb,\,nominal}^{PUSCH}-1} M_{sc}^{UCI}(l) \right\rceil \right\} \quad \dots$$

(Equation 8).

The following are used, herein:

$O_{ACK}$: Number of bits of UCI (e.g., ACK/NACK);
$L_{ACK}$: Number of CRC bits for UCI (e.g., ACK/NACK);
$\beta_{offset}^{PUSCH}$ : Parameter for controlling conding rate of UCI;

$M_{sc}^{UCI}(l)$ : Number of resource elements available for UCI transmission in first OFDM symbol;
$\alpha$: Parameter for controlling upper limit of resource amount allocated for UCI in PUSCH.

Additionally:

$M_{sc}^{UCI}(l)$ may be:

$$M_{sc}^{UCI}(l) = 0 \text{ for symbol that transmits DMRS or}$$

$$M_{sc}^{UCI}(l) = M_{sc}^{PUSCH} - M_{sc}^{PTRS} \text{ for symbol that does not transmit DMRS;}$$

$M_{sc}^{PUSCH}$ : Bandwidth of PUSCH (number of subcarriers); and

$M_{sc}^{PTRS}$ : Number of subcarriers used for PT-RS.

Further,

$l_0$: Symbol number of symbol that does not transmit DMRS after first DMRS symbol in PUSCH (optionally).

In Equation 8 for determining a UCI resource amount in Embodiment 1, $N_{symb, all}^{PUSCH}$ in Equation 1 is replaced with $N_{symb, nominal}^{PUSCH}$. $N_{symb, all}^{PUSCH}$ in Equation 1 represents the number of OFDM symbols of PUSCH in each slot, whereas $N_{symb, nominal}^{PUSCH}$ in Equation 8 represents the number of OFDM symbols in units of slots or allocated for an initial PUSCH transmission in Repetition. For example, $N_{symb, nominal}^{PUSCH}$ that represents the number of OFDM symbols in units of slots or allocated for an initial PUSCH transmission in Repetition may be indicated, to terminal 200, by the information on the symbol length of TDRA.

Additionally, in Equationn 8 for determining a UCI resource amount in Embodiment 1, $K_r$ in Equation 1 is replaced with $K_{r,nominal}$. $K_{r,nominal}$ represents a code block size (or TBS) of the r-th code block calculated based on a resource amount in units of slots or a resource amount allocated for an initial PUSCH transmission in Repetition.

For example, in a case where the number of code blocks is one, $K_{0,nominal}$ may be calculated by the following Equation 9 based on $N_{RE}$ obtained using Equations 5 and 6:

$$K_{0,nominal} = N_{RE} \cdot R \cdot Q_m \cdot v \qquad \dots \text{(Equation 9)}.$$

The following are used, herein:

R: Coding rate;
$Q_m$: Modulation order; and
v: Number of MIMO layers.

Further, in a case where the number of code blocks is greater than one, the sum of code block sizes may be expressed by the following Equation 10:

$$\sum_{r=0}^{C_{UL-SCH}-1} K_{r,nominal} = N_{RE} \cdot R \cdot Q_m \cdot v \qquad \dots \text{(Equation 10)}.$$

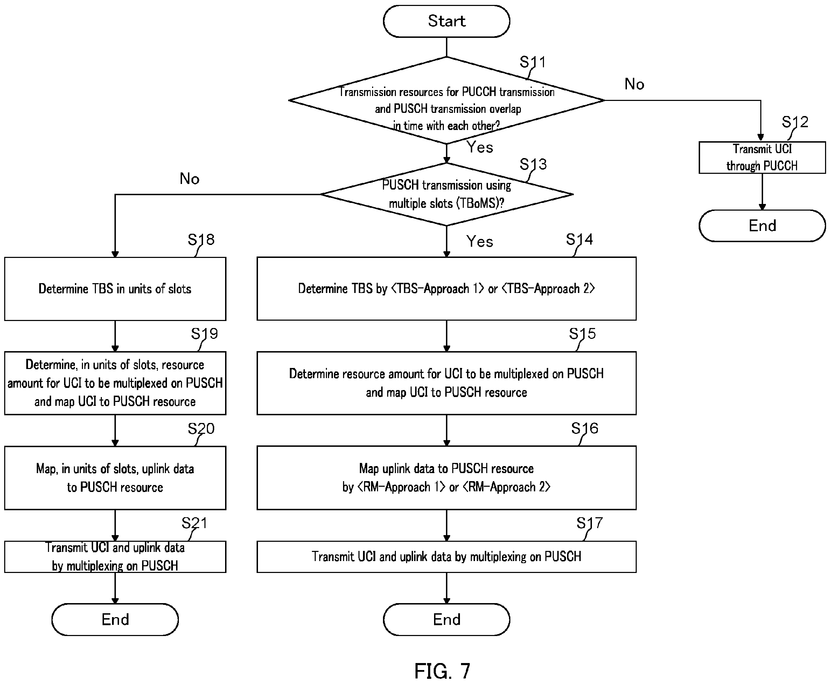

Next, an exemplary operation of terminal 200 in Embodiment 1 will be described. FIG. 7 is a flowchart describing the exemplary operation of terminal 200 in Embodiment 1.

Terminal 200 determines whether transmission resources for a PUCCH transmission and a PUSCH transmission overlap in time with each other (S11).

In a case where the transmission resources for the PUCCH transmission and the PUSCH transmission do not overlap in time with each other (S11: No), terminal 200 transmits a UCI through PUCCH of a non-overlapping transmission resource (S12). The flow of FIG. 7 then ends.

In a case where the transmission resources for the PUCCH transmission and the PUSCH transmission overlap in time with each other (S11: Yes), terminal 200 determines whether a PUSCH transmission using multiple slots (TBoMS transmission) is applied (S13).

When the PUSCH transmission using the multiple slots (TBoMS transmission) is applied (S13: Yes), terminal 200 determines a TBS by <TBS-Approach 1> or <TBS-Approach 2> mentioned above (S14).

Terminal 200 determines a resource amount for a UCI to be multiplexed on PUSCH and then maps the UCI of the determined resource amount to a PUSCH resource (S15).

Terminal 200 maps, to the PUSCH resource, uplink data whose rate has been adjusted by above-mentioned <RM-Approach 1> or <RM-Approach 2> (S16).

Terminal 200 transmits the UCI and the uplink data by multiplexing on PUSCH (S17). The flow of FIG. 7 then ends.

In a case where the PUSCH transmission using the multiple slots (TBoMS transmission) is not applied (S13:

No), terminal 200 determines a TBS in units of slots (S18).

Terminal 200 determines, in units of slots, a resource amount for a UCI to be multiplexed on PUSCH and then maps the UCI of the determined resource amount to a PUSCH resource (S19).

Terminal 200 maps, in units of slots, uplink data to the PUSCH resource (S20).

Terminal 200 transmits the UCI and the uplink data by multiplexing on PUSCH (S21). The flow of FIG. 7 then ends.

According to Embodiment 1 described above, a UCI resource amount to be multiplexed on PUSCH in each slot can be calculated by a parameter in units of slots, thereby making it possible to prevent the UCI from being mapped to multiple slots.

(Variation 1)

In a slot where transmission resources for PUCCH and PUSCH overlap in time with each other, a determination method of a UCI resource amount to be allocated on PUSCH is not limited to the above example. Hereinafter, in Variation 1, a UCI resource amount is determined using the number of OFDM symbols in units of slots or allocated for an initial PUSCH transmission in Repetition, a TBS determined based on a resource amount of the number of slots used for the TBoMS transmission (i.e., multiple slots), and the number of OFDM symbols over the multiple slots used for the TBoMS transmission.

For example, in Variation 1, a UCI resource amount may be calculated by the following Equation 11:

$$Q_{ACK} = \min\left\{ \left\lceil \frac{(O_{ACK}+L_{ACK}) \cdot \beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \left\lceil \alpha \cdot \sum_{l=l_0}^{N_{symb,nominal}^{PUSCH}-1} M_{sc}^{UCI}(l) \right\rceil \right\}$$

(Equation 11).

The following are used, herein:

$O_{ACK}$: Number of bits of UCI (e.g., ACK/NACK);
$L_{ACK}$: Number of CRC bits for UCI (e.g., ACK/NACK);
$\beta_{offset}^{PUSCH}$ : Parameter for controlling conding rate of UCI;

$M_{sc}^{UCI}(l)$ : Number of resource elements available for UCI transmission in first OFDM symbol;
$\alpha$: Parameter for controlling upper limit of resource amount allocated for UCI in PUSCH.

Additionally:

$M_{sc}^{UCI}(l)$ may be:

$M_{sc}^{UCI}(l) = 0$ for symbol that transmits DMRS or
$M_{sc}^{UCI}(l) = M_{sc}^{PUSCH} - M_{sc}^{PTRS}$ for symbol that does not transmit DMRS;

$M_{sc}^{PUSCH}$ : Bandwidth of PUSCH (number of subcarriers); and
$M_{sc}^{PTRS}$ : Number of subcarriers used for PT-RS.

Further,
$l_0$: Symbol number of symbol that does not transmit DMRS after first DMRS symbol in PUSCH (optionally).

Besides, the number of OFDM symbols of PUSCH in Equation 11, $N_{symb,all}^{PUSCH}$, may be replaced with the number of symbols used for the TBoMS transmission (i.e., the number of symbols included in multiple slots). A code block size (or TBS), $K_r$, may be replaced with a TBS calculated by the above-mentioned <TBS-Approach 1> or <TBS-Approach 2>.

Further, a second element of the min function on the right side in Equation 11 is a term representing an upper limit of a resource amount to be allocated for a UCI in PUSCH.

In Variation 1, for $N_{symb,nominal}^{PUSCH}$, which is a parameter constituting the second element of the min function in Equation 11, the number of OFDM symbols in units of slots or allocated for an initial PUSCH transmission in Repetition is used.

In Equation 11, for example, the smaller one of the first element and the second element is selected in the min function; hence, when the second element of the min function is the upper limit, the first element of the min function represents a resource amount until the upper limit is reached.

According to Variation 1, an upper limit (e.g., second element of min function in Equation 11) of a resource amount for a UCI (UCI resource amount) to be multiplexed on PUSCH in each slot can be calculated by a parameter in units of slots (e.g., $N_{symb,nominal}^{PUSCH}$), thereby making it possible to prevent the UCI from being mapped to multiple slots. Further, until the UCI resource amount reaches the upper limit, it is possible to configure a UCI resource amount of a value (e.g., first element of min function in Equation 11) calculated using the number of resource elements for PUSCH over multiple slots (e.g., $N_{symb, all}^{PUSCH}$ in Equation 11) and a TBS of TBoMS (e.g., $K_r$ in Equation 11), whereby the UCI resource amount can be configured based on an accurate number of resource elements in the multiple slots. For example, Variation 1 is useful when the number of resource elements is different in each slot and/or when the number of resource elements allocated for an initial PUSCH transmission in Repetition and the number of resource elements allocated for PUSCH transmissions other than the initial transmission are different from each other.

(Variation 2)

In Variation 2, a calculation method of a UCI resource amount may be varied depending on which slot in multiple slots used for a PUSCH transmission PUCCH collides with.

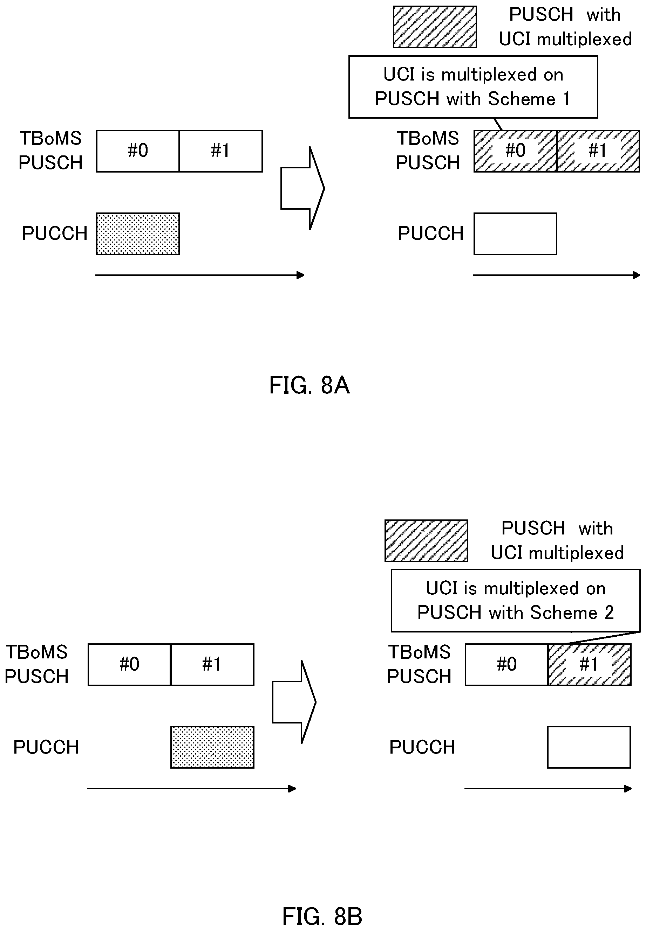

FIG. 8A and FIG. 8B each illustrate an example of Variation 2.

For example, a calculation method of a UCI resource amount may be varied between a case where an intial slot of the TBoMS transmission (slot #0 in FIG. 8A) collides with PUCCH, as illustrated in FIG. 8A, and a case where a slot other than the initial slot of the TBoMS transmission (slot #1 in FIG. 8B) collides with PUCCH, as illustrated in FIG. 8B.

For example, in a case where an intial slot of the TBoMS transmission collides with PUCCH, as illustrated in FIG. 8A, UCI-Resource Determination Method 1 (in FIG. 8A, Scheme 1) to be described later may be applied, whereas in a case where a slot other than the initial slot collides with PUCCH, UCI-Resource Determination Method 2 (in FIG. 8B, Scheme 2) to be described later may be applied.

Here, in UCI-Resource Determination Method 1, in Equation 1, the number of OFDM symbols of PUSCH, $N_{symb, all}^{PUSCH}$, is replaced with the number of symbols used for the TBoMS transmission (i.e., the number of symbols included in multiple slots). Further, in UCI-Resource Determination Method 1, in Equation 1, a code block size (or TBS), Kr, is replaced with a value calculated by the above-mentioned <TBS-Approach 1> or <TBS-Approach 2>.

UCI-Resource Determination Method 2 may be a method in Embodiment 1 or Variation 1 mentioned above.

According to Variation 2, in a slot other than an initial slot, a UCI after multiplexing on PUSCH is mapped to multiple slots, thereby preventing a shortage of PUSCH resources for the UCI multiplexing. Meanwhile, in the initial slot, PUSCH resources for the UCI multiplexing is not shorted even when the UCI after multiplexing on PUSCH is mapped to the multiple slots.

(Variation 3)

In Variation 3, a calculation method of a UCI resource amount may be varied depending on which slot in multiple slots used for a TBoMS transmission PUCCH collides with.

For example, a UCI resource amount may be calculated by the following Equation 12:

$$Q_{ACK} = \min\left\{ \left\lceil \frac{(O_{ACK}+L_{ACK}) \cdot \beta_{offset}^{PUSCH} \cdot \sum_{l=0}^{N_{symb, all}^{PUSCH}-1} M_{sc}^{UCI}(l)}{\sum_{r=0}^{C^{UL-SCH}-1} K_r} \right\rceil, \left\lceil \alpha \cdot \sum_{l=l_0}^{N_{symb, remaining}^{PUSCH}-1} M_{sc}^{UCI}(l) \right\rceil \right\}$$

(Equation 12).

The following are used, herein:

$O_{ACK}$: Number of bits of UCI (e.g., ACK/NACK);
$L_{ACK}$: Number of CRC bits for UCI (e.g., ACK/NACK);

$\beta_{offset}^{PUSCH}$ : Parameter for controlling conding rate of UCI;

$\mathrm{M}_{sc}^{UCI}(l)$ : Number of resource elements available for UCI transmission in first OFDM symbol;

$\alpha$: Parameter for controlling upper limit of resource amount allocated for UCI in PUSCH.

Additionally:

$M_{sc}^{UCI}(l)$ may be:

$$\mathrm{M}_{sc}^{UCI}(l) = 0 \text{ for symbol that transmits DMRS or}$$
$$M_{sc}^{UCI}(l) = M_{sc}^{PUSCH} - M_{sc}^{PTRS} \text{ for symbol that does not transmit DMRS;}$$

$M_{sc}^{PUSCH}$ : Bandwidth of PUSCH (number of subcarriers); and

$M_{sc}^{PTRS}$ : Number of subcarriers used for PT-RS.

Further,

$l_0$: Symbol number of symbol that does not transmit DMRS after first DMRS symbol in PUSCH (optionally).

Besides, the number of OFDM symbols of PUSCH in Equation 12, $N_{symb, all}^{PUSCH}$, may be replaced with the number of symbols used for the TBoMS transmission (i.e., the number of symbols included in multiple slots). A code block size (or TBS), $K_r$, may be replaced with <TBS-Approach 1> or <TBS-Approach 2>.

Further, a second element of the min function on the right side in Equation 12 is a term representing an upper limit of a resource amount to be allocated for a UCI in PUSCH.

In Variation 3, for $N_{symb, remaining}^{PUSCH}$, which is a parameter constituting the second element of the min function in Equation 12, the number of OFDM symbols included in a slot with which PUCCH collides and in subsequent slots among the multiple slots used for the TBoMS transmission is used.

According to Variation 3, a shortage of PUSCH resources for the UCI multiplexing can be prevented even when a UCI after multiplexing is mapped to multiple slots.

(Complement to Embodiment 1)

A TBS configuration method (calculation method) is not limited to the above-mentioned examples. In the following, complements will be given to the TBS configuration method.

<Configuration Method 1>

In Configuration Method 1, a TB size may be configured based on the number of resources for the TBoMS transmission (e.g., the number of slots), for example. In other words, the TB size may be configured based on the number of slots (e.g., time intervals) used in one of a plurality of slots for the TBoMS transmission.

For example, in NR Rel. 15/16, a TB size (e.g., the number of information bits) is configured based on "$N_{info}$," which is a value (e.g., also referred to as intermediate variable) calculated according to Equation 13 (as described in TS38.214 V16.1.0 sections 5.1.3 and 6.1.4, for example). The TB size may be determined by, for example, further adjustment according to a value of $N_{info}$. For example, the greater the value of $N_{info}$ is, the larger TB size may be configured:

$$N_{info} = N_{RE} \cdot R \cdot Q_m \cdot \upsilon \quad \dots \text{(Equation 13)}.$$

- $N_{RE}$: Number of resource elements (REs) used for data transmission
- $R$: Coding rate
- $Q_m$: Modulation order
- v: Number of MIMO layers

In Configuration Method 1, when the number of resources for the TBoMS transmission is "$N_{MS}$," for example, a TB size may be configured based on $N_{info}$ calculated according to the following Equation 14:

$$N_{info} = N_{RE} \cdot R \cdot Q_m \cdot \upsilon \cdot N_{MS} ... \text{ (Equation 14)}.$$

From Equation 14, the greater $N_{MS}$ is, the larger TB size is configured, for example. Thus, for example, the greater $N_{MS}$ is, the greater the number of informational bits transmitted in each slot used for the TBoMS transmission is, which improves user throughput.

Meanwhile, for example, the plurality of slots used for the TBoMS transmission uses the same HARQ process. Therefore, the TBoMS transmission can use more slots in a Round Trip Time (RTT) without increasing the number of HARQ processes. For example, in an environment where the RTT is very long compared to the slot length, such as a Non-Terrestrial Network (NTN) environment, user throughput can be improved by extending a TB size based on the number of slots for the TBoMS transmission, without increasing the number of HARQ processes.

In addition, for example, the TB size is increased by the TBoMS transmission in accordance with an increase in number of slots used for data transmission, so that an actual coding rate (e.g., MCS) can be configured in substantially the same manner as how a coding rate (e.g., MCS) is configured when no TBoMS transmission is performed. Therefore, even when the TBoMS transmission is performed, it is possible to suppress a decrease in frequency-utilization efficiency (Spectral efficiency) and to transmit at a necessary and sufficient error rate (e.g., BLER: Block Error Rate).

Incidentally, in the TB size configuration, whether to apply $N_{MS}$ (e.g., either Equation 13 or Equation 14 is applied), may be separately indicated, to terminal 200 by, a Radio Resource Control (RRC) message (or also referred to as RRC signaling, higher layer parameter), a MAC Control Element (CE), or the DCI, for example. With this indication, for example, a larger TB size is configured for terminal 200 or a traffic type that is expected to improve a data rate, by applying Equation 14, and thereby improving throughput. On the other hand, a smaller TB size is configured for a terminal or a traffic type different from the above by applying Equation 13, thus improving the reliability (i.e., transmission at lower error rate).

Incidentally, in NTN, disablement of retransmission by HARQ (e.g., configuration of "HARQ-feedback disable") for a traffic for which low latency is required has been discussed, for example. When the retransmission by HARQ is disabled, transmission with higher reliability (e.g., lower error rate) is expected because no retransmission by HARQ is performed.

Thus, in Configuration Method 1, as in Equation 14, $N_{MS}$ may be applied in the TB size configuration, to a case where the retransmission by HARQ is enabled (e.g., HARQ-feedback enable is configured) or an HARQ process in which the retransmission by HARQ is enabled, for example. By way of example, base station 100 and terminal 200 may determine a TB size based on $N_{MS}$ according to Equation 14, for a case where the retransmission control by HARQ is applied (e.g., "HARQ-feedback enable" is configured) or data (or HARQ process) to which the retransmission control by HARQ is applied. For example, as in Equation 13, $N_{MS}$ is not applied in the TB size configuration, to a case where the retransmission by HARQ is disabled (e.g., HARQ-feedback disable is configured) or an HARQ process in which the retransmission by HARQ is disabled, thus improving the reliability (e.g., transmission at low error rate).

Note that $N_{MS}$ (or parameter for deriving the number of resources for TBoMS transmission), may be indicated, to terminal 200, by at least one of the RRC message and the DCI, for example.

For example, as the RRC message, "pdsch-AggregationFactor" (message for downlink), "pusch-Aggregation-Factor" (message for uplink), or "repK" in "ConfigureGrantConfig" (parameter for uplink Configured grant), which are specified in TS38.331 V16.1.0, or other messages may be used, for example.

With respect to $N_{MS}$, a plurality of candidates therefor may be indicated to (or configured for) terminal 200 by the RRC message, and any one of the plurality of candidates may be indicated to terminal 200 by the DCI per PDSCH or PUSCH assignment (e.g., scheduling information), for example. In this case, as the RRC message for configuration of the plurality of candidates, "PDSCH-TimeDomainResourceAllocationList-r16" (message for downlink) or "repetition-Number-r16" in "PUSCH-TimeDomainResourceAllocationList-r16" (message for uplink) may be used, or other messages may be used, for example.

Such indication makes it possible to reuse an indication structure in the existing standards, which reduces the complexities of processing in terminal 200.

Further, since this indication is explicitly made to terminal 200, scheduling information may be indicated to terminal 200 by the DCI at the time of initial transmission, and the same TB based on the scheduling information (e.g., data of the same TB size) may be transmitted in consecutive slots, for example. In other words, scheduling information may not be indicated by the DCI in slots after the slot corresponding to the initial transmission of the TBoMS transmission.

<Configuration Method 2>

In Configuration Method 2, a TB size may be configured based on a scaling coefficient (or referred to as scaling factor), for example. In other words, the TB size may be configured based on a scaling coefficient for a TB size in a plurality of slots (e.g., time intervals) used for the TBoMS transmission.

In Configuration Method 2, when the scaling coefficient is "$N_{scaling}$," for example, a TB size may be configured based on $N_{info}$ calculated according to the following Equation 15:

$$N_{info} = N_{RE} \cdot R \cdot Q_m \cdot \upsilon \cdot N_{scaling} \dots \text{(Equation 15)}.$$

From Equation 15, the greater the scaling coefficient, $N_{scaling}$, is, the larger TB size is configured, for example. Thus, for example, the greater the scaling factor, $N_{scaling}$, is, the greater the number of informational bits transmitted in each slot used for the TBoMS transmission is, which improves user throughput.

Examples of configuration methods of a scaling coefficient include, for example, a method of semi-statically configuring for (or indication to) terminal 200 by the RRC message and a method of dynamically configuring for (or indication to) terminal 200 by the DCI.

Incidentally, for a scaling coefficient, a value equal to or gtreater than one may be configured. Further, a scaling coefficient may be an integer value or a decimal value, for example. In a case where a scaling coefficient is configured as a decimal value, ceiling (round-up) computation or floor (round-down) computation may be performed in Equation 3.

In the method of semi-statically configuring a scaling coefficient, for example, the scaling coefficient may be semi-statically indicated to terminal 200 by an RRC message. For example, as the RRC message for configuring the scaling coefficient, "PDSCH-TimeDomainResourceAllocationList" or "PUSCH-TimeDomainResourceAllocationList" may be used, "PDSCH-Config" or "PUSCH-Config," may be used, and other messages may be used.

Further, for example, when the TBoMS transmission is performed, a scaling coefficient may be applied in the TB size configuration (e.g., application of Equation 15). In other words, when no TBoMS transmission is performed, a scaling coefficient may not be applied in the TB size configuration (e.g., application of Equation 13). That is, in the TB size determination, for example, base station 100 and terminal 200 perform the TB size determination based on the scaling coefficient in a case where the TBoMS transmission is applied, and may perform the TB size determination not based on the scaling coefficient in a case where no TBoMS transmission is applied. Alternatively, information indicating whether to apply a scaling coefficient in the TB size configuration may be indicated to terminal 200. The information indicating whether to apply a scaling coefficient may be indicated to terminal 200 by the DCI per data scheduling, for example.

Further, a scaling coefficient may be individually configured for an HARQ process, for example. In a case where the number of slots for the TBoMS transmission is configured individually for an HARQ process, the scaling coefficient may be applied to an HARQ process in which the TBoMS transmission is performed, whereas a scaling coefficient may not be applied to an HARQ process in which no TBoMS transmission is performed, for example.

In the manner described above, applying a scaling coefficient to a case or an HARQ process in which retransmission by HARQ is enabled makes it possible to improve throughput. Meanwhile, for example, not applying a scaling coefficient to a case or an HARQ process in which retransmission by HARQ is disabled (e.g., HARQ-feedback disable is configured) makes it possible to improve transmission reliability.

The method of semi-statically configuring a scaling coefficient has been described, thus far.

By contrast, in the method of dynamically configuring a scaling coefficient, for example, the scaling coefficient may be indicated to terminal 200 by the DCI for indicating scheduling information on data.

Further, for example, a plurality of candidates for a scaling coefficient may be configured for terminal 200 by the RRC message, and any one scaling coefficient of the plurality of candidates may be indicated to terminal 200 by the DCI per scheduling of data.

By way of example, a scaling coefficient may be included in information on time-domain resource allocation (e.g., TDRA) (e.g., allocation pattern of time-domain resource). The TDRA information may be expressed in a table format (e.g., TDRA table), for example. In other words, a scaling coefficient may be defined in the TDRA table. In this case, for example, a plurality of candidates for the TDRA information may be configured for terminal 200 by the RRC message (e.g., PDSCH-TimeDomainResourceAllocationList-r16 or PUSCH-TimeDomainResourceAllocationList-r16), and any one allocation pattern (including scaling coefficient) of the plurality of candidates may be indicated to terminal 200 by the DCI.

Alternatively, a scaling coefficient may be included in, for example, information including a scaling coefficient (e.g., value of equal to or less than one) for Paging or random access processing (e.g., Random Access Channel (RACH) response). The information including the scaling for the Paging or the random access processing may be expressed in a table, for example. In other words, a scaling coefficient may be defined in the table including the scaling coefficient for the Paging or the random access processing.

In this case, for example, a table may be defined that includes a scaling coefficient for the TBoMS transmission (e.g., value equal to or greater than one), in addition to the scaling coefficient (e.g., value of equal to or less than one) for the Paging (e.g., Paging-Radio Network Temporary ID (P-RNTI)) or the random access processing (e.g., Random Access-RNTI (RA-RNTI)) included in the table defined by Table 5.1.3.2-2 in TS38.214 V16.1.0. Further, for example, a plurality of candidates for a scaling coefficient may be configured for terminal 200 by the RRC message, and any one scaling coefficient of the plurality of candidates may be indicated to terminal 200 by the DCI (e.g., TB scaling field).

The method of dynamically configuring a scaling coefficient has been described, thus far.

Such indication of the scaling coefficient makes it possible to indicate a scaling coefficient in an indication structure in the existing standards, which reduces the complexities of processing in terminal 200.

According to Configuration Method 2, it is possible to use more slots in an RTT without increasing the number of HARQ processes by, for example, extending a TB size based on a scaling coefficient in a plurality of slots used for the TBoMS transmission. For example, in an environment where the RTT is very long compared to the slot length, such as an NTN environment, user throughput can be improved by extending the TB size based on the scaling coefficient, without increasing the number of HARQ processes.

In addition, for example, since the TB size is increased in accordance with an increase in number of slots used for data transmission, an actual coding rate (e.g., MCS) can be controlled based on, for example, a scaling coefficient. Therefore, even when the TBoMS transmission is performed, controlling the scaling coefficient (or coding rate or MCS) makes it possible to suppress a decrease in frequency-utilization efficiency (Spectral efficiency) and to transmit at a necessary and sufficient error rate (e.g., BLER).

Further, according to Configuration Method 2, for example, a scaling coefficient can be configured for terminal 200 independently of the number of slots for the TBoMS transmission. Therefore, for example, in a case where the number of slots for the TBoMS transmission is not explicitly indicated to terminal 200, base station 100 and terminal 200 can configure, by using a scaling coefficient, a TB size based on the number of times of transmission or the number of slots of the same TB.

Incidentally, for example, the greater the value configured as a scaling coefficient is, the larger a transmission data amount is, thus reducing the transmission reliability. In other words, the smaller the value configured as a scaling coefficient is, the less the transmission data amount is, thus improving the transmission reliability. A trade-off between the throughput and the transmission reliability can be thereby adjusted by adjusting the scaling coefficient, so that various types of traffic with different latency or a reliability requirement can be accommodated efficiently.

Exemplary configuration methods of a TB size have been each described, thus far.

Note that Configuration Method 1 and Configuration Method 2 may be combined with each other. Alternatively, for example, a TB size may be configured based on both $N_{MS}$ and a scaling coefficient, $N_{scaling}$. In one example, for Equation 13, $N_{MS}$ and the scaling coefficient, $N_{scaling}$, may be multiplied.

Thus, base station 100 and terminal 200 determine a TB size based on $N_{MS}$ or a scaling coefficient, $N_{scaling}$.

Thus, for example, even when the HARQ process defined by Rel. 15/16 (e.g., up to 16 HARQ processes) is used in satellite communication, which is an environment with a large round-trip propagation delay time (e.g., RTT) as compared to the terrestrial network, it is possible to increase the number of information bits that can be transmitted in the RTT, by extending the TB size in each HARQ process based on the number of slots used for the TBoMS transmission, thereby improving user throughput.

Further, the user throughput improvement by the extension of the TB size can suppress an increase in number of HARQ processes. Therefore, for example, an increase in amount of required HARQ buffer in base station 100 or terminal 200 can be suppressed, and generation of a new definition matter such as an indication method of the number of processes can be also suppressed, thereby suppressing an increase in complexities of terminal 200, base station 100, and the radio communication system.

Incidentally, while increasing the number of HARQ processes to some extent (e.g., up to 32), a TB size may be determined based on the number of slots, $N_{MS}$, or the scaling factor, $N_{scaling}$. In this case, $N_{MS}$ or the scaling coefficient, $N_{scaling}$, for transmitting enough information bits in the RTT is suppressed to some extent, and thus, the TB size does not become extremely large.

An upper limit value of the scaling coefficient for the TB size configuration may be set to, for example, the number of RTTs(slots)/HARQ processes, or may be set to a configurable number of slots for the TBoMS transmission.

Moreover, for example, when no $N_{MS}$ or $N_{scaling}$ for the TB size configuration is applied in a situation where the HARQ retransmission is disabled (HARQ-feedback disable), $N_{MS} = 1$ or $N_{scaling} = 1$ may be configured.

Further, for example, applicability of $N_{MS}$ or $N_{scaling}$ to the TB size configuration may be indicated to terminal 200 by a System Information Block (SIB), per cell. Alternatively, the applicability of $N_{MS}$ or $N_{scaling}$ to the TB size configuration may be configured for or indicated to each terminal 200, depending on the capability of terminal 200 (e.g., UE capability), for example. Alternatively, terminal 200 may indicate, to base station 100, the applicability of $N_{MS}$ or $N_{scaling}$ or an upper limit value of applicable $N_{MS}$ or $N_{scaling}$, and then base station 100 may configure $N_{MS}$ or $N_{scaling}$ based on the indication made by terminal 200.

Further, a TB size calculated by the application of $N_{MS}$ or $N_{scaling}$ may be configured within a range not exceeding the upper limit of the TB size supported by terminal 200, for example.

[Another Configuration Method of TB size]

Another exemplary method for the TB size will be described.

As mentiond above, a TB size may be configured based on "$N_{info}$" expressed by Equation 13 described in TS38.214 V16.1.0 section 5.1.3 (PDSCH) and 6.1.4 (PUSCH), for example. A value of $N_{info}$ is determined based on the number of slots used for transmission of PDSCH or PUSCH, for example.

By way of example, with respect to $N_{RE}$ (the number of REs used for data transmission) included in a calculation formula for $N_{info}$ (e.g., Equation 13), a value that is based on the number of slots used for the transmission of PUSCH (i.e., transmission signal or received signal) may be calculated. For example, $N_{RE}$ may be expressed by the following Equation 16:

$$N_{RE} = \min\left(156, N'_{RE}\right) \cdot n_{PRB} \qquad \text{... (Equation 16).}$$

In Equation 16, $N'_{RE}$ represents the number of REs in one resource block ((RB) or Physical Resource Block (PRB)) in the slot used for data transmission, and $n_{PRB}$ represents the number of resource blocks allocated for the data. Further, in Equation 16, for example, an upper limit of the number of REs in the slot used for TB size calculation is set to 156 so that the TB size does not exceed a data rate supported by terminal 200. Note that the upper limit value is not limited to 156.

Hereinafter, two methods (e.g., Calculation method A and Calculation method B) will be each described as an exemplary calculation method of the number of REs ($N_{RE}$).

<Calculation Method A>

In Calculation Method A, $N_{RE}$ may be calculated according to the following Equation 17:

$$N_{RE} = \min\left(156 \cdot N_{slot}, N'_{RE}\right) \cdot n_{PRB} \qquad \text{... (Equation 17).}$$

In Equation 17, $N'_{RE}$ represents the number of REs to be allocated in multiple slots used for data (e.g., PDSCH or PUSCH) transmission. In one example, $N'_{RE}$ may represent the total value of the numbers of REs, each number in one resource block, respectively in $N_{slot}$ slots used for the data transmission. Further, in Equation 17, $N_{slot}$ represents the number of slots used for the data (e.g., PDSCH or PUSCH) transmission.

For example, $N'_{RE}$ may be calculated according to the following Equation 18:

$$N'_{RE} = N_{SC}^{RB} \cdot N_{symbol}^{sh} - N_{DMRS}^{PRB} - N_{oh}^{PRB} \qquad \text{... (Equation 18).}$$

The following are used, herein:

$N_{sc}^{RB}$ : Number of subcarriers per resource block (e.g., 12);

$N_{symbol}^{sh}$ : Number of OFDM symbols allocated for PDSCH or PUSCH transmission over multiple slots;

$N_{DMRS}^{RPB}$ : Number of DMRS resource elements per resource block in slot section assigned for PDSCH or PUSCH transmission; and

$N_{oh}^{PRB}$ : Overhead coefficient indictaed to terminal by higher layer (RRC layer).

For example, $N_{SC}^{RB}$ may be $N_{SC}^{RB}$ = 12 or may be other values. $N_{oh}^{PRB}$ may be indicated to terminal 200 by "PDSCH-ServingCellConfig" for PDSCH and "PUSCH-ServingCellConfig" for PUSCH, for example. Further, overhead coefficient $N_{oh}^{PRB}$ may be a coefficient to take into account overhead of a signal different from a DMRS, and is defined as {0, 6, 12, or 18} in Rel. 15/16 NR, for example.

Incidentally, the overhead coefficient $N_{oh}^{PRB}$ may be extended by adding a value for multiple-slot transmission or multiplying by a coefficient. For example, as the coefficient, the number of slots, $N_{slot}$, used for data transmission may be applied, and in this case, N'RE may be calculated according to the following Equation 19:

$$N'_{RE} = N^{RB}_{SC} \cdot N^{sh}_{symbol} - N^{PRB}_{DMRS} - N^{PRB}_{oh} \cdot N_{slot} \quad ... \text{(Equation 19)}.$$

With Equation 19, the conventional overhead coefficient defined by Rel. 15/16 can be used, which eliminates the need for a new indication, thereby simplifying the processing and reducing indication overhead.
Meanwhile, N'RE may be calculated according to the following Equation 20 as a variation of calculation of N'RE:

$$N'_{RE} = N^{RB}_{SC} \cdot N^{sh}_{symbol} - (N^{PRB}_{DMRS} + N^{PRB}_{oh}) \cdot N_{slot} \quad ... \text{(Equation 20)}.$$

In Equation 20, $N_{DMRS}{}^{PRB}$ represents the number of resource elements of a DMRS in a resource block per slot allocated for the transmission of PDSCH or PUSCH. With Equation 20, $N_{DMRS}{}^{PRB}$ and $N_{oh}{}^{PRB}$ defined in Rel. 15/16 NR can be applied even to the multiple-slot transmission, thereby making it possible to simplify the processing in terminal 200, for example.
In Equation 18 or Equation 19, $N_{DMRS}{}^{PRB}$ represents the number of DMRS resource elements per resource block in a slot section ($N_{slot}$ section) allocated for the transmission of PDSCH or PUSCH. For this reason, for example, even when the number of DMRSs is configured individually for a slot (e.g., the number is different for each slot), the correct number of resource elements of each DMRS can be represented, thus more accurately calculating the number of resource elements (i.e., N'RE) used for the data transmission.
According to Equation 17, N'RE, which is the total value of the number of REs used for the data transmission in each of the multiple slots, is used for the TB size calculation, thus configuring the TB size corresponding to the number of slots used for the data transmission.
In addition, for example, even when the number of REs is different for each slot, the total number, N'RE, of the number of REs in the multiple slots is used for the TB size calculation, thus configuring the TB size, based on an accurate value of $N_{RE}$ in the multiple slots.
Further, a value obtained by multiplying the upper limit value (i.e., 156) of the number of REs in a slot by the number of slots, $N_{slot}$, is configured as an upper limit value of $N_{RE}$, thereby suppressing a situation where the TB size is configured to be extremely large depending on a value taken by N'RE.

<Calculation Method B>

In Calculation Method B, $N_{RE}$ may be calculated according to the following Equation 21:

$$N_{RE} = \min\left(156 \cdot N_{slot}, N'_{RE} \cdot N_{slot}\right) \cdot n_{PRB} \quad ... \text{(Equation 21)}.$$

In Equation 21, N'RE represents the number of REs in one resource block per slot of multiple slots used for the data (PDSCH or PUSCH) transmission. Further, $N_{slot}$ represents the number of slots used for the data (e.g., PDSCH or PUSCH) transmission.
Calculation Method B may assume that the number of REs per resource block in each of the multiple slots used for the data transmission is identical with each other, for example. In contrast, when the number of REs per resource block in each of the multiple slots used for the data transmission is different from each other, the number of REs in a slot with a smaller (e.g., smallest) number of REs may be applied to N'RE, or the number of REs in a particular slot such as the start slot (e.g., also called first slot) or the last slot may be applied to N'RE, for example. Alternatively, a value based on the mean value of the numbers of REs respectively in the multiple slots may be applied to N'RE.
In Calculation Method B, the number of REs in one slot is used for the TB size calculation; hence, the TB size can be calculated more simply as compared to Calculation Method A.
Note that, instead of Equation 21, $N_{RE}$ may be calculated according to the following Equation 22:

$$N_{RE} = \min\left(156, N'_{RE}\right) \cdot n_{PRB} \cdot N_{slot} \quad ... \text{(Equation 22)}.$$

Calculation Method A and Calculation Method B have been each described, thus far.

In Calculation Method A and Calculation Method B have been described with an example of performing the min computation in which the upper limit of the number of REs in one slot is set to 156, but the $N_{RE}$ calculation method is not limited to this example. For example, the upper limit value of the number of REs in one slot may be a value other than 156. By way of example, in one slot section, the number of resource elements in one resource block is 168 (= 12 subcarriers $\times$ 14 symbols). Of the 168 resource elements, resource elements (= 12) for one symbol corresponds to overhead such as a DMRS, and the remaining 156 pieces are defined as the upper limit of the number of resource elements to be allocated for the data. For example, in the case of multiple-slot transmission, the upper limit of the number of resource elements may be set to 156 in a particular slot (e.g., the first slot), whereas the upper limit of the number of resource elements may be set to 168 in the other slots (e.g., the second and subsequent slots). In this case, the min computation in the calculation formula for $N_{RE}$ may be replaced with min ($156 + 12 \cdot 14 \cdot (N_{slot} - 1)$ or $N'_{RE}$). In the manner described above, for example, when overhead such as a DMRS is mapped to the first symbol while being not mapped to the other symbols in the multiple slots used for the data transmission, the upper limit value of the number of resource elements can be appropriately configured.

Alternatively, for example, the upper limit value of the number of resource elements may not be configured. In this case, for example, $N_{RE}$ may be calculated according to "$N_{RE} = N'_{RE} \cdot n_{PRB}$" in Calculation Method A, or may be calculated according to "$N_{RE} = N'_{RE} \cdot N_{slot} \cdot n_{PRB}$" in Calculation Method B.

According to the TB size configuration methods, base station 100 and terminal 200 configure a TB size that is in accordance with the number of slots used for the data (PDSCH or PUSCH) transmission, for example. In other words, base station 100 and terminal 200 determine the TB size, based on information relating to a resource amount (e.g., the number of slots) used for the data (e.g., transmission signal). In one example, the more slots are used for the data transmission, the more information bits are transmitted in the respective slots used for the data transmission. This TB size configuration can increase the data amount transmittable in one HARQ process, so that throughput can be improved even with a defined (e.g., limited) number of HARQ processes.

Further, the TB size is configured in accordance with the number of slots used for the data (e.g., PDSCH or PUSCH) transmission. In consequence, for example, the number of information bits (e.g., data amount) to be transmitted also increases as the number of slots increases, so that throughput can be improved while suppressing an increase in the number of resource blocks, that is, suppressing a decrease in transmission power density (Power spectrum density (PSD)). This enables data transmission with the reduced PSD decrease, thus extending a coverage area over which a certain data rate can be achieved, for example.

Further, since data assigment can be indicated to terminal 200 by one DCI for the plurality of slots, control overhead can be reduced, for example. Moreover, since consumption of an HARQ process (i.e., increase in number of HARQ processes to be used), can be suppressed, it is possible to simplify the terminal by reducing the number of HARQ processes.

Further, in the TBoMS transmission, the data transmission/reception processing such as encoding or modulation is performed individually for a slot, but in the data (e.g., PDSCH or PUSCH) transmission over multiple slots, base station 100 and terminal 200 can perform channel estimation and demodulation/decoding collectively on these slots, resulting in improvement of the channel estimation accuracy and reduction of an error rate, for example.

Further, among the multiple slots used for the data transmission, a DMRS may be mapped to a particular slot (e.g., start slot), and the DMRS may not be mapped to the other slots, for example. This DMRS mapping allows base station 100 and terminal 200 to transmit more data. Therefore, even when the DMRS mapping is configured individually for a slot (e.g., different for each slot), the TB size can be appropriately configured.

Incidentally, the number of slots used for the transmission of the data (e.g., PDSCH or PUSCH) may be replaced with, for example, "the number of slots to be a unit of TB processing."

Moreover, the plurality of slots used for the transmission of the data (e.g., PDSCH or PUSCH) may be temporally consecutive slots or non-consecutive slots. Further, a frequency resource (e.g., resource block) to which the data is assigned in each of the plurality of slots may be configured individually (e.g., to be different resources).

Further, the number of slots for the TBoMS transmission may be configured as the number of slots, $N_{slot}$. In other words, the number of slots, $N_{slot}$, may correspond to the number of slots for the TBoMS transmission.

Note that the above configuration methods may be combined with each other. By way of example, the TB size may be determined based on information on at least one of the number of slots for the TBoMS transmission of the data, the scaling coefficient, and the number of slots used for the data transmission (e.g., the number of time intervals). As an example, in the TB size calculation methods, the calculated $N_{info}$ may be further multiplied by the scaling coefficient. In one example, multiplying $N_{info}$ by a scaling coefficient less than one allows data transmission with a lower MCS (or Spectral Efficiency), thus extending the coverage area.

Further, the number of slots, $N_{slot}$, may be an integer or a decimal. For example, in a case where $N_{slot} = 2.5$, two slots and a half-slot (half of slot) may be used for the transmission of the data (e.g., PDSCH or PUSCH). The number of slots, $N_{slot}$, may be expressed by the number of symbols used for the data transmission. For example, a case where

$N_{slot}$ = 2 may be expressed by 28 symbols, and a case where $N_{slot}$ = 2.5 may be expressed by 42 symbols.

In addition, the shorter the slot length is, frequency (or the number of times) of decoding-attempt on the control information (e.g., PDCCH) may be reduced to a frequency (or number of times) such as once (or less than the number of slots) for multiple slots, instead of the slot-by-slot frequency, for the purpose of reducing a processing amount of the terminal or power consumption. Even in this case, as in the above-described embodiments, determining the TB size based on the number of slots to which the data to be transmitted in the multiple slots is assigned enables data transmission with a data amount that is in accordance with the number of slots, thereby improving throughput. Further, the data transmission using the multiple slots allows, in addition to the throughput improvement, extension of the coverage over which a certain data rate can be achieved.

Further, as an example ,a case has been described where the data assignment (e.g., scheduling) is indicated to terminal 200 by the DCI, but the present disclosure is not limited to this case. An exemplary embodiment of the present disclosure may also be applied to, for example, transmission using Semi-persistent scheduling for performing scheduling periodically in advance or Configured Grant. By way of example, a scaling coefficient may be indicated to (or configured for) terminal 200 by the RRC message "SPS-Config" for the Semi-persistent scheduling. Alternatively, a scaling coefficient may be indicated to (or configured for) terminal 200 by the RRC message "configuredGrantConfig" for the Configured uplink grant.

ACK/NACK may also be referred to as, for example, HARQ-ACK or HARQ-Feedback information.

Repetition may also be referred to as, for example, slot aggregation, slot bundling, TTI aggregation, or TTI bundling.

Further, the number of Repetitions in the above may be replaced with the number of slots, $N_{slot}$, used for the data (PDSCH or PUSCH) transmission. In other words, the number of Repetitions may correspond to the number of slots, $N_{slot}$.

Further, in the embodiments described above, transmission of uplink data (e.g., PUSCH) has been described; however, an exemplary embodiment of the present disclosure may be applied to both downlink data (e.g., PDSCH) and the uplink data, or may be applied to either of them and not applied to the other.

(Embodiment 2)

In NR, as illustrated in FIG. 2, when PUCCH collides in one or more slots of multiple slots used for transmitting PUSCH repetition, UCI and uplink data can be transmitted by being multiplexed on PUSCH in the one or more slots where PUCCH and PUSCH collide with each other.

Meanwhile, in a TBoMS transmission, an increase in the number of slots for UCI multiplexing may cause deterioration of the transmission quality of PUSCH, for example.

Therefore, Embodiment 2 provides a method of controlling a UCI resource amount to be multiplexed on PUSCH according to whether to multiplex a UCI and/or by changing the UCI resource amount to be multiplexed on PUSCH in units of slots or in units of Repetitions, in the TBoMS transmission.

For example, a UCI resource amount may be controlled by the following methods. Hereinafter, a plurality of slots in the TBoMS transmission is described as the zero-th to n-th slots (where n is integer of two or more) in this order in a time direction. Each of the slots in the TBoMS transmission may also be abbreviated as a TBoMS transmission slot. In this case, TBoMS transmitssion slots positioned before the n-th slot may be, for example, the 0-th to n-1-th slots.

<Option 1>

For example, when PUCCH collides in the n-th slot in the TBoMS transmission and a UCI has already been determined to be multiplexed (i.e., UCI multiplexing has already been determined) in at least one of TBoMS transmission slots before the n-th slot, a UCI is dropped without multiplexing in the n-th slot.

<Option 2>

When PUCCH collides in the n-th slot in the TBoMS transmission and the UCI multiplexing has already been determined in a TBoMS transmission slot before the n-th slot, some of UCIs are dropped without multiplexing in the n-th slot.

For example, some of the UCIs may be a low-priority UCI. For example, the low-priority UCI may be a CSI. Further, when the CSI includes CSI part 1 and CSI part 2, the UCI may include CSI part 2 or may include CSI part 1 and CSI part 2.

<Option 3>

Either or both of parameter $\beta$ for controlling a UCI coding rate and parameter $\alpha$ for controlling an upper limit of a UCI resource amount in Equations 1, 8, 11, and 12 may be extended to the TBoMS transmission.

For example, when PUCCH collides in the n-th slot in the TBoMS transmission, a value of parameter $\beta$ or parameter $\alpha$ is varied between a case where the UCI multiplexing has already been determined in a TBoMS transmission slot before the n-th slot and a case where it has not been determined.

For example, two candidates for elements may be configured for each of parameters: $\{\beta, \beta_{ext}\}$ for parameter $\beta$ and $\{\alpha, \alpha_{ext}\}$ for parameter $\alpha$. Then, when PUCCH collides in the n-th slot in the TBoMS transmission and no UCI multiplexing has been determined in a TBoMS transmission slot before the n-th slot, a UCI resource amount may be calculated using $\beta$ and $\alpha$. On the other hand, when PUCCH collides in the n-th slot in the TBoMS transmission and the UCI multiplexing has been determined in a TBoMS transmission slot before the n-th slot, a UCI resource amount may be calculated using $\beta_{ext}$ and $\alpha_{ext}$. Here, $\beta$ and $\alpha$ may be parameters for calculating a UCI resource amount used in NR Rel. 15/16.

Incidentally, although an example has been described above in which both parameter $\beta$ and parameter $\alpha$ are configured according to whether a UCI is multiplexed, either parameter $\beta$ or parameter $\alpha$ may be configured according to whether a UCI is multiplexed, and the other may be configured regardless of whether the UCI is multiplexed.

In Option 3, the number of candidates for the elements of parameter $\beta$ and parameter $\alpha$ are not limited to two, and elements with three or more candidates may be configured. In this case, elements to be used may be different in accordance with the number of slots where a UCI is multiplexed in the TBoMS transmission slots before the n-th slot. For example, three candidates for the elements, $\{\beta, \beta_{ext1}, \beta_{ext2}\}$ and $\{\alpha, \alpha_{ext1}, (\alpha_{ext2}\}$ may be configured for $\beta$ and $\alpha$. In a situation where PUCCH collides in the n-th slot in the TBoMS transmission, $\beta_{ext1}$ and $\alpha_{ext1}$ may be used to calculate a UCI resource amount when the number of slots where a UCI is multiplexed in the TBoMS transmission slots before the n-th slot is one, whereas $\beta_{ext2}$ and $\alpha_{ext2}$ may be used to calculate a UCI resource amount when the number of slots where a UCI is multiplexed in the TBoMS transmission slots before the n-th slot is two or more.

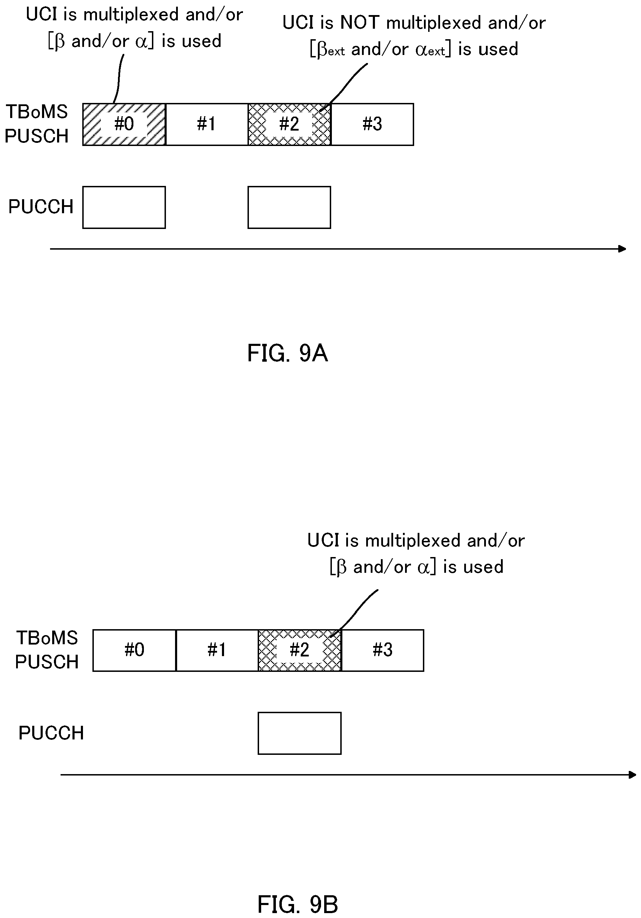

FIGS. 9A and 9B each illustrate an example of Embodiment 2. In FIGS. 9A and 9B, slots for the TBoMS transmission ("TBoMS PUSCH" in FIGS. 9A and 9B) and slots for PUCCH are illustrated. Incidentally, each horizontal axis of FIGS. 9A and 9B represents a time axis. Further, identification numbers of #0 (n = 0) to #3 (n = 3) are assigned to the slots for the TBoMS transmission.

In the FIG. 9A, the second slot (n = 2) for the TBoMS transmission is focused on. In the case of FIG. 9A, a UCI is multiplexed in the zero-th slot before the second slot. Accordingly, a method of dropping a UCI without multiplexing (e.g., Option 1) may be applied in the second slot, or multiplexing a UCI of a UCI resource amount calculated by using $\beta_{ext}$ and $\alpha_{ext}$ (e.g., Option 3) may be applied in the second slot.

In FIG. 9B, the second slot (n = 2) for the TBoMS transmission is focused on. In the case of FIG. 9B, a UCI is not multiplexed in the zero-th and first slots for the TBoMS transmission before the second slot. Accordingly, a method of multiplexing a UCI without dropping (e.g., Option 1) may be applied in the second slot, or multiplexing a UCI of a UCI resource amount calculated by using $\beta_{ext}$ and $\alpha_{ext}$ (e.g., Option 3) may be applied in the second slot.

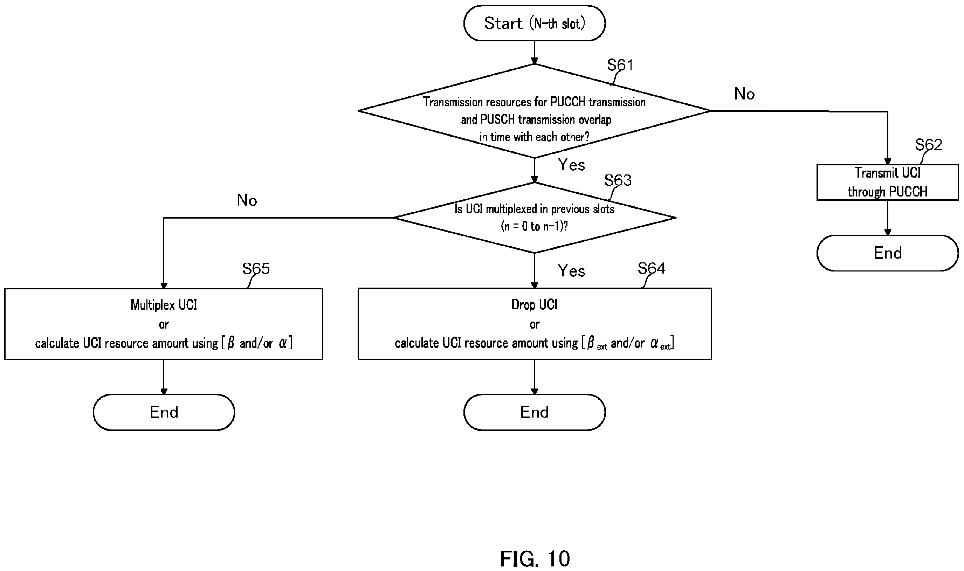

Next, an exemplary operation in Embodiment 2 will be described. FIG. 10 is a flowchart describing the exemplary operation of terminal 200 in Embodiment 2. The flow illustrated in FIG. 10 is a flow describing whether to multiplex a UCI in the n-th slot (n-th slot) or an operation of calculating a resource amount for a UCI to be multiplexed.

In the n-th slot, terminal 200 determines whether transmission resources for a PUCCH transmission and a PUSCH transmission overlap in time with each other (S61).

In the n-th slot, when the transmission resources for the PUCCH transmission and the PUSCH transmission do not overlap in time with each other (S61: No), terminal 200 transmits a UCI through PUCCH of a non-overlapping transmission resource (S62). The flow of FIG. 10 then ends.

When the transmission resources for the PUCCH transmission and the PUSCH transmission overlap in time with each other (S61: Yes), terminal 200 determines whether a UCI is multiplexed in a slot before the n-th slot (whether UCI multiplexing is determined) (S63).

In a case where the UCI is multiplexed in the slot prior to the n-th slot (S63: Yes), terminal 200 drops some or all of UCIs (applies Option 1 or Option 2) or calculates a UCI resource amount using $\beta_{ext}$ and $\alpha_{ext}$ (applies Option 3) (S64). The flow of FIG. 10 then ends.

In a case where the UCI is not multiplexed in the slot prior to the n-th slot (S63: No), terminal 200 multiplexes the UCI (applies Option 1 or Option 2) or calculates a UCI resource amount using $\beta_{ext}$ and $\alpha_{ext}$ (applies Option 3) (S65). The flow of FIG. 10 then ends

As described above, according to Embodiment 2, it is possible to determine a UCI resource amount and whether to apply the UCI multiplexing in a certain TBoMS transmission slot (e.g., second slot in FIGS. 9A and 9B), taking into account the state of UCI multiplexing in TBoMS transmission slots (e.g., zero-th and first slots in FIGS. 9A and 9B) before the subject TBoMS transmission slot. Consequently, it is possible to suppress deterioration of the transmission quality of PUSCH caused by an increase in the number of slots for the UCI multiplexing in the TBoMS transmission.

(Variations)

Incidentally, among Option 1 to Option 3 mentioned above, an Option to be applied may be varied depending on the number of slots used for the TBoMS transmission. For example, Option 3 may be applied when the number of slots used for the TBoMS transmission is relatively small (e.g., two slots), whereas Option 1 may be applied when the number of slots used for the TBoMS transmission is relatively large (e.g., four slots to eight slots). Applying Option 1 when the coverage enhancement is high and the number of slots used for the TBoMS transmission is large does not increase the number of slots for multiplexing a UCI, thus preventing deterioration of the transmission quality of PUSCH.

Besides, the elements of parameter $\beta$ and/or parameter $\alpha$ to be applied in Option 3 may be varied depending on the number of slots used for the TBoMS transmission. For example, the case will be described where two elements $\{\beta, \beta_{ext}\}$ and $\{\alpha, \alpha_{ext}\}$ are configured for parameter $\beta$ or parameter $\alpha$. In this case, $\beta$ and/or $\alpha$ may be used to calculate a UCI resource amount even when the number of slots used for the TBoMS transmission is relatively small (e.g., two slots) while the UCI multiplexing has been determined in a TBoMS transmission slot before the n-th slot. On the other hand, when the number of slots used for the TBoMS transmission is relatively large (e.g., four slots or eight slots) while the UCI multiplexing has been determined in a TBoMS transmission slot before the n-th slot, $\beta_{ext}$ and/or $\alpha_{ext}$ may be used to calculate a UCI resource amount. When the coverage enhancement is high and a large number of slots used for the TBoMS transmissions is required, the transmission quality of PUSCH can be prevented from deteriorating, by using such a paramaeter that does not muliplex the UCI as much as possible.

The elements of parameter $\beta$ and/or parameter $\alpha$ to be applied in Option 3 may be veried depending on the type of UCI, such as ACK/NACK, CSI part 1, and CSI part 2. For example, for ACK/NACK, $\beta$ and/or $\alpha$ (e.g., parameter used for calculation of existing UCI resource amount that is used in NR Rel. 15/16) may be used regardless of whether a UCI is multiplexed in a TBoMS transmission slot before the n-th slot. Meanwhile, for the CSI, $\beta_{ext}$ and/or $\alpha_{ext}$ may be used to calculate a UCI resource amount when the UCI multiplexing has been determined in a TBoMS transmission slot before the n-th slot. By not multiplexing the UCI with relatively low priority as much as possible, deterioration of the transmission quality of PUSCH can be prevented while suppressing deterioration of the transmission efficiency in downlink.

Further, in the TBoMS transmission, the number of slots in which a UCI can be multiplexed may be defined by specifications (standards) and the like, or may be configured by the RRC and the like. In a situation where the number of slots in which a UCI can be multiplexed is N (N is integer equal to or greater than one), a UCI may not be multiplexed and dropped in the n-th slot when the UCI multiplexing has been determined in N slots in the TBoMS transmission slots before the n-th slot. A value of N may be defined by specifications (standards) and the like, e.g., as N = 2 and N = 4, or may be configrued by the RRC. The value may also be determined implicitly in accordance with the number of slots used for the TBoMS transmission.

(Embodiment 3)

In Embodimnts 1 and 2, a case has been described where the UCI and the uplink data are multiplexed on PUSCH when the transmission resources for PUCCH and PUSCH overlap in time with each other in uplink transmision by terminal 200. In NR Rel. 15, there is a constraint of not allowing allocation of a PUCCH resource for transmitting ACK/NACK for PDSCH assigned by a second DCI after reception of a first DCI for assigning PUSCH, to a resource overlapping in time with the transmission of PUSCH assigned by the first DCI.

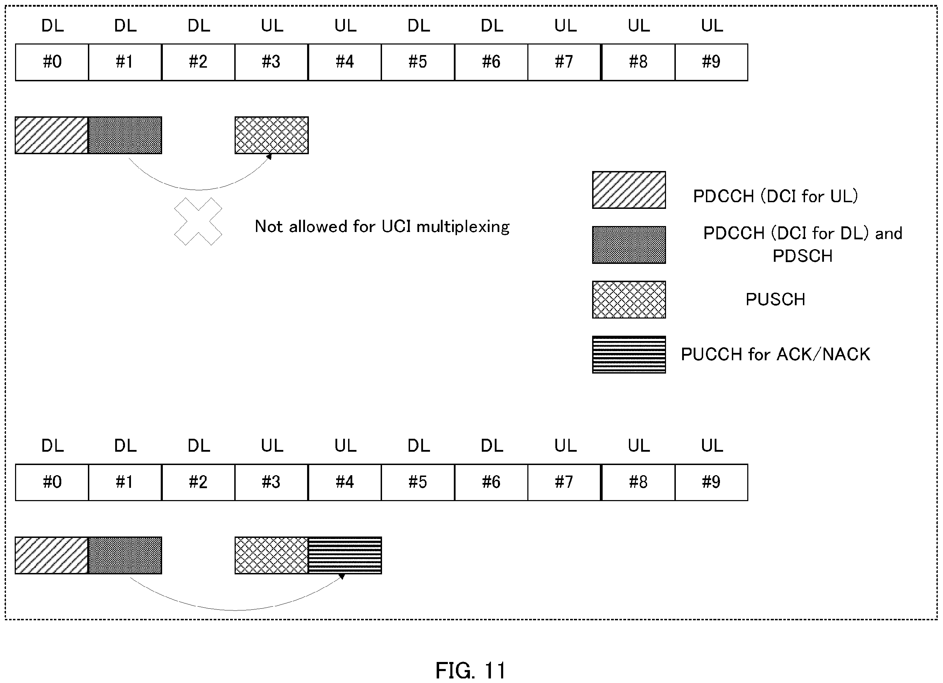

FIG. 11 is a diagram for describing a constraint on Uplink Control Information (UCI) on PUSCH in NR Rel. 15/16. For example, as illustrated in an upper part of FIG. 11, when the second DCI for assigning PDSCH is received in slot #1 after the first DCI for assigning PUSCH to slot #3 is received in slot #0, a resource for transmitting ACK/NACK for PDSCH is not allocated to a resource overlapping in time with the transmission of PUSCH (slot #3).

Thus, in NR Rel. 15/16, it is not supported that a UE transmits ACK/NACK for PDSCH assigned by the second DCI after receiving the first DCI for assigning PUSCH, by multiplexing on PUSCH assigned by the first DCI.

Therefore, a PUCCH resource for transmitting ACK/NACK for PDSCH assigned by the second DCI after reception of the first DCI for assigning PUSCH is allocated to, for example, a resource (e.g., slot #4) not overlapping in time with the transmission of PUSCH assigned by the first DCI (e.g., slot #3), as illustrated in the lower part of FIG. 11.

Meanwhile, in the PUSCH transmission using multiple slots (e.g., TBoMS transmission), transmission slots for PUSCH may occupy uplink slots.

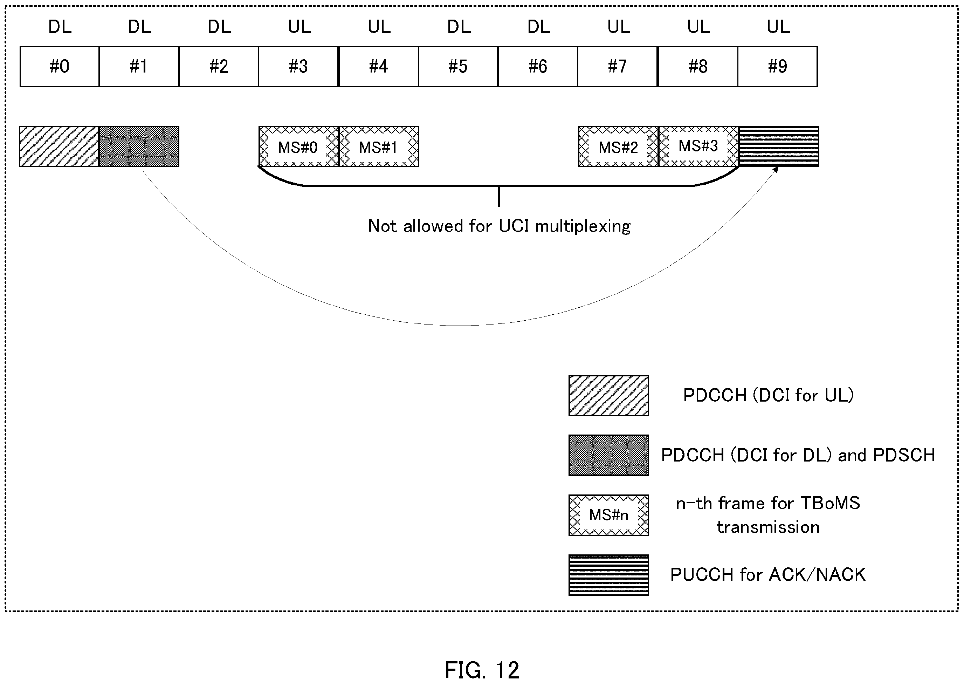

In this case, under the above-mentioned constraint of "not allowing allocation of a PUCCH resource for transmitting ACK/NACK for PDSCH assigned by the second DCI after reception of the first DCI for assigning PUSCH, to a resource overlapping in time with the transmission of PUSCH assigned by the first DCI," terminal 200 does not transmit ACK/NACK for PDSCH until the TBoMS transmission is complete, as illustrated in FIG. 12, for example, which may result in a latency increase in downlink where data transmission is controlled based on ACK/NACK from terminal 200.

Further, while the control information included in the DCI for assigning PDSCH may include, for example, information on the timing of how many slots later PUCCH is transmitted since the slot in which PDSCH has been received (K1 or PDSCH-to-HARQ feedback timing indication), the range of indicatable values of K1 is limited. Therefore, the above-mentioned constraint causes blocking of PDSCH assignment due to not allowing PUCCH assignment, which may reduce frequency-utiliztaion efficiency in downlink.

For the purpose of improving the frequency-utiliztaion efficiency and reducing the latency in the downlink transmission, it is desirable to remove the above-mentioned constraint of "not allowing allocation of a PUCCH resource for transmitting ACK/NACK for PDSCH assigned by the second DCI after reception of the first DCI for assigning PUSCH, to a resource overlapping in time with the transmission of PUSCH assigned by the first DCI."

For example, suppose, allowing allocation of a PUCCH resource for transmitting ACK/NACK for PDSCH assigned by the second DCI after reception of the first DCI for assigning PUSCH, to a resource overlapping in time with the transmission of PUSCH assigned by the first DCI.

However, when the portion of the PUSCH resource is punctured to transmit ACK/NACK for PDSCH assigned by the second DCI, coverage performance of PUSCH may deteriorate.

In Embodiment 3, a description will be given of a method of achieving improvement of the frequency-utilization efficiency and reduction in delay in downlink transmission as well as reducing deterioration of the PUSCH coverage performance when terminal 200 performs TBoMS transmission of PUSCH.

For example, suppose, allowing allocation of a PUCCH resource for transmitting ACK/NACK for PDSCH assigned by the second DCI after reception of the first DCI for assigning PUSCH, to a resource overlapping in time with the transmission of PUSCH assigned by the first DCI. Then, for example, in accordance with whether the PUCCH resource for transmitting ACK/NACK for PDSCH assigned by the second DCI after reception of the first DCI overlaps in time with the transmission of PUSCH assigned by the first DCI, at least one of an ACK/NACK transmission method, the number of bits for transmitting ACK/NACK, and a resource for PUSCH repetition transmission is controlled.

Illustratively, in Embodiment 3, the following three methods willl be described.

(Method 1)

Method 1 of Embodiment 3 will be described.

When the TBoMS transmission is applied for terminal 200, in Method 1, it is allowed to allocate a PUCCH resource for transmitting ACK/NACK for PDSCH assigned by the second DCI after reception of the first DCI for assigning PUSCH, to a resource overlapping in time with the transmission of PUSCH assigned by the first DCI.

For example, in a slot where transmission resources for PUCCH and PUSCH overlap in time with each other, ACK/NACK for PDSCH assigned by the second DCI is transmitted by puncturing a portion of a PUSCH resource assigned by the first DCI. However, the number of bits of ACK/NACK for PDSCH assigned by the second DCI that can be transmitted by puncturing a portion of the PUSCH resouce assigned by the first DCI may be limited to X bits. When the number of bits of ACK/NACK for PDSCH assigned by the second DCI exceeds X bits, ACK/NACK bundling (e.g., compression of ACK/NACK bits) may be applied in order to decrease the number of ACK/NACK bits, which is to be actually transmitted, to X bits or less, thus transmitting ACK/NACK by puncturing a portion of the PUSCH resource assigned by the first DCI.

Herein, a value of X may be a value predetermined by standards (e.g., X = two bits), a value statically configured by the RRC signaling, a value configured by Medium Access Control-Control Element (MAC-CE) indication, a value dynamically indicated by the DCI, or a value determined implicitly, or may be determined by any combination thereof. In the case of the implicit determination, the value of X may be determined based on the number of slots used for the PUSCH transmission or other parameters configured for the terminal.

Next, a description will be given of an exemplary operation of terminal 200 for which Method 1 is applied.

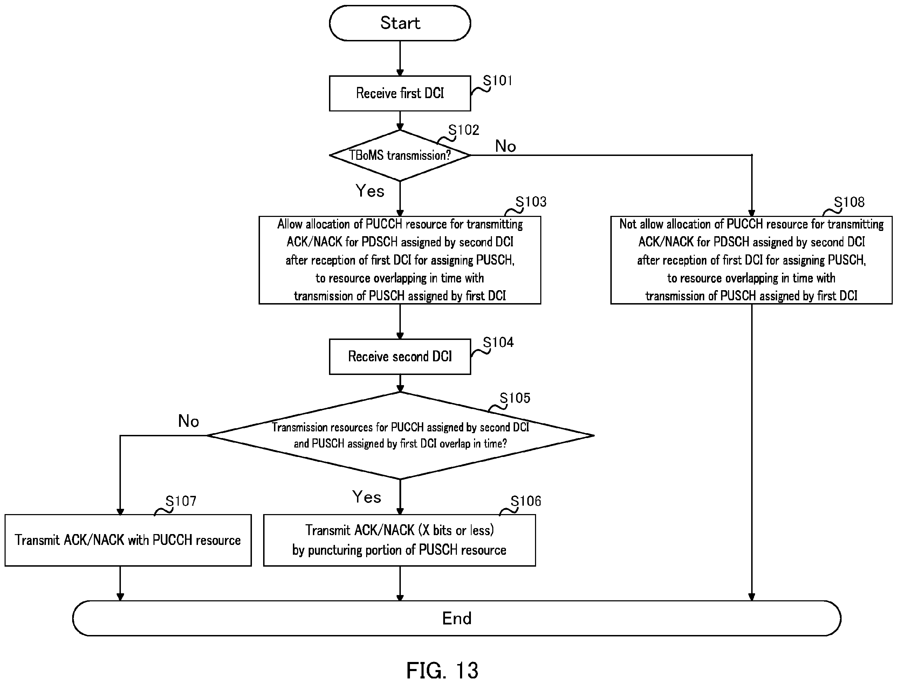

FIG. 13 is a flowchart describing an exemplary operation in Method 1 of Embodiment 3. As illustrated in FIG. 13, for example, after receiving a first DCI for assigning PUSCH from base station 100 (after S101), terminal 200 determines whether TBoMS transmission is applied (S102).

In a case where the TBoMS transmission is not applied (S102: No), terminal 200 does not allow allocation of a PUCCH resource for transmitting ACK/NACK for PDSCH assigned by a second DCI after reception of the first DCI for assigning PUSCH, to a resource overlapping in time with the transmission of PUSCH assigned by the first DCI (S108). For example, terminal 200 may transmit PUCCH with a resource not overlapping with the transmission of PUSCH, by an equivalent operation supported in NR Rel. 15/16.

In a case where the TBoMS repetition transmission is applied (S102: Yes), terminal 200 allows allocation of a PUCCH resource for transmitting ACK/NACK for PDSCH assigned by the second DCI after reception of the first DCI for assigning PUSCH, to a resource overlapping in time with the transmission of PUSCH assigned by the first DCI (S103).

When receiving the second DCI for assigning PDSCH (S104), terminal 200 determines, for example, whether a transmission resource for PUCCH assigned by the second DCI and a transmission resource for PUSCH assigned by the first DCI overlap in time with each other (S105).

In a case where the resources for PUCCH and PUSCH overlap in time with each other (S105: Yes), terminal 200 may, for example, puncture a portion of the resource for PUSCH assigned by the first DCI and then transmit, with the punctured resource, ACK/NACK for PDSCH assigned by the second DCI (S106). In other words, terminal 200 may transmit ACK/NACK for PDSCH assigned by the second DCI, by using (or reallocating) the portion of the resource for PUSCH assigned by the first DCI, as a resource for PUCCH. Note that puncturing may be performed avoiding a resource to which a reference signal (e.g., demodulation reference signal (DMRS)) is mapped in PUSCH, for example.

Here, the number of bits of ACK/NACK (for PDSCH assigned by the second DCI) that can be transmitted by puncturing a portion of the resouce for PUSCH assigned by the first DCI may be limited to, for example, a threshold (e.g., X bits) or less.

When the number of bits of ACK/NACK to be transmitted for PDSCH assigned by the second DCI exceeds X bits, terminal 200 may apply ACK/NACK bundling (e.g., compression of ACK/NACK bits) to decrease the number of ACK/NACK bits, which is actually transmitted, to X (bits) or less. For example, terminal 200 may puncture a portion of the PUSCH resouce assigned by the first DCI, in accordance with the number of ACK/NACK bits that is decreased to X bits or less, thereby transmitting ACK/NACK. Herein, X is a positive integer greater than zero.

A value of X may be determined based on, for example, a required PUSCH coverage performance. The value of X may be, for example, a value predetermined by standards (e.g., X = two bits), a value statically configured by an RRC signaling, a value configured by a Medium Access Control-Control Element (MAC-CE) indication, a value dynamically indicated by the DCI, or a value determined implicitly, or may be determined by any combination thereof. A non-limiting example of an implicit determination of the value of X may include determination of the value of X based on the number of repetitions of PUSCH or determination based on other information or parameters configured for terminal 200.

When the transmission resource for PUCCH assigned by the second DCI and the transmission resource for PUSCH assigned by the first DCI do not overlap in time with each other (S105: No), terminal 200 may transmit, through PUCCH assigned by the second DCI, ACK/NACK for PDSCH assigned by the second DCI, for example (S107).

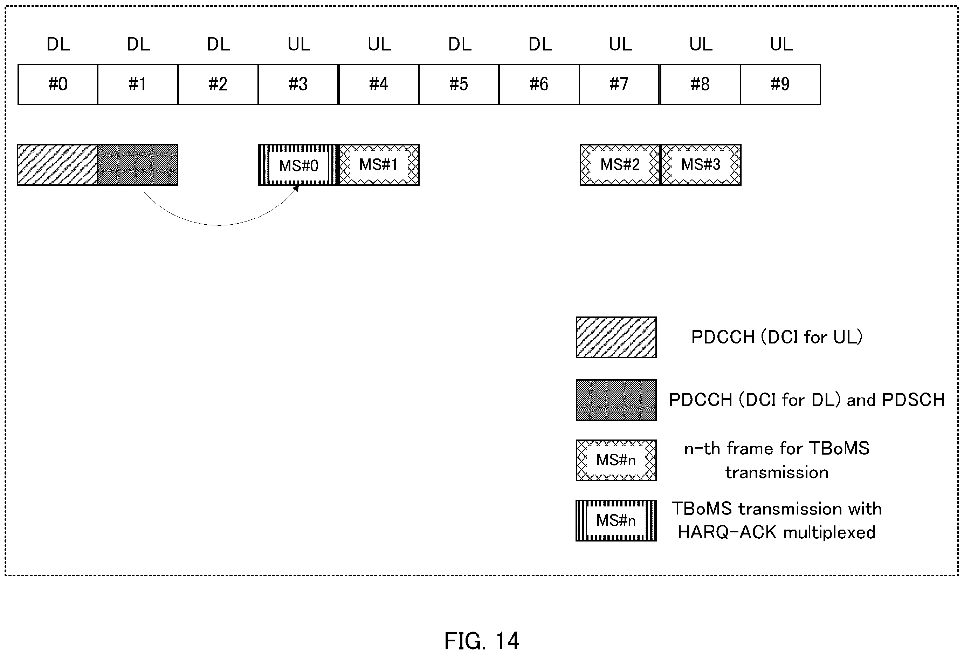

FIG. 14 is a flowchart describing an exemplary operation according to Method 1. As illustrated in FIG. 14, slot #3 is assigned by the first DCI in slot #0 as a timing for transmitting PUSCH. Terminal 200 performs the TBoMS transmission in slots #3, #4, #7, and #8. In the present disclosure, the term "slot" is an example of a time-resource unit and may be a unit referred to by another term.

Meanwhile, the second DCI in slot #1 assigns PDSCH and allocates a PUCCH resource for transmiting ACK/NACK for PDSCH to slot #3. In this case, in slot #3 where transmission resources for PUCCH and PUSCH overlap in time with each other, ACK/NACK for PDSCH assigned by the second DCI is transmitted by puncturing a portion of the PUSCH resource. Herein, the number of ACK/NACK bits to be transmitted is X bits or less.

As described above, according to Method 1, when terminal 200 performs the TBoMS transmission, allocation is allowed of a PUCCH resource for transmitting ACK/NACK for PDSCH assigned by the second DCI after reception of the first DCI for assigning PUSCH, to a resource overlapping in time with the transmission of PUSCH assigned by the first DCI. Therefore, it can be achieved to improve the frequency-utiliztaion efficiency and reduce the latency in the downlink transmission.

In addition, the number of bits of ACK/NACK that is for PDSCH assigned by the second DCI and is transmitted by puncturing a portion of a PUSCH resource assigned by the first DCI is limited to X bits or less, so that deterioration in the coverage performance of PUSCH can be reduced by configuring the value of X appropriately.


(Method 2)

Next, Method 2 of Embodiment 3 will be described.

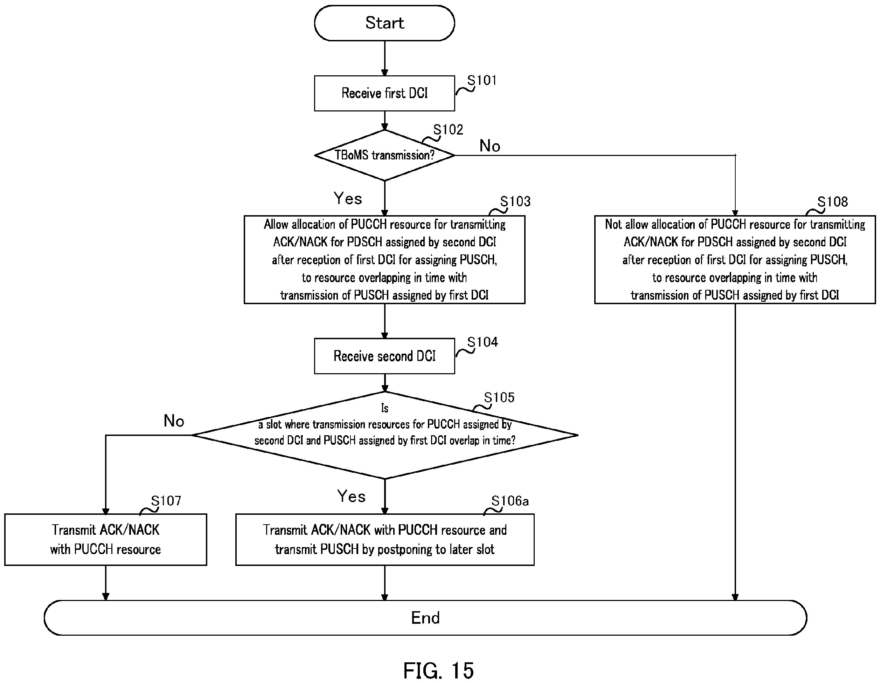

FIG. 15 is a flowchart describing an exemplary operation of terminal 200 for which Method 2 is applied. In FIG. 15, processing of S101 to S105, S107, and S108 excluding S106a may be the same as the processing described in FIG. 13.

In Method 2, as with Embodiment 1, when the TBoMS transmission is applied for terminal 200, it is allowed to allocate a PUCCH resource for transmitting ACK/NACK for PDSCH assigned by the second DCI after reception of the first DCI for assigning PUSCH, to a resource overlapping in time with the transmission of PUSCH assigned by the first DCI.

Additionally, in Method 2, in a slot where the transmission resources for PUCCH and PUSCH overlap in time with each other, ACK/NACK for PDSCH assigned by the second DCI is treated as transmission with a high priority as compared with PUSCH assigned by the first DCI. For example, the slot where the transmission resources for PUCCH and PUSCH overlap in time with each other may be configured as a slot that is not available (unavailable slot) for the PUSCH transmission.

In this case, terminal 200 may transmit ACK/NACK with the PUCCH resource allocated by the second DCI and postpone, later in time, for example, the TBoMS transmission of PUSCH assigned by the first DCI (S106a).

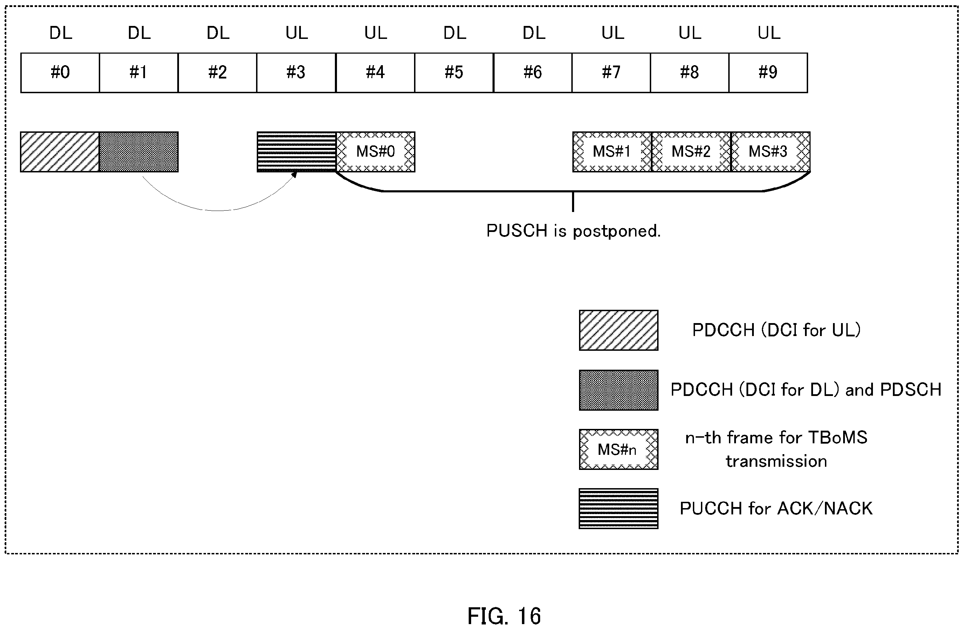

FIG. 16 is a flowchart describing an exemplary operation in Method 2. Slot #3 is assigned by the first DCI in slot #0 as a timing for transmitting PUSCH. Meanwhile, the second DCI in slot #1 assigns PDSCH and allocates a PUCCH resource for transmitting ACK/NACK for PDSCH to slot #3.

In this case, in slot #3 where the transmission resources for PUCCH and PUSCH overlap in time with each other, ACK/NACK is treated as transmission with a high priority as compared to PUSCH, and thus, slot #3 is configured as a slot that is not available (unavailable slot) for the PUSCH transmission. Accordingly, in slot #3, terminal 200 transmits, with a PUCCH resource, ACK/NACK with the high priority as compared to PUSCH.

Incidentally, in the TBoMS transmission, the number of slots is counted based on an uplink slot available for the PUSCH transmission. Therefore, terminal 200 transmits PUSCH in slots #4, #7, #8, and #9, which are uplink slots available for the TBoMS transmission.

As described above, according to Method 2, when terminal 200 performs the TBoMS transmission, allocation is allowed of a PUCCH resource for transmitting ACK/NACK for PDSCH assigned by the second DCI after reception of the first DCI for assigning PUSCH, to a resource overlapping in time with the transmission of PUSCH assigned by the first DCI. Therefore, it can be achieved to improve the frequency-utiliztaion efficiency and reduce the latency in the downlink transmission.

Further, in Method 2, since a slot where the transmission resources for PUCCH and PUSCH overlap in time with each other is configured as a slot that is not available (unavailable slot) for the PUSCH transmission, terminal 200 can perform the TBoMS transmission in a slot located later in time (i.e., postpone). Hence, terminal 200 can perform the PUSCH transmission (TBoMS transmission) without impact such as puncturing of the PUSCH resource by ACK/NACK, thus avoiding or suppressing deterioration in the PUSCH coverage performance.

(Method 3)

Next, Method 3 of Embodiment 3 will be described

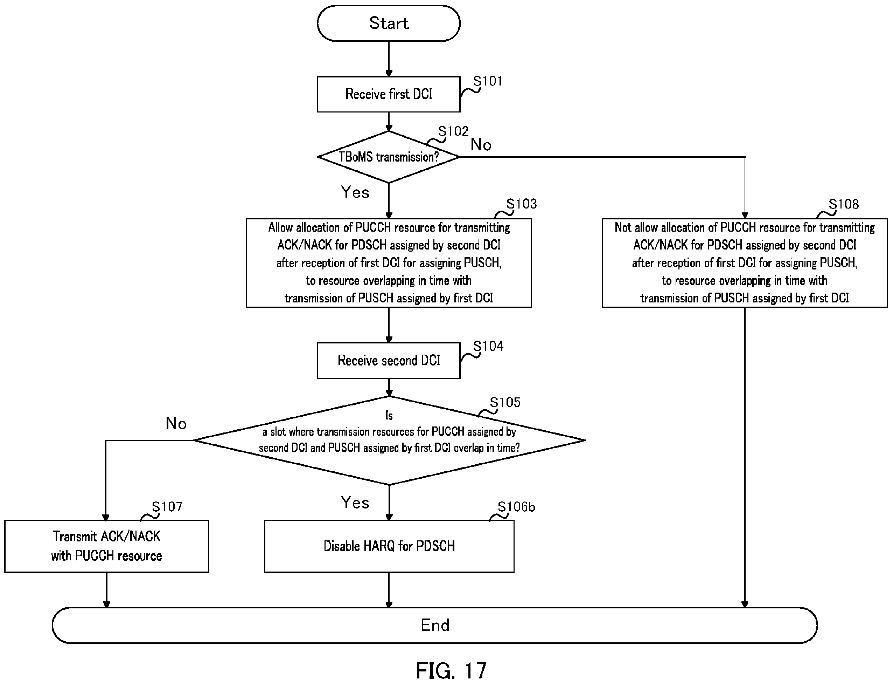

FIG. 17 is a flowchart describing an exemplary operation of terminal 200 for which Method 3 is applied. In FIG. 17, processing of S 101 to S105, S107, and S108 excluding S106b may be the same as the processing described in FIG. 13.

In Method 3, as with Methods 1 and 2, when the TBoMS transmission is applied for terminal 200, it is allowed to allocate a PUCCH resource for transmitting ACK/NACK for PDSCH assigned by the second DCI after reception of the first DCI for assigning PUSCH, to a resource overlapping in time with the transmission of PUSCH assigned by the first DCI.

Further, in Method 3, when a PUCCH resource for transmitting ACK/NACK for PDSCH assigned by the second DCI overlaps in time with the transmission of PUSCH assigned by the first DCI, an HARQ process for PDSCH assigned by the second DCI may be configured to be Disabled (S106b).

In other words, when the PUCCH resource for transmitting ACK/NACK for PDSCH assigned by the second DCI overlaps in time with the transmission of PUSCH assigned by the first DCI, terminal 200 transmits no ACK/NACK for PDSCH assigned by the second DCI.

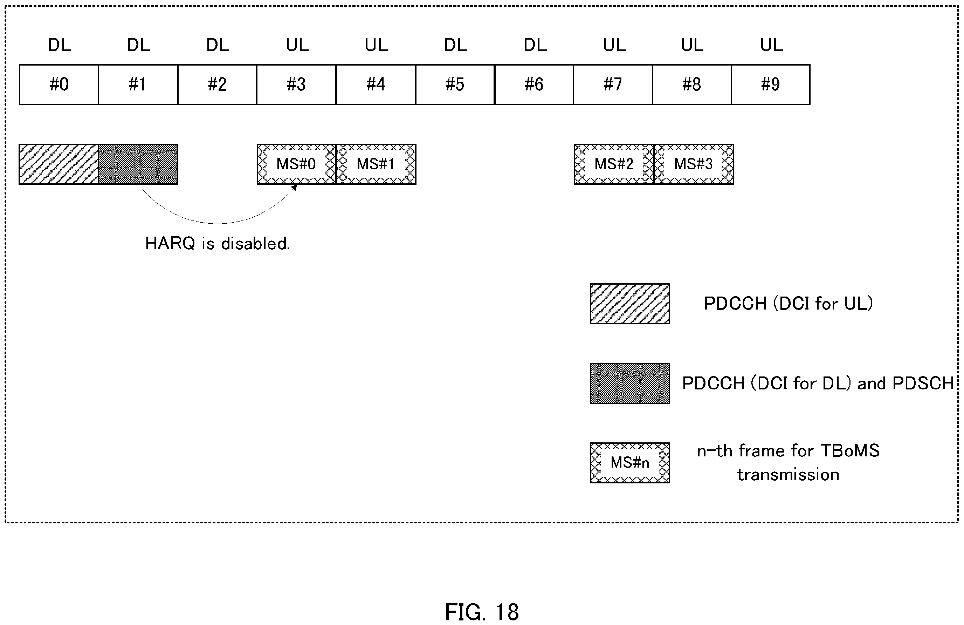

FIG. 18 illustrates an exemplary operation according to Method 3. Slot #3 is assigned by the first DCI in slot #0 as a timing for transmitting PUSCH. Terminal 200 performs the TBoMS transmission in slots #3, #4, #7, and #8.

Meanwhile, the second DCI in slot #1 assigns PDSCH and allocates a PUCCH resource for transmiting ACK/NACK for PDSCH to slot #3. In this case, the HARQ process for PDSCH assigned by the second DCI is disabled in slot #1, and terminal 200 transmits no ACK/NACK in slot #3.

As described above, according to Method 3, as with Methods 1 and 2, when terminal 200 performs the TBoMS transmission, allocation is allowed of a PUCCH resource for transmitting ACK/NACK for PDSCH assigned by the second DCI after reception of the first DCI for assigning PUSCH, to a resource overlapping in time with the transmission of PUSCH assigned by the first DCI. As a result, it can be achieved to improve the frequency-utiliztaion efficiency and reduce the latency in the downlink transmission.

Further, according to Method 3, when a PUCCH resource for transmitting ACK/NACK for PDSCH assigned by the second DCI overlaps in time with the transmission of PUSCH assigned by the first DCI, an HARQ process for PDSCH assigned by the second DCI is configured to be Disabled. Therefore, terminal 200 can perform the PUSCH transmission (TBoMS transmission) without impact of puncturing of the PUSCH resource by ACK/NACK. As a result, it is possible to avoid or suppress deterioration in the PUSCH coverage performance.

Further, from the viewpoint of base station 100, for example, PDSCH can be assigned (i.e., scheduled) without waiting for reception of an HARQ-ACK feedback from terminal 200, so that the degree of flexibility of scheduling can be improved.

In this case, disabling the HARQ process may cause deterioration in retransmission efficiency in the downlink transmission. However, for example, the deterioration in the retransmission efficiency can be reduced by applying processing of configuring the reliability of PDSCH appropriately, such as transmission of PDSCH for which the HARQ process is disabled with an increased reliability for the initial transmission (e.g., with adjustment of Modulation and Coding Scheme (MCS) and/or allocation-resource amount).

In the TBoMS transmission, when <RM-Approach 1> in Embodiment 1 is used, the number of bits corresponding to a resource amount of the number of slots (integer of two or more) used for the PUSCH transmission is read out from a predetermined RV position and then mapped to a PUSCH resouce over multiple slots. The coverage of PUSCH may be improved by setting a unit of this TBoMS transmission composed of multiple slots as a single TBoMS transimission unit and by repeatedly transmitting (performing repetition of) the single TBoMS transmission unit. For example, in Embodiment 3, one resource (slot) for the TBoMS transmission may be considered as a single TBoMS transmission unit. For example, in FIG. 10, each of the four TBoMS transmission slots may be considered as a single TBoMS transmission unit. Alternatively, when a unit of this TBoMS transmission composed of multiple slots is set as a single TBoMS transmission unit and the single TBoMS transmission unit is repeatedly transmitted (repetition), Embodiment 3 may be applied by replacing a slot unit with a single TBoMS transmission unit.

Besides, an embodiment to be applied may be varied depending on which slot in the TBoMS transmission collides with a PUCCH resouce for transmitting ACK/NACK for PDSCH assigned by the first DCI. For example, Embodiment 1 may be applied in the case of collision with a start slot of TBoMS, whereas Embodiment 2 may be applied in the case of collision with a slot different from the start slot of TBoMS. Further, Embodiment 3 may be applied in the case of collision with a start slot of TBoMS, whereas Embodiment 2 may be applied in the case of collision with a slot different from the start slot of TBoMS.

When PUCCH collides in the n-th slot in the TBoMS transmission, a method to be applied may be varied depending on whether the UCI multiplexing has already been determined in a TBoMS transmission slot before the n-th slot. For example, in a situation where PUCCH collides in the n-th slot in the TBoMS transmission, Method 2 or Method 3 may be applied when the UCI multiplexing has already been determined in a TBoMS transmission slot before the n-th slot, whereas Method 1 may be applied when the UCI is not multiplexed in the TBoMS transmission slot before the n-th slot. Thus, it is possible to determine a UCI resource amount and whether to apply the UCI multiplexing in the TBoMS transmission, taking into account the state of UCI multiplexing in a forward slot, thereby suppressing deterioration of the transmission quality of PUSCH caused by an increase in the number of slots for the UCI multiplexing in the TBoMS transmission.

(Variation 1)

In the present Variation 1 of Emcodiment 3, when the TBoMS transmission is applied for terminal 200, it is allowed to allocate a PUCCH resource for transmitting ACK/NACK for PDSCH assigned by the second DCI after reception of the first DCI for assigning PUSCH, to a resource overlapping in time with the transmission of PUSCH assigned by the first DCI.

Further, in the present variation, when a PUCCH resource for transmitting ACK/NACK for PDSCH assigned by the second DCI overlaps in time with the transmission of PUSCH assigned by the first DCI, ACK skipping may be applied to an HARQ process for PDSCH assigned by the second DCI.

When the ACK skipping is applied to the HARQ process, terminal 200 transmits no ACK/NACK for PDSCH as long as a decoding result for PDSCH is ACK. Probability that the decoding result for PDSCH is ACK tends to be higher than probability that it is NACK; thus, skipping of an ACK transmission can reduce overhead of PUCCH and also reduce processing load of terminal 200, for example.

The present variation may be understood to be similar to application of Method 3 when a decoding result for PDSCH assigned by the second DCI is ACK. On the other hand, when the decoding result for PDSCH assigned by the second DCI is NACK, Method 1 or Method 2 may be applied.

According to the present variation, the puncturing of the PUSCH resource or the postponement (postpone) of the PUSCH transmission is applied when a decoding result for PDSCH assigned by the second DCI is NACK, thus reducing the impact on the TBoMS transmission.

(Variation 2)

In Methods 1, 2, and 3 described above, when the TBoMS transmission of PUSCH is applied for terminal 200, it has been allowed to allocate a PUCCH resource for transmitting ACK/NACK for PDSCH assigned by the second DCI after reception of the first DCI for assigning PUSCH, to a resource overlapping in time with the transmission of PUSCH assigned by the first DCI.

Here, the slot where transmission resources for PUCCH and PUSCH overlap in time with each other may be any slot in the TBoMS transmsission assigned by the first DCI. For example, the slot where the transmission resources for PUCCH and PUSCH overlap in time with each other may be a start slot in the TBoMS transmsission as illustrated in FIGS. 14, 16, and 18 or my be a different slot from the start slot.

Incidentally, an embodiment to be applied may be varied among Methods 1, 2, and 3, depending on which slot in the TBoMS transmsission overlaps (or collides) with a PUCCH resouce for transmitting ACK/NACK for PDSCH assigned by the first DCI.

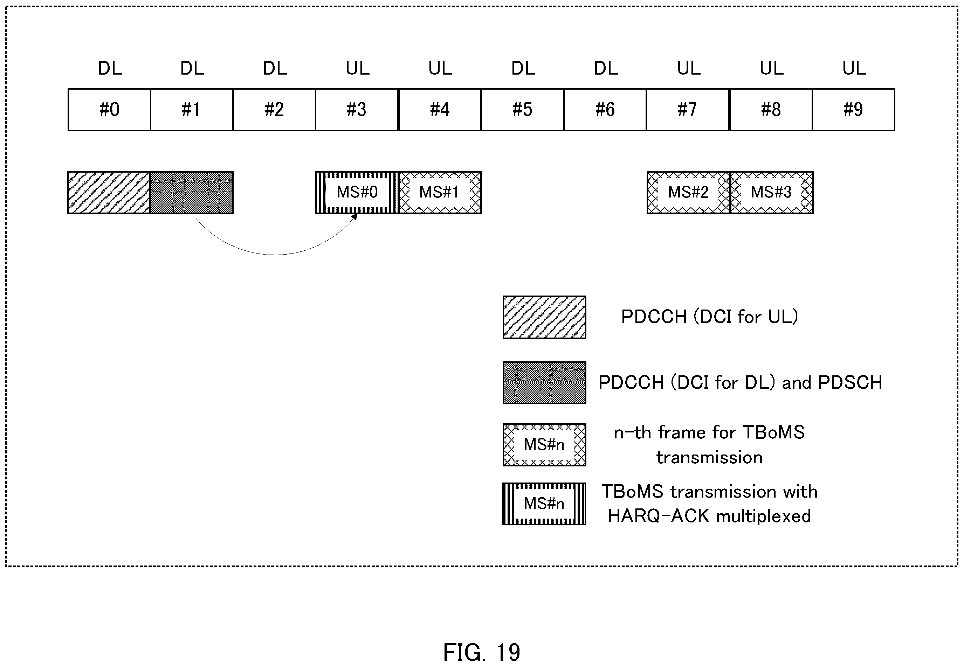

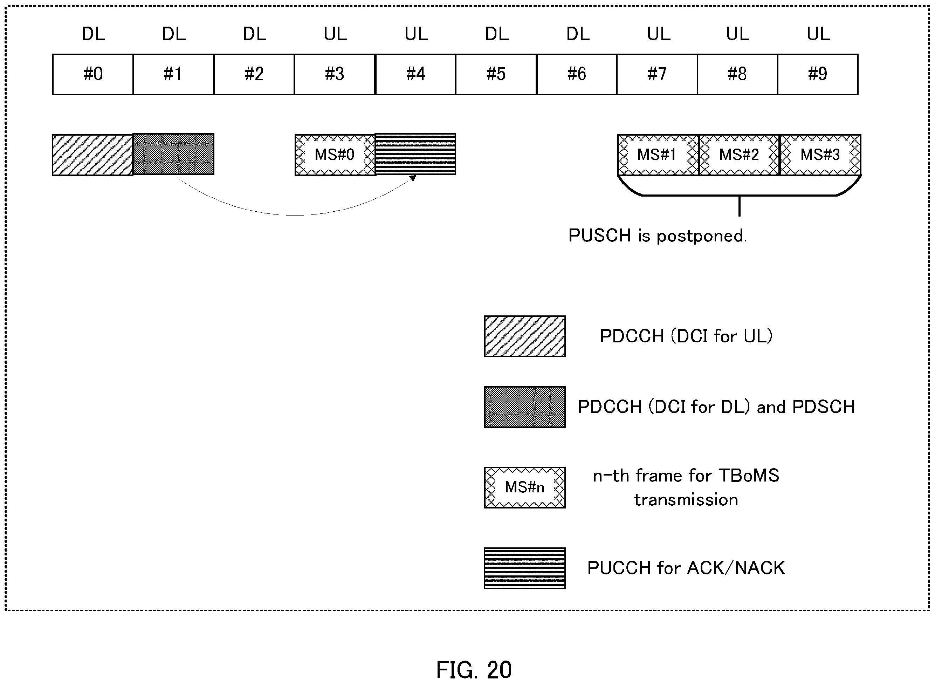

As a non-limiting example, Method 1 may be applied when a PUCCH resource for transmitting ACK/NACK collides with a start slot (MS #0) for the TBoMS transmsission, as illustrated in FIG. 19, whereas Method 2 may be applied when the PUCCH resource collides with a slot different from the start slot (e.g., MS #1) for the TBoMS transmsission, as illustrated in FIG. 20.

Moreover, as a non-limiting example, Method 3 may be applied when a PUCCH resource for transmitting ACK/NACK collides with a start slot for the TBoMS transmission, whereas Method 2 may be applied when the PUCCH resource for transmitting ACK/NACK collides with a slot different from the start slot for the TBoMS transmission.

According to the present variation, for example, appropriate operations or processes corresponding to the terminal capability can be applied for terminal 200, based on a time required for a terminal operation (or process) such as the puncturing, the postponement, or the HARQ disable.

(Variation 3)

In NR Rel. 16, a priority can be configured for an uplink transmission such as PUSCH or ACK/NACK. For example, in NR Rel. 16, the number of priority levels is two, and thus, an uplink transmission for which priority index 0 is configured has a low priority, whereas an uplink transmission for which priority index 1 is configured has a high priority.

In the present variation, among Methods 1, 2, and 3, a method to be applied may be varied depending on a priority of ACK/NACK or a priority of PUSCH, or both of them.

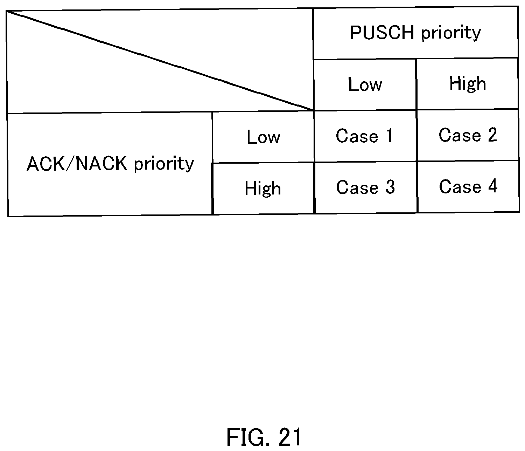

FIG. 21 illustrates an example of classification in accordance with the priority of ACK/NACK and the priority of PUSCH. For example, Method 1 may be applied to Case 1 or Case 4 (ACK/NACK priority and PUSCH priority is the same), Method 3 may be applied to Case 2 (PUSCH priority is higher than ACK/NACK priority), and Method 2 may be applied to Case 3 (ACK/NACK priority is higher than PUSCH priority).

A combination of embodiments applied to the respective Cases is not limited to the above. For example, Method 2 or 3 may be applied to Case 1 or Case 4.

According to the present variation, when ACK/NACK has a high priority, Method 2 is applied to transmit ACK/NACK with priority and to postpone PUSCH, thereby making it possible to compensate for the PUSCH coverage. Meanwhile, when PUSCH has a high priority, Method 3 is applied to transmit PUSCH with the resource allocated by the DCI, thereby making it possible to compensate for the coverage and the latency. In the manner described above, an appropriate uplink transmission can be achieved based on the priority of ACK/NACK or PUSCH.

(Variation 4)

When PUCCH collides in the n-th slot in the TBoMS transmission, a method to be applied may be varied depending on whether a UCI has already been multiplexed in a TBoMS transmission slot before the n-th slot. For example, in a situation where PUCCH collides in the n-th slot in the TBoMS transmission and the UCI multiplexing has already been determined in a TBoMS transmission slot before the n-th slot, Method 2 or Method 3 may be applied in the n-th slot. For example, in a situation where PUCCH collides in the n-th slot in the TBoMS transmission and no UCI multiplexing has been determined in a TBoMS transmission slot before the n-th slot, Method 1 may be applied in the n-th slot.

Thus, it is possible to determine a UCI multiplexing resource amount and whether to apply the UCI multiplexing in the TBoMS transmission, taking into account the state of UCI multiplexing in a slot before thr slot where PUCCH and PUSCH collide with each other, thereby suppressing deterioration of the transmission quality of PUSCH caused by an increase in the number of slots for the UCI multiplexing in the TBoMS transmission.

(Other Variation 1)

In Embodiment 3, when the TBoMS transmission of PUSCH is applied to terminal 200, it has been allowed to allocate a PUCCH resource for transmitting ACK/NACK for PDSCH assigned by the second DCI after reception of the first DCI for assigning PUSCH, to a resource overlapping in time with the transmission of PUSCH assigned by the first DCI, and thus, any of the above-mentioned methods and variations has been applied.

Here, for example, the above-mentioned methods or variations may be applied when the number of resources (the number of slots) for the TBoMS transmission is greater than a threshold. Besides, a method to be applied may be varied depending on the number of times of PUSCH repetition.

Moreover, a method or variation to be applied may be varied depending on the number of ACK/NACK bits. Further, a method or variation to be applied may be varied depending on whether the number of ACK/NACK bits is equal to or less than a threshold (e.g., X bits mentioned above) or whether the number of ACK/NACK bits can be compressed to the threshold or less.

The number of ACK/NACK bits may be, for example, the number of bits of ACK/NACK for PDSCH assigned by the second DCI, or the total number of bits of ACK/NACK for PDSCH assigned by the second DCI and ACK/NACK for PDSCH assigned by a DCI prior to the reception of the first DCI.

In the former example, it is unnecessary to take into account the number of bits of ACK/NACK for PDSCH assigned by a DCI that has been received earlier than the second DCI, thus suppressing a possible constraint on the assigment of ACK/NACK to a PUCCH resource. In other words, it is possible to improve a degree of flexibility of the ACK/NACK assigment to the PUCCH resource.

The latter example is useful in such a case where ACK/NACK for PDSCH assigned by the plurality of DCIs is transmitted through PUCCH by multiplexing with a UCI, so that, for example, puncturing of a PUSCH resource can be reduced, thereby avoiding or suppresing deterioration in the PUSCH coverage performance.

Further, in Method 1, the number of ACK/NACK bits may be the number of bits before the ACK/NACK bundling or may be the number of bits after the ACK/NACK bundling.

(Other Variation 2)

In Embodiments 1, 2, and 3 described above, when the TBoMS transmission of PUSCH is applied to terminal 200, it has been allowed to allocate a PUCCH resource for transmitting ACK/NACK for PDSCH assigned by the second DCI after reception of the first DCI for assigning PUSCH, to a resource overlapping in time with the transmission of PUSCH assigned by the first DCI.

Here, the slot where transmission resources for PUCCH and PUSCH overlap in time with each other may be any slot in the TBoMS transmission assigned by the first DCI. For example, the slot where transmission resources for PUCCH and PUSCH overlap in time with each other may be a start slot in the TBoMS transmission or may be a different slot from the start slot.

Incidentally, an embodiment to be applied may be varied among Embodiments 1, 2, and 3, depending on which slot in the TBoMS transmission overlaps (or collides) with the PUCCH resouce for transmitting ACK/NACK for PDSCH assigned by the first DCI.

As a non-limiting example, Embodiment 1 may be applied when a PUCCH resource for transmitting ACK/NACK collides with the start slot, whereas Embodiment 2 may be applied when the PUCCH resource collides with a slot different from the start slot in the TBoMS transmission.

Moreover, as a non-limiting example, Embodiment 3 may be applied when a PUCCH resource for transmitting ACK/NACK collides with a start slot in the TBoMS transmission, whereas Embodiment 2 may be applied when the PUCCH resource for transmitting ACK/NACK collides with a slot different from the start slot in the TBoMS transmission.

According to the present variation, for example, appropriate operations or processes corresponding to the terminal capability can be applied for terminal 200, based on a time required for a terminal operation (or process) such as the puncturing, the postponement, or the HARQ disable.

Hereinafter, descriptions will be given of complements to the present disclosure that includes the above-described embodiments and variations.

(Complement 1)

In the TBoMS transmission, the number of repetition slots is counted based on an uplink slot that is available for the PUSCH transmission, and any of the determination methods described below may be applied to determination of the uplink slot available for the PUSCH transmission.

<Determination Method 1>

The determination of an uplink slot available for the PUSCH transmission may depend on the RRC signaling. For example, the RRC signaling may include a TDD uplink/downlink slot format indication (e.g., semi-static slot format indicator (SFI)) and the like.

<Determination Method 2>

The determination of an uplink slot available for the PUSCH transmission may depend on, for example, the RRC signaling and indication by a DCI for allocating a resource for the TBoMS transmission. For example, the RRC signaling may include the TDD uplink/downlink slot format indication (e.g., semi-static SFI) and the like. The DCI for allocating the resource for the TBoMS transmission may either directly (or explicitly) indicate a slot that is not available (unavailable slot) for the PUSCH transmission or indicate whether the unavailable uplink slot/symbol (invalid UL slot/symbol) that has been indicated by the RRC signaling is disabled or enabled.

<Determination Method 3>

The determination of an uplink slot available for the PUSCH transmission may depend on, for example, the RRC signaling, indication by the DCI for allocating a resource for the TBoMS transmission or by a dynamic SFI. For example, the RRC signaling may include the TDD uplink/downlink slot format indication (e.g., semi-static SFI) and the like. The DCI for allocating the resource for the TBoMS transmission may either directly (or explicitly) indicate a slot that is not available (unavailable slot) for the PUSCH transmission or indicate whether the unavailable uplink slot/symbol (invalid UL slot/symbol) that has been indicated by the RRC signaling is disabled or enabled. The dynamic SFI may include, for example, the TDD uplink/downlink slot format indication (dynamic SFI) indicated by Group-common PDCCH.

A relation between the determination methods of uplink slots available for the PUSCH transmission and the respective methods of Embodiment 3 is described as follows, for example.

Method 1 may be applied to any of Determination Method 1, Determination Method 2, and Determination Method 3. Method 2 is preferably applied in combination with Determination Method 3. The reason is that, for example, the second DCI after the reception of the first DCI for assigning PUSCH can be processed as indication similar to the Dynamic SFI in Determination Method 3. However, Method 2 may be applied to other determination methods. Method 3 may be applied to any of Determination Method 1, Determination Method 2, and Determination Method 3.

(Complement 2)

In the above-mentioned embodiments or variations, a description has been given with an example of application to the TBoMS transmission of PUSCH, but the present disclosure is not limited to this example. For example, the present disclosure may be applied to PUSCH repetition. In one example, PUSCH repetition Type A enhancement or PUSCH repetition Type B may be applied to a PUSCH repetition method.

Alternatively, the above-mentioned embodiments or variations may be applied only to a particular TBoMS transmission. Additionally, an embodiment or variation to be applied may be varied depending on a TBoMS transmission method.

(Complement 3)

In the above-mentioned embodiments or variations, a description has been given of an application example to the PUCCH transmission in units of slots, but the transmission unit of PUCCH is not limited to slots. For example, the transmission unit of PUCCH may be subslots introduced in NR Rel. 16. In the PUCCH transmission in units of subslots, the number of symbols included in each subslot is fewer than that in a slot. By way of example, when the number of symbols included in a slot is 14 (or 12), the number of symbols included in a subslot may be 2 or 7 (or 6).

Further, depending on whether the PUCCH transmission unit is slots or subslots, application of the embodiments or variations may be controlled (e.g., enabled or disabled). Incidentally, depending on whether the PUCCH transmission unit is slots or subslots, an embodiment or variation to be applied may be varied.

(Complement 4)

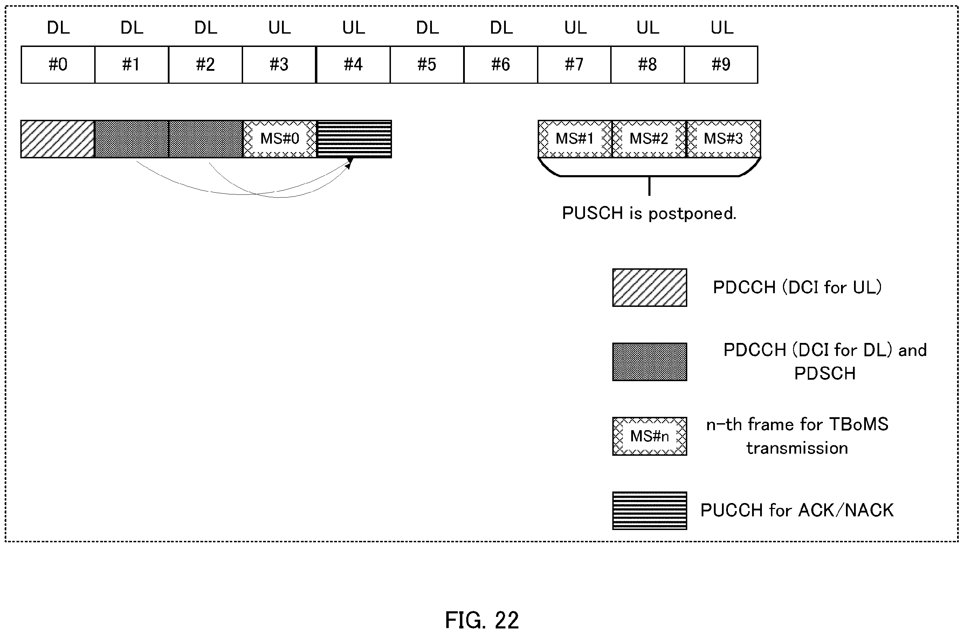

In the above-mentioned Embodiment 3 or variations, a case has been described where the number of the second DCIs after reception of the first DCI for assigning PUSCH is one. For example, as illustrated in FIG. 22, terminal 200 may receive a plurality of DCIs for assigning PUCCH to a resource overlapping in time with the transmission of PUSCH assigned by the first DCI. In this situatuion, for example, terminal 200 may replace (or read) the last received DCI of the plurality of DCIs with (as) the second DCI and then apply the above-mentioned embodiments or variations.

(Complement 5)

In the above-mentioned embodiments or variations, PUCCH for transmitting ACK/NACK has been described with an example of transmission in a single slot, but PUCCH may be transmitted using a plurality of slots. For example, Repetition may also be applied to PUCCH.

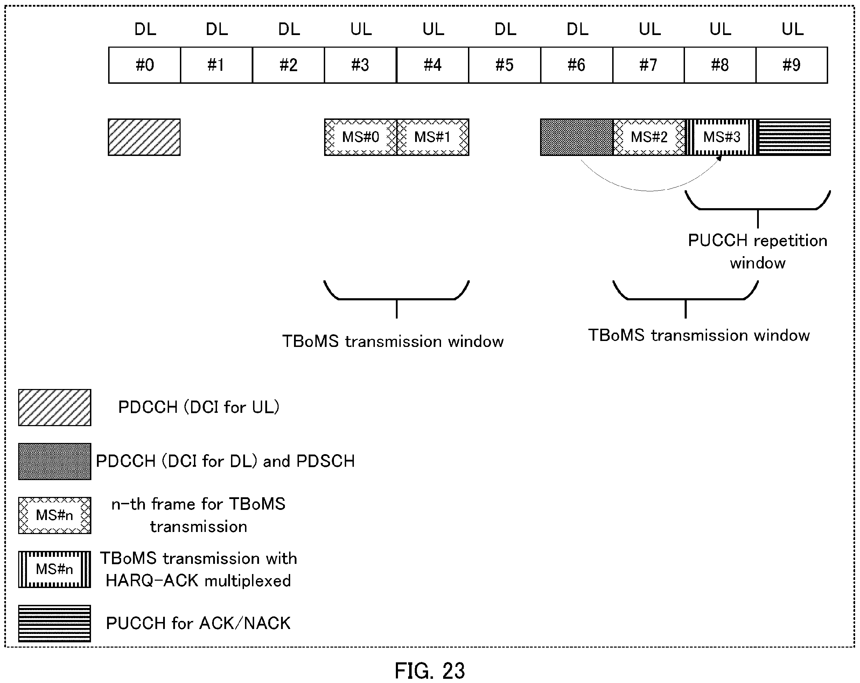

In this case, in Method 1, for example, some of slots for the TBoMS transmission may collide with PUSCH. In a slot where a PUCCH resource and a PUSCH resource collide with each other (e.g., slot #8 illustrated in FIG. 23), terminal 200 may transmit ACK/NACK by puncturing a portion of the PUSCH resource, as with Embodiment 1. On the other hand, in a slot where the PUCCH resource and the PUSCH resource do not collide with each other (e.g., slot #9 illustrated in FIG. 19), terminal 200 may transmit ACK/NACK by using PUCCH.

The number of ACK/NACK bits to be transmitted may be, for example, the same between slots for the TBoMS transmission or may vary between the slots for the TBoMS transmission. A non-limiting example of the former includes application of the limination with X bits (or application of ACK/NACK bundling) in Method 1 of Embodiment 3 regardless of whether the PUCCH resource and the PUSCH resource collide with each other. A non-limiting example of the latter includes application of the limination with X bits (or application of ACK/NACK bundling) as in Method 1 of Embodiment 3 in a case where the PUCCH resource and the PUSCH resource collide with each other, while not applying the limination with X bits (or not applying ACK/NACK bundling) to a slot where the PUCCH resource and the PUSCH resource do not collide with each other.

(Complement 6)

In the above-mentioned embodiments or variations, the transmission of ACK/NACK has been described as an example, but the present disclosure may be applied to other UCIs, without limination to ACK/NACK. For example, in NR Rel. 17, it has been studied to trigger a PUCCH transmission of an Aperiodic CSI by a DCI for assigning a downlink PDSCH. The UCI transmitted using PUCCH assigned by the second DCI may be replaced with the Aperiodic CSI from ACK/NACK.

(Complement 7)

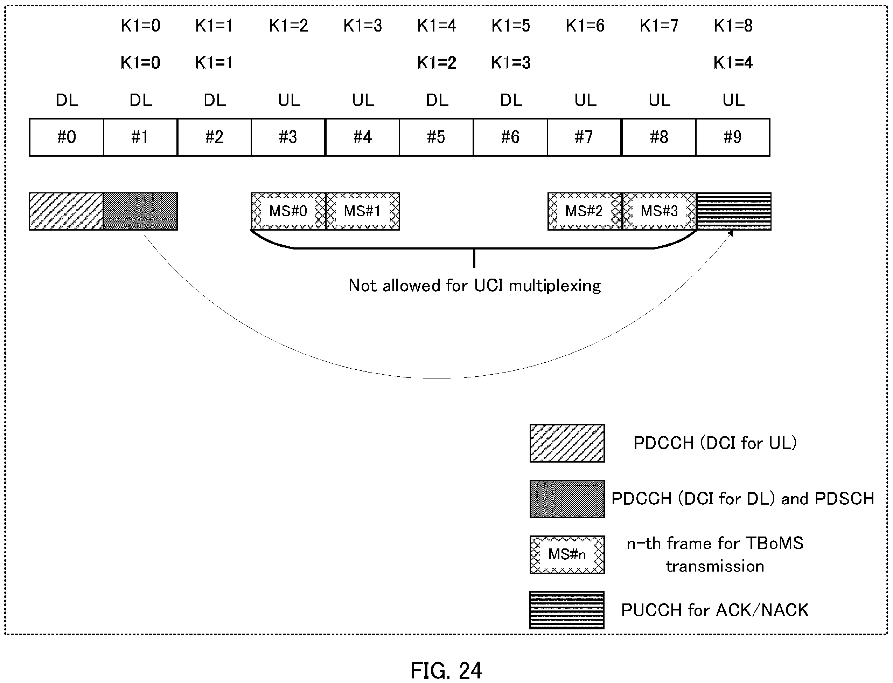

In Embodiment 3, when the TBoMS transmission of PUSCH is applied for terminal 200, it has been allowed to allocate a PUCCH resource for transmitting ACK/NACK for PDSCH assigned by the second DCI after reception of the first DCI for assigning PUSCH, to a resource overlapping in time with the transmission of PUSCH assigned by the first DCI.
Meanwhile, when the TBoMS transmission of PUSCH is applied for terminal 200, it may not be allowed, as in NR Rel. 15/16, to allocate a PUCCH resource for transmitting ACK/NACK for PDSCH assigned by the second DCI after reception of the first DCI for assigning PUSCH, to a resource overlapping in time with the transmission of PUSCH assigned by the first DCI. Further, as noted above, the aforementioned embodiments or variations may not be applied depending on conditions.
In this situation, terminal 200 transmits ACK/NACK for PDSCH in an uplink slot after completion of the TBoMS transmission, for example. Control information included in the DCI for assigning PDSCH may include information on the timing of how many slots later PUCCH is transmitted since the slot in which PDSCH has been received (K1 or PDSCH-to-HARQ_feedback timing indication).
Here, the information on the timing that can be indicated (or instructed) by the control information to terminal 200 (e.g., range of timing) is limited, and thus, when the TBoMS transmission is applied for terminal 200, extention of the range of the indicatable timing has been discussed.
For example, when the TBoMS transmission of PUSCH is applied for terminal 200 while it is not allowed to allocate a PUCCH resource for transmitting ACK/NACK for PDSCH assigned by the second DCI after reception of the first DCI for assigning PUSCH, to a resource overlapping in time with the transmission of PUSCH assigned by the first DCI, the determination (calculation) of K1 need not include a slot for the TBoMS transmission.
For example, as illustrated in FIG. 24, when the first DCI in slot #0 assigns the slot #3 as a timing for transmitting PUSCH and a TBoMS transmission where the number of repetition slots is four, terminal 200 transmits PUSCH in slots #3, #4, #7, and #8. FIG. 20 also illustrates an example in which the second DCI in slot #1 assigns PDSCH and allocates a PUCCH resource for transmitting ACK/NACK for PDSCH to slot #9.
In this situation, in the determination method of K1 based on the slot unit, the timing of slot #9 when terminal 200 transmits PUCCH can be indicated by K1 = 8, but the timing of slot #9 can be indicated by K1 = 4 as long as a TBoMS transmission slot is not used to determine K1. Accordingly, it is possible to extend the range of PUCCU transmission timing indicatble by K1, and thus, for example, the occurence of PDSCH assignment blocking can be reduced, thereby avoiding or suppressing possible reduction in the frequency-utiliztaion efficiency in downlink.
Note that the above-described determination method of K1 may be applied depending on a TBoMS transmission method or may be applied depending on whether the PUCCH transmission unit is slots or subslots or in accordance with a priority of ACK/NACK. In addition, the above-described determination method of K1 may be applied in combination with the aforementioned embodiments or variations.

(Complement 8)

Information indicating whether terminal 200 supports the functions, operations, or processes that have been described in the above-mentioned embodiments, variations, and complements may be transmitted (or indicated) from terminal 200 to base station 100, as capability information or a capability parameter for terminal 200, for example.
The capacity information may include information elements (IEs) that individually indicate whether terminal 200 supports at least one of the functions, operations, or processes that have been described in the above-mentioned embodiments, variations, and complements. Alternatively, the capability information may include information elements that indicate whether terminal 200 supports a combination of any two or more of the functions, operations, or processes that have been described in the above-mentioned embodiments, variations, and complements.

Base station 100 may determine (or decide or assume), for example, based on the capability information received from terminal 200, the functions, operations, or processes that are supported (or not supported) by terminal 200, which is a transmission source of the capability information. Base station 100 may execute operations, processes, or control in accordance with a determination result based on the capability information. By way of example, base station 100 may control, based on the capability information received from terminal 200, allocation (i.e., scheduling) of at least one of a downlink resource such as PDCCH or PDSCH and an uplink resource such as PUCCH or PUSCH.

Note that in a case where terminal 200 does not entirely support the functions, operations, or processes described in the above-mentioned embodiments, variations, and complements, such an unsupported part of the functions, operations, or processes may be interpreted as a limitation in terminal 200. For example, information or a request relating to such limitation may be indicated to base station 100.

The information on the capability or the limitation of terminal 200 may be defined by standards or may be implicitly indicated to base station 100 in association with information known in base station 100 or information to be transmitted to base station 100, for example.

The embodiments, the variations, and the complements according to a non-limiting and exemplary embodiment of the present disclosure have been each described, thus far.

Incidentally, in the present disclosure, ACK/NACK may be referred to as, for example, HARQ-ACK or HARQ-Feedback information. Repetition may also be referred to as, for example, slot aggregation, slot bundling, TTI aggregation, or TTI bundling.

The present disclosure may be applied to, for example, communication between terminals, such as a sidelink communication.

Further, in the present disclosure, a downlink control channel, a downlink data channel, an uplink control channel, and an uplink data channel are not limited to PDCCH, PDSCH, PUCCH, and PUSCH, respectively, and may be control channels having other names.

Further, in the present disclosure, the RRC signaling is assumed for the higher layer signaling, but the signaling may be replaced with Medium Access Control(MAC) signaling and indication by a DCI that is physical layer signaling.

(Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

(Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, one terminal may operate as equivalent to a base station. The base station may be a relay apparatus that relays communication between a higher node and a terminal. The base station may be a roadside unit as well.

(Uplink/Downlink/Sidelink)

The present disclosure may be applied to any of uplink, downlink and sidelink. The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

(Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSB CH.

(Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

(Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

(Frequency Bands)

The present disclosure may be applied to any of a licensed band and an unlicensed band.

(Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.
In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

(Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

<5G NR System Architecture and Protocol Stack>

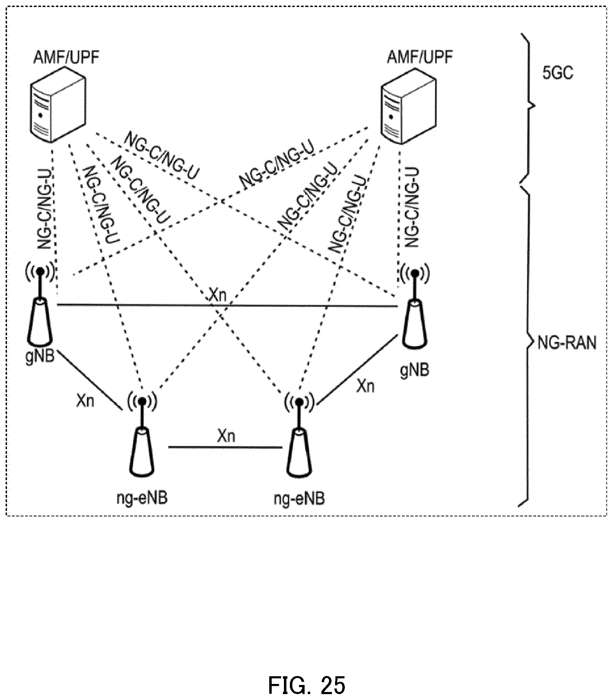

3GPP has been working on the next release for the 5th generation cellular technology (simply called "5G"), including the development of a new radio access technology (NR) operating in frequencies ranging up to 100 GHz. The first version of the 5G standard was completed at the end of 2017, which allows proceeding to 5G NR standard-compliant trials and commercial deployments of terminals (e.g., smartphones).
For example, the overall system architecture assumes an NG-RAN (Next Generation-Radio Access Network) that includes gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 25 (see e.g., 3GPP TS 38.300 v15.6.0, section 4).

The user plane protocol stack for NR (see e.g., 3GPP TS 38.300, section 4.4.1) includes the PDCP (Packet Data Convergence Protocol, see clause 6.4 of TS 38.300), RLC (Radio Link Control, see clause 6.3 of TS 38.300) and MAC (Medium Access Control, see clause 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., clause 6.5 of 3GPP TS 38.300). A control plane protocol stack is also defined for NR (see for instance TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For instance, the Medium Access Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include a Physical Random Access Channel (PRACH), a Physical Uplink Shared Channel (PUSCH), and a Physical Uplink Control Channel (PUCCH) as uplink physical channels, and a Physical Downlink Shared Channel (PDSCH), a Physical Downlink Control Channel (PDCCH), and a Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates on the order of three times what is offered by IMT-Advanced. On the other hand, in case of URLLC, the tighter requirements are put on ultra-low latency (0.5 ms for UL and DL each for user plane latency) and high reliability (1-10-5 within 1 ms). Finally, mMTC may preferably require high connection density (1,000,000 devices/km$^2$ in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacings of 15 kHz, 30 kHz, and 60 kHz... are being considered at the moment. The symbol duration Tu and the subcarrier spacing Δf are directly related through the formula Δf = 1/Tu. In a similar manner as in LTE systems, the term "resource element" can be used to denote a minimum resource unit being composed of one subcarrier for the length of one OFDM/SC-FDMA symbol.

In the new radio system 5G-NR for each numerology and each carrier, resource grids of subcarriers and OFDM symbols are defined respectively for uplink and downlink. Each element in the resource grids is called a resource element and is identified based on the frequency index in the frequency domain and the symbol position in the time domain (see 3GPP TS 38.211 v15.6.0).

<Functional Split between NG-RAN and 5GC in 5G NR>

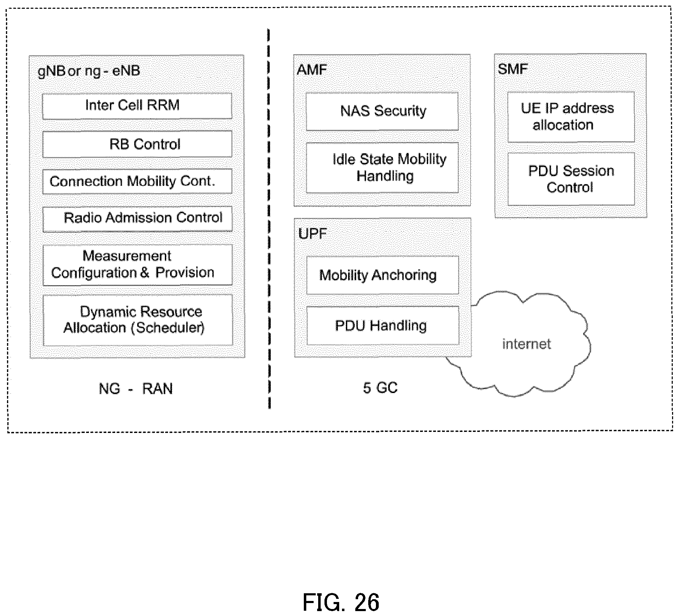

FIG. 26 illustrates the functional split between the NG-RAN and the 5GC. A logical node of the NG-RAN is gNB or ng-eNB. The 5GC includes logical nodes AMF, UPF, and SMF.

For example, gNB and ng-eNB hosts the following main functions:

- Radio Resource Management functions such as Radio Bearer Control, Radio Admission Control, Connection Mobility Control, and dynamic allocation (scheduling) of both uplink and downlink resources to a UE;
- IP header compression, encryption, and integrity protection of data;
- Selection of an AMF during UE attachment in such a case when no routing to an AMF can be determined from the information provided by the UE;
- Routing user plane data towards the UPF;

- Routing control plane information towards the AMF;
- Connection setup and release;
- Scheduling and transmission of paging messages;
- Scheduling and transmission of system broadcast information (originated from the AMF or an operation management maintenance function (OAM: Operation, Admission, Maintenance));
- Measurement and measurement reporting configuration for mobility and scheduling;
- Transport level packet marking in the uplink;
- Session management;
- Support of network slicing;
- QoS flow management and mapping to data radio bearers;
- Support of UEs in the RRC_INACTIVE state;
- Distribution function for NAS messages;
- Radio access network sharing;
- Dual connectivity; and
- Tight interworking between NR and E-UTRA.

The Access and Mobility Management Function (AMF) hosts the following main functions:

- Function of Non-Access Stratum (NAS) signaling termination;
- NAS signaling security;
- Access Stratum (AS) security control;
- Inter-Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

In addition, the User Plane Function (UPF) hosts the following main functions:

- Anchor Point for intra-/inter-RAT mobility (when applicable);
- External Protocol Data Unit (PDU) session point for interconnection to a data network;
- Packet routing and forwarding;
- Packet inspection and a user plane part of Policy rule enforcement;
- Traffic usage reporting;
- Uplink classifier to support routing traffic flows to a data network;
- Branching point to support multi-homed PDU session;
- QoS handling for user plane (e.g., packet filtering, gating, UL/DL rate enforcement);
- Uplink traffic verification (SDF to QoS flow mapping); and
- Function of downlink packet buffering and downlink data notification triggering.

Finally, the Session Management Function (SMF) hosts the following main functions:

- Session management;
- UE IP address allocation and management;
- Selection and control of UPF;
- Configuration function for traffic steering at the User Plane Function (UPF) to route traffic to a proper destination;
- Control part of policy enforcement and QoS; and
- Downlink data notification.

<RRC Connection Setup and Reconfiguration Procedure>

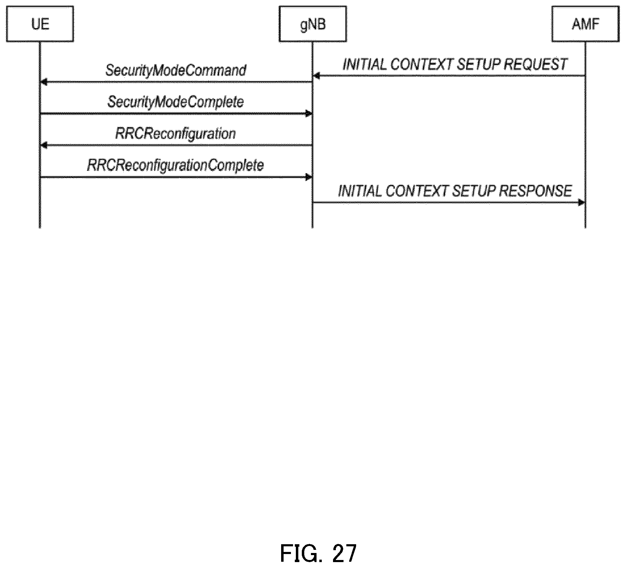

FIG. 27 illustrates some interactions between a UE, gNB, and AMF (a 5GC Entity) performed in the context of a transition of the UE from RRC_IDLE to RRC_CONNECTED for the NAS part (see TS 38 300 v15.6.0).
The RRC is higher layer signaling (protocol) used to configure the UE and gNB. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a Security-ModeCommand message and by the UE responding to the gNB with the SecurityModeComplete message. Afterwards, the gNB performs the reconfiguration to setup the Signaling Radio Bearer 2 (SRB2) and Data Radio Bearer(s) (DRB(s)) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB indicates the AMF that the setup procedure is completed with INITIAL

CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which in operation, transmits an initial context setup message to the gNodeB via the NG connection such that a signaling radio bearer between the gNodeB and a User Equipment (UE) is set up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

<Usage Scenarios of IMT for 2020 and beyond>

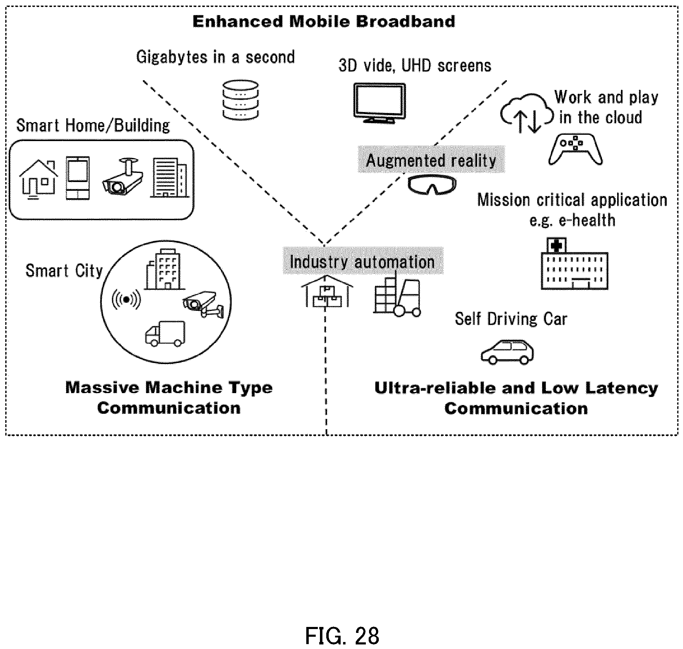

FIG. 28 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 28 illustrates some examples of envisioned usage scenarios for IMT for 2020 and beyond (see e.g., ITU-R M.2083 FIG. 2).

The URLLC use case has stringent requirements for capabilities such as throughput, latency and availability. The URLLC use case has been envisioned as one of the enablers for future vertical applications such as wireless control of industrial manufacturing or production processes, remote medical surgery, distribution automation in a smart grid, transportation safety. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, or the like. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency/higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, for example, for URLLC and mMTC, is high reliability or ultra-reliability. Several mechanisms can improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability improvement in general, regardless of particular communication scenarios.

For NR URLLC, further use cases with tighter requirements have been envisioned such as factory automation, transport industry and electrical power distribution. The tighter requirements are higher reliability (up to 10-6 level), higher availability, packet sizes of up to 256 bytes, time synchronization up to the extent of a few μs (where the value can be one or a few μs depending on frequency range and short latency on the order of 0.5 to 1 ms (in particular a target user plane latency of 0.5 ms), depending on the use cases).

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

<QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU sessions. For each UE, the NG-RAN establishes at least one Data Radio Bearer (DRB) together with the PDU session, e.g., as illustrated above with reference to FIG. 27. Further, additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

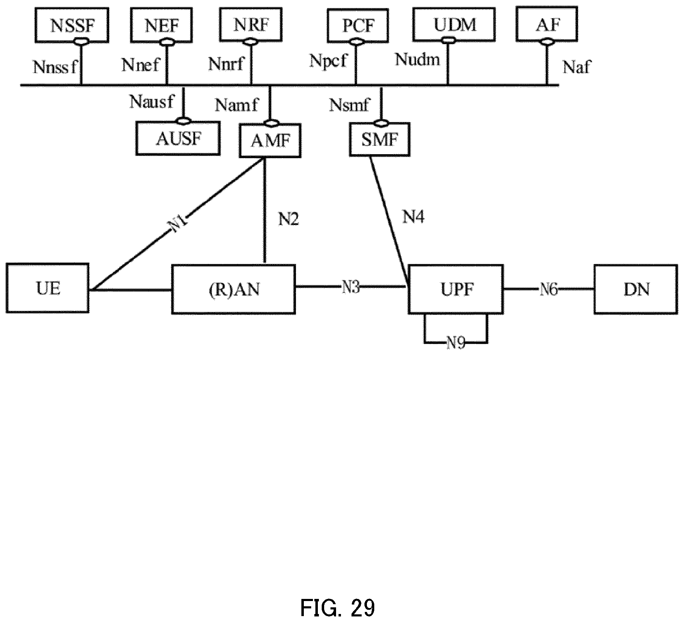

FIG. 29 illustrates a 5G NR non-roaming reference architecture (see TS 23.501 v16.1.0, section 4.23). An Application Function (AF) ( e.g., an external application server hosting 5G services, exemplarily described in FIG. 28) interacts with the 3GPP Core Network in order to provide services, for example to support application influencing on traffic routing, accessing Network Exposure Function (NEF) or interacting with the policy framework for policy control (e.g., QoS control) (see Policy Control Function, PCF). Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 29 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or third party services). All of or a part of the core network functions and the application services may be deployed and running on cloud computing environments.

In the present disclosure, thus, an application server (e.g., AF of the 5G architecture), is provided that includes: a transmitter, which in operation, transmits a request containing a QoS requirement for at least one of URLLC, eMMB and mMTC services to at least one of functions (such as NEF, AMF, SMF, PCF, and UPF) of the 5GC to establish a PDU session including a radio bearer between a gNodeB and a UE in accordance with the QoS requirement; and control circuitry, which, in operation, performs the services using the established PDU session.

In the description of the present disclosure, the term, such as "part" or "portion" or the term ending with a suffix, such as "-er" "-or" or "-ar" may be interchangeably replaced with another term, such as "circuit (circuitry)," "device," "unit," or "module."

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

A terminal according to an exemplary embodiment of the present disclosure includes: control circuitry, which, in operation, in a case where a transmission resource allocated for transmission of an uplink shared channel using a plurality of slots and a transmission resource for an uplink control channel overlap in time with each other, determines a second resource amount used for transmission of uplink control information, based on a size of data to be transmitted through the uplink shared channel in the plurality of slots and/or a first resource amount of the uplink shared channel in the plurality of slots; and transmission circuitry, which, in operation, multiplexes the uplink control information in a resource of the determined second resource amount and the data, and transmits the multiplexed uplink control information and data.

In an exemplary embodiment of the present disclosure, the size is larger than a resource amount in units of slots or a resource amount allocated for an initial transmission when a repetition transmission of the uplinik shared channel is performed.

In an exemplary embodiment of the present disclosure, the first resource amount is a value that is different from the number of symbols included in the plurality of slots.

In an exemplary embodiment of the present disclosure, the size is larger than a resource amount in units of slots or a resource amount allocated for an initial transmission when a repetition transmission of the uplinik shared channel is performed, and the first resource amount is a value that is different from the number of symbols included in the plurality of slots.

In an exemplary embodiment of the present disclosure, the control circuitry determines the second resource amount based on the size of the data, the first resource amount, and a third resource amount for the uplink shared channel in the plurality of slots.

In an exemplary embodiment of the present disclosure, the size of the data is a code block size or a transport block size of the data.

In an exemplary embodiment of the present disclosure, the control circuitry determines the second resource amount based on which of the plurality of slots is a slot in which the transmission resource for the uplink shared channel and the transmission resource for the uplink control channel overlap in time with each other.

A terminal according to an exemplary embodiment of the present disclosure includes: control circuitry, which, in operation, in a case where a transmission resource for an uplink shared channel in a plurality of slots and a transmission resource for an uplink control channel overlap in time with each other, determines, in units of slots, a resource amount used for transmission of uplink control information, based on the presence or absence of multiplexing of uplink control information in a slot before in time an overlapping slot; and transmission circuitry, which, in operation, multiplexes the uplink control information in a resource of the determined resource amount and the data, and transmits the multiplexed uplink control information and data.

In an exemplary embodiment of the present disclosure, the control circuitry determines whether to set the resource amount used for the transmission of the uplink control information to be zero.

In an exemplary embodiment of the present disclosure, the control circuitry determines whether to set the resource amount used for the transmission of the uplink control information to be zero.

In an exemplary embodiment of the present disclosure, the control circuitry varies the resource amount used for the transmission of the uplink control information between a case where a start slot in the plurality of slots is the overlapping slot and a case where a slot that is different from the start slot in the plurality of slots is the overlapping slot.

A terminal according to an exemplary embodiment of the present disclosure includes: reception circuitry, which, in operation, receives, after receiving first downlink control information for allocating a resource for an uplink shared channel, second downlink control information for allocating a resource for a downlink shared channel; and control circuitry, which, in operation, performs control of transmission of the uplink shared channel, based on whether a resource for an uplink control channel overlaps in time with the resource for the uplink shared channel, the uplink control channel being transmitted in response to reception of the downlink shared channel, in which, the resource for the uplink shared channel is over a plurality of slots, and the control of the transmission of the uplink shared channel includes at least one of controlling the number of bits of a signal that is transmitted with the resource for the uplink shared channel, configuring the resource for the uplink shared channel to be unavailable, and/or controlling an HARQ process for the downlink shared channel.

In an exemplary embodiment of the present disclosure, the control circuitry limits the number of bits to a threshold or less by puncturing a portion of the resource for the uplink shared channel, in a case where the resource for the uplink control channel and the resource for the uplink shared channel overlap in time with each other.

In an exemplary embodiment of the present disclosure, the signal is an ACK/NACK signal for reception of the dowmnlink shared channel, and the control circuitry compresses, by using ACK/NACK bundling, the number of bits of the ACK/NACK signal to the threshold or less in a case where the number of bits of the ACK/NACK signal exceeds the threshold.

In an exemplary embodiment of the present disclosure, the control circuitry gives priority to transmission of the signal using the uplink control channel over the transmission of the uplink shared channel, and may configure a resource in which the uplink control channel and the uplink shared channel overlap in time with each other as a resource that is unavailable for the transmission of the uplink shared channel.

In an exemplary embodiment of the present disclosure, the control circuitry configures the HARQ process for the downlink shared channel to be disabled, in a case where the resource for the uplink control channel and the resource for the uplink shared channel overlap in time with each other.

A base station according to an exemplary embodiment of the present disclosure includes: control circuitry, which, in operation, in a case where a transmission resource allocated for transmission of an uplink shared channel using a plurality of slots and a transmission resource for an uplink control channel overlap in time with each other, determines a second resource amount used for transmission of uplink control information, based on a size of data to be transmitted through the uplink shared channel in the plurality of slots and/or a first resource amount of the uplink shared channel in the plurality of slots; and reception circuitry, which, in operation, receives the uplink control information in a resource of the determined second resource amount and the data that has been multiplexed.

A communication method according to an exemplary embodiment of the present disclosure includes: determining, by a terminal, in a case where a transmission resource allocated for transmission of an uplink shared channel using a plurality of slots and a transmission resource for an uplink control channel overlap in time with each other, a second resource amount used for transmission of uplink control information, based on a size of data to be transmitted through the uplink shared channel in the plurality of slots and/or a first resource amount of the uplink shared channel in the plurality of slots; and multiplexing the uplink control information in a resource of the determined second resource amount and the data, and transmitting, by the terminal, the multiplexed uplink control information and data.

The disclosure of Japanese Patent Application No. 2021-064901, filed on April 6, 2021, including the specification, drawings and abstract, is incorporated herein by reference in its entirety.

Industrial Applicability

An exemplary embodiment of the present disclosure is useful for radio communication systems.

Reference Signs List

100 Base station
101, 205 Controller
102 Higher-layer control signal generator

103 Downlink control information generator
104, 206 Encoder
105, 207 Modulator
106, 208 Signal assigner
107, 209 Transmitter
108, 201 Receiver
109, 202 Extractor
110, 203 Demodulator
111, 204 Decoder
200 Terminal

**Claims**

1. A terminal, comprising:

   control circuitry, which, in operation, in a case where a transmission resource allocated for transmission of an uplink shared channel using a plurality of slots and a transmission resource for an uplink control channel overlap in time with each other, determines a second resource amount used for transmission of uplink control information, based on a size of data to be transmitted through the uplink shared channel in the plurality of slots and/or a first resource amount of the uplink shared channel in the plurality of slots; and
   transmission circuitry, which, in operation, multiplexes the uplink control information in a resource of the determined second resource amount and the data, and transmits the multiplexed uplink control information and data.

2. The terminal according to claim 1, wherein the size is larger than a resource amount in units of slots or a resource amount allocated for an initial transmission when a repetition transmission of the uplinik shared channel is performed.

3. The terminal according to claim 1, wherein the first resource amount is a value that is different from the number of symbols included in the plurality of slots.

4. The terminal according to claim 1, wherein:

   the size is larger than a resource amount in units of slots or a resource amount allocated for an initial transmission when a repetition transmission of the uplinik shared channel is performed, and
   the first resource amount is a value that is different from the number of symbols included in the plurality of slots.

5. The terminal according to claim 4, wherein the control circuitry determines the second resource amount based on the size of the data, the first resource amount, and a third resource amount for the uplink shared channel in the plularity of slots.

6. The terminal according to claim 1, wherein the size of the data is a code block size or a transport block size of the data.

7. The terminal according to claim 1, wherein the control circuitry determines the second resource amount based on which of the plurality of slots is a slot in which the transmission resource for the uplink shared channel and the transmission resource for the uplink control channel overlap in time with each other.

8. A terminal, comprising:

   control circuitry, which, in operation, in a case where a transmission resource for an uplink shared channel in a plurality of slots and a transmission resource for an uplink control channel overlap in time with each other, determines, in units of slots, a resource amount used for transmission of uplink control information, based on the presence or absence of multiplexing of uplink control information in a slot before in time an overlapping slot; and
   transmission circuitry, which, in operation, multiplexes the uplink control information in a resource of the determined resource amount and the data, and transmits the multiplexed uplink control information and data.

9. The terminal according to claim 8, wherein the control circuitry determines whether to set the resource amount used for the transmission of the uplink control information to be zero.

10. The terminal according to claim 8, wherein the control circuitry determines whether to set the resource amount used for the transmission of the uplink control information to be zero.

11. The terminal according to claim 8, wherein the control circuitry varies the resource amount used for the transmission of the uplink control information between a case where a start slot in the plurality of slots is the overlapping slot and a case where a slot that is different from the start slot in the plurality of slots is the overlapping slot.

12. A base station, comprising:

control circuitry, which, in operation, in a case where a transmission resource allocated for transmission of an uplink shared channel using a plurality of slots and a transmission resource for an uplink control channel overlap in time with each other, determines a second resource amount used for transmission of uplink control information, based on a size of data to be transmitted through the uplink shared channel in the plurality of slots and/or a first resource amount of the uplink shared channel in the plurality of slots; and
reception circuitry, which, in operation, receives the uplink control information in a resource of the determined second resource amount and the data that has been multiplexed.

13. A communication method, comprising:

determining, by a terminal, in a case where a transmission resource allocated for transmission of an uplink shared channel using a plurality of slots and a transmission resource for an uplink control channel overlap in time with each other, a second resource amount used for transmission of uplink control information, based on a size of data to be transmitted through the uplink shared channel in the plurality of slots and/or a first resource amount of the uplink shared channel in the plurality of slots; and
multiplexing the uplink control information in a resource of the determined second resource amount and the data, and transmitting, by the terminal, the multiplexed uplink control information and data.

PUSCH with UCI multiplexed

PUSCH repetition | #0 | #1 |

PUCH

PUSCH repetition | #0 | #1 |

PUCCH

FIG. 1

FIG. 2

<u>100</u>

101

CONTROLLER

108

RECEIVER

# FIG. 3

<u>200</u>

205

CONTROLLER

209

RECEIVER

# FIG. 4

100

FROM
CONTROLLER 101

DL DATA SIGNAL

104 ENCODER

105 MODULATOR

102 HIGHER-LAYER CONTROL SIGNAL GENERATOR

103 DOWNLINK CONTROL INFORMATION GENERATOR

106 SIGNAL ASSIGNER

107 TRANSMITTER

101 CONTROLLER

108 RECEIVER

109 EXTRACTOR

110 DEMODULATOR

111 DECODER

UCI OR
UL DATA SIGNAL

FIG. 5

FIG. 6

Start

S11
Transmission resources for PUCCH transmission and PUSCH transmission overlap in time with each other?

No → 

S12
Transmit UCI through PUCCH

End

Yes

S13
PUSCH transmission using multiple slots (TBoMS)?

No →

Yes →

S18
Determine TBS in units of slots

S14
Determine TBS by ⟨TBS-Approach 1⟩ or ⟨TBS-Approach 2⟩

S19
Determine, in units of slots, resource amount for UCI to be multiplexed on PUSCH and map UCI to PUSCH resource

S15
Determine resource amount for UCI to be multiplexed on PUSCH and map UCI to PUSCH resource

S20
Map, in units of slots, uplink data to PUSCH resource

S16
Map uplink data to PUSCH resource by ⟨RM-Approach 1⟩ or ⟨RM-Approach 2⟩

S21
Transmit UCI and uplink data by multiplexing on PUSCH

S17
Transmit UCI and uplink data by multiplexing on PUSCH

End

End

FIG. 7

PUSCH with UCI multiplexed

UCI is multiplexed on PUSCH with Scheme 1

TBoMS PUSCH #0 #1

TBoMS PUSCH #0 #1

PUCCH

PUCCH

FIG. 8A

PUSCH with UCI multiplexed

UCI is multiplexed on PUSCH with Scheme 2

TBoMS PUSCH #0 #1

TBoMS PUSCH #0 #1

PUCCH

PUCCH

FIG. 8B

UCI is multiplexed and/or
[β and/or α] is used

UCI is NOT multiplexed and/or
[$\beta_{ext}$ and/or $\alpha_{ext}$] is used

TBoMS
PUSCH

| #0 | #1 | #2 | #3 |

PUCCH

## FIG. 9A

UCI is multiplexed and/or
[β and/or α] is used

TBoMS
PUSCH

| #0 | #1 | #2 | #3 |

PUCCH

## FIG. 9B

```
                              ┌──────────────────────┐
                              │  Start (N-th slot)   │
                              └──────────────────────┘
                                         │
                                         ▼                      S61
                              ╱────────────────────────╲
                            ╱  Transmission resources   ╲        No
                          ╱    for PUCCH transmission     ╲──────────────────┐
                          ╲    and PUSCH transmission     ╱                   │
                            ╲   overlap in time with     ╱                    │
                              ╲      each other?        ╱                     ▼        S62
                                ╲────────────────────╱              ┌──────────────────┐
                                         │ Yes                      │   Transmit UCI   │
                                         ▼           S63            │  through PUCCH   │
              No              ╱────────────────────────╲            └──────────────────┘
     ┌───────────────────────╲  Is UCI multiplexed in  ╱                     │
     │                         ╲  previous slots         ╱                    ▼
     │                          ╲  (n = 0 to n-1)?      ╱            ┌──────────────────┐
     │                            ╲────────────────────╱             │       End        │
     │                                    │ Yes    S64              └──────────────────┘
     ▼               S65                  ▼
```

Multiplex UCI
or
calculate UCI resource amount using $[\beta$ and/or $\alpha]$

Drop UCI
or
calculate UCI resource amount using $[\beta_{ext}$ and/or $\alpha_{ext}]$

End

End

FIG. 10

| DL | DL | DL | UL | UL | DL | DL | UL | UL | UL |
|----|----|----|----|----|----|----|----|----|----|
| #0 | #1 | #2 | #3 | #4 | #5 | #6 | #7 | #8 | #9 |

Not allowed for UCI multiplexing

PDCCH (DCI for UL)

PDCCH (DCI for DL) and PDSCH

PUSCH

PUCCH for ACK/NACK

| DL | DL | DL | UL | UL | DL | DL | UL | UL | UL |
|----|----|----|----|----|----|----|----|----|----|
| #0 | #1 | #2 | #3 | #4 | #5 | #6 | #7 | #8 | #9 |

FIG. 11

FIG. 12

EP 4 322 661 A1

```
                              ┌──────────┐
                              │  Start   │
                              └────┬─────┘
                                   │
                              ┌────▼──────────┐  S101
                              │ Receive first DCI │
                              └────┬──────────┘
                                   │
                              ╱────▼────╲  S102
                          No ╱ TBoMS      ╲
                        ◄───╲ transmission?╱
                             ╲────┬────╱
                               Yes
```

S103

Allow allocation of PUCCH resource for transmitting
ACK/NACK for PDSCH assigned by second DCI
after reception of first DCI for assigning PUSCH,
to resource overlapping in time with
transmission of PUSCH assigned by first DCI

S108

Not allow allocation of PUCCH resource for transmitting
ACK/NACK for PDSCH assigned by second DCI
after reception of first DCI for assigning PUSCH,
to resource overlapping in time with
transmission of PUSCH assigned by first DCI

S104

Receive second DCI

S105

Transmission resources for PUCCH assigned by second DCI
and PUSCH assigned by first DCI overlap in time?

No / Yes

S107

Transmit ACK/NACK with PUCCH resource

S106

Transmit ACK/NACK (X bits or less)
by puncturing portion of PUSCH resource

End

FIG. 13

FIG. 14

PDCCH (DCI for UL)

PDCCH (DCI for DL) and PDSCH

n-th frame for TBoMS transmission

TBoMS transmission with HARQ-ACK multiplexed

Start

Receive first DCI ~S101

S102
TBoMS transmission? — No

Yes

S103
Allow allocation of PUCCH resource for transmitting
ACK/NACK for PDSCH assigned by second DCI
after reception of first DCI for assigning PUSCH,
to resource overlapping in time with
transmission of PUSCH assigned by first DCI

S108
Not allow allocation of PUCCH resource for transmitting
ACK/NACK for PDSCH assigned by second DCI
after reception of first DCI for assigning PUSCH,
to resource overlapping in time with
transmission of PUSCH assigned by first DCI

Receive second DCI ~S104

S105
Is
a slot where transmission resources for PUCCH assigned by
second DCI and PUSCH assigned by first DCI overlap in time?

No

Yes

S107
Transmit ACK/NACK
with PUCCH resource

S106a
Transmit ACK/NACK with PUCCH resource and
transmit PUSCH by postponing to later slot

End

FIG. 15

FIG. 16

EP 4 322 661 A1

FIG. 17

EP 4 322 661 A1

| DL | DL | DL | UL | UL | DL | DL | UL | UL | UL |
|----|----|----|----|----|----|----|----|----|----|
| #0 | #1 | #2 | #3 | #4 | #5 | #6 | #7 | #8 | #9 |

MS#0 | MS#1

MS#2 | MS#3

HARQ is disabled.

- PDCCH (DCI for UL)

- PDCCH (DCI for DL) and PDSCH

MS#n — n-th frame for TBoMS transmission

FIG. 18

EP 4 322 661 A1

EP 4 322 661 A1

| DL | DL | DL | UL | UL | DL | DL | UL | UL | UL |
|----|----|----|----|----|----|----|----|----|----|
| #0 | #1 | #2 | #3 | #4 | #5 | #6 | #7 | #8 | #9 |

MS#0  MS#1

MS#2  MS#3

PDCCH (DCI for UL)

PDCCH (DCI for DL) and PDSCH

MS#n  n-th frame for TBoMS transmission

MS#n  TBoMS transmission with HARQ-ACK multiplexed

FIG. 19

EP 4 322 661 A1

| DL | DL | DL | UL | UL | DL | DL | UL | UL | UL |
|----|----|----|----|----|----|----|----|----|----|
| #0 | #1 | #2 | #3 | #4 | #5 | #6 | #7 | #8 | #9 |

MS#0

MS#1 | MS#2 | MS#3

PUSCH is postponed.

PDCCH (DCI for UL)

PDCCH (DCI for DL) and PDSCH

MS#n — n-th frame for TBoMS transmission

PUCCH for ACK/NACK

FIG. 20

| | | PUSCH priority | |
|---|---|---|---|
| | | Low | High |
| ACK/NACK priority | Low | Case 1 | Case 2 |
| | High | Case 3 | Case 4 |

FIG. 21

| #0 | #1 | #2 | #3 | #4 | #5 | #6 | #7 | #8 | #9 |
|----|----|----|----|----|----|----|----|----|----|
| DL | DL | DL | UL | UL | DL | DL | UL | UL | UL |

MS#0

MS#1  MS#2  MS#3

PUSCH is postponed.

PDCCH (DCI for UL)

PDCCH (DCI for DL) and PDSCH

n-th frame for TBoMS transmission — MS#n

PUCCH for ACK/NACK

FIG. 22

EP 4 322 661 A1

| DL | DL | DL | UL | UL | DL | DL | UL | UL | UL |
|---|---|---|---|---|---|---|---|---|---|
| #0 | #1 | #2 | #3 | #4 | #5 | #6 | #7 | #8 | #9 |

PUCCH repetition
window

TBoMS transmission window

TBoMS transmission window

PDCCH (DCI for UL)

PDCCH (DCI for DL) and PDSCH

MS#n — n-th frame for TBoMS transmission

MS#n — TBoMS transmission with HARQ-ACK multiplexed

PUCCH for ACK/NACK

FIG. 23

| | K1=0 | K1=1 | K1=2 | K1=3 | K1=4 | K1=5 | K1=6 | K1=7 | K1=8 |
|---|---|---|---|---|---|---|---|---|---|
| | K1=0 | K1=1 | | | K1=2 | K1=3 | | | K1=4 |
| | DL | DL | DL | UL | UL | DL | DL | UL | UL | UL |
| | #0 | #1 | #2 | #3 | #4 | #5 | #6 | #7 | #8 | #9 |

MS#0  MS#1

MS#2  MS#3

Not allowed for UCI multiplexing

PDCCH (DCI for UL)

PDCCH (DCI for DL) and PDSCH

MS#n    n-th frame for TBoMS
        transmission

PUCCH for ACK/NACK

FIG. 24

FIG. 25

| gNB or ng - eNB | AMF | SMF |
| --- | --- | --- |
| Inter Cell RRM | NAS Security | UE IP address allocation |
| RB Control | Idle State Mobility Handling | |
| Connection Mobility Cont. | | PDU Session Control |
| Radio Admission Control | UPF | |
| Measurement Configuration & Provision | Mobility Anchoring | |
| Dynamic Resource Allocation (Scheduler) | PDU Handling | internet |
| NG - RAN | 5 GC | |

FIG. 26

FIG. 27

**Enhanced Mobile Broadband**

Gigabytes in a second

3D vide, UHD screens

Work and play in the cloud

Smart Home/Building

Augmented reality

Mission critical application e.g. e-health

Smart City

Industry automation

Self Driving Car

**Massive Machine Type Communication**

**Ultra-reliable and Low Latency Communication**

FIG. 28

FIG. 29

## INTERNATIONAL SEARCH REPORT

| International application No. |
|---|
| **PCT/JP2022/008727** |

| A. | CLASSIFICATION OF SUBJECT MATTER |
|---|---|

*H04W 72/04*(2009.01)i; *H04W 72/12*(2009.01)i
FI:　H04W72/12 150; H04W72/04 131; H04W72/04 136; H04W72/04 137

According to International Patent Classification (IPC) or to both national classification and IPC

| B. | FIELDS SEARCHED |
|---|---|

Minimum documentation searched (classification system followed by classification symbols)

H04W72/04; H04W72/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | Moderator (Apple Inc.), "Summary of email discussion [104-e-NR-L1enh-URLLC-03] on PUSCH enhancements for NR eURLLC", 3GPP TSG-RAN WG1 Meeting #104-e R1-2102106, [online], 08 February 2021, pp. 1-12, [retrieved on 24 March 2022], <URL: https://www.3gpp.org/ftp/tsg_ran/WG1_RL1/TSGR1_104-e/Docs/R1-2102106.zip> <br> 3 Issue 2: Part 2 CSI dropping for UCI multiplexing on PUSCH repetition Type B [pp. 7-10] | 1, 3, 6, 12-13 |
| A | | 2, 4-5, 7 |
| A | LG Electronics, "Discussion on Intra-UE multiplexing/prioritization", 3GPP TSG-RAN WG1 Meeting #104-e R1-2100883, [online], 19 January 2021, pp. 1-14, [retrieved on 24 March 2022], <URL: https://www.3gpp.org/ftp/tsg_ran/WG1_RL1/TSGR1_104-e/Docs/R1-2100883.zip> <br> 2.3. PUSCH-specific aspects [pp. 8-10] | 1-7, 12-13 |
| A | NEC, "Discussion on TB processing over multi-slot PUSCH", 3GPP TSG-RAN WG1 Meeting #104-e R1-2100943, [online], 19 January 2021, pp. 1-2, [retrieved on 11 May 2022], <URL: https://www.3gpp.org/ftp/tsg_ran/WG1_RL1/TSGR1_104-e/Docs/R1-2100943.zip> <br> 2. Discussion [pp. 1-2] | 1-7, 12-13 |

☑ Further documents are listed in the continuation of Box C. ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 May 2022** | **24 May 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT

| | International application No. |
|---|---|
| | **PCT/JP2022/008727** |

**C.    DOCUMENTS CONSIDERED TO BE RELEVANT**

| Category* | Citation of document, with indication, where appropriate, of the relevant passages | Relevant to claim No. |
|---|---|---|
| P, X | vivo, "Discussion on PUSCH skipping with overlapping UCI on PUCCH in Rel-16", 3GPP TSG-RAN WG1 Meeting #104b-e R1-2102934, [online], 06 April 2021, pp. 1-7, [retrieved on 11 May 2022], <URL: https://www.3gpp.org/ftp/tsg_ran/WG1_RL1/TSGR1_104b-e/Docs/R1-2102934.zip><br>    2. Discussions [pp. 2-6] | 1, 3, 6-7, 12-13 |

Form PCT/ISA/210 (second sheet) (January 2015)

## INTERNATIONAL SEARCH REPORT

International application No.

**PCT/JP2022/008727**

| Box No. III | Observations where unity of invention is lacking (Continuation of item 3 of first sheet) |
|---|---|

This International Searching Authority found multiple inventions in this international application, as follows:

Document 1: Moderator (Apple Inc.), "Summary of email discussion [104-e-NR-L1enh-URLLC-03] on PUSCH enhancements for NR eURLLC", 3GPP TSG-RAN WG1 Meeting #104-e R1-2102106, [online], 08 February 2021, pp. 1-12, [retrieved on 24 March 2022], <URL: https://www.3gpp.org/ftp/tsg_ran/WG1_RL1/TSGR1_104-e/Docs/R1-2102106.zip>
   3 Issue 2: Part 2 CSI dropping for UCI multiplexing on PUSCH repetition Type B [pp. 7-10]

   The claims are classified into the following two inventions.

Invention 1) Claims 1-7, 12-13
   Document 1 discloses "a terminal which, when a transmission resource allocated to transmission of an uplink shared channel using a plurality of slots temporally overlaps with a transmission resource of an uplink control channel, determines a second resource amount to be used for transmission of uplink control information on the basis of the size of data transmitted in the uplink shared channel in the plurality of slots, and/or a first resource amount of the uplink shared channel in the plurality of slots, and multiplexes and transmits the data and the uplink control information in the resources of the determined second resource amount" (see, in particular, 3 Issue 2: Part 2 CSI dropping for UCI multiplexing on PUSCH repetition Type B [pp. 7-10]). Claim 1 lacks novelty in light of document 1 and thus does not have a special technical feature. However, claim 2 depending from claim 1 has the special technical feature of "the size (of the data transmitted in the uplink shared channel in the plurality of slots) is greater than the resource amount of the slot unit, or the resource amount allocated to initial transmission when performing repeated transmission of the uplink shared channel."
   Therefore, claims 1-2 are classified as invention 1.
   Furthermore, claims 3-7 depend from claim 1 and are inventively linked with claim 1. Thus, claims 3-7 are classified as invention 1.
   Claim 12 is classified as invention 1 as a result of having a special technical feature corresponding to claim 1.
   Moreover, claim 13 is substantially identical to claim 1, and thus is classified as invention 1.

Invention 2) Claims 8-11
   Claims 8-11 cannot be said to share the same or corresponding feature with claim 2 classified as invention 1.
   Furthermore, claims 8-11 do not depend from claim 1. Additionally, claims 8-11 are not substantially identical to or similarly closely related to any of the claims classified as invention 1.
   Therefore, claims 8-11 cannot be classified as invention 1.
   Claims 8-11 are classified as invention 2 as a result of having the special technical feature of "a terminal, comprising: a control circuit which, when a transmission resource of an uplink shared channel in a plurality of slots temporally overlaps with a transmission resource of an uplink control channel, determines a resource amount to be used for transmission of uplink control information in units of slots on the basis of the presence/absence of multiplexing of uplink control information in a slot temporally preceding the overlapping slots; and a transmission circuit which multiplexes data and the uplink control information in the resources of the determined resource amount."

Form PCT/ISA/210 (continuation of first sheet) (January 2015)

## INTERNATIONAL SEARCH REPORT

| International application No. |
| --- |
| **PCT/JP2022/008727** |

**Box No. III**      **Observations where unity of invention is lacking (Continuation of item 3 of first sheet)**

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **Claims 1-7, 12-13**

**Remark on Protest**    ☐ The additional search fees were accompanied by the applicant's protest and, where applicable, the payment of a protest fee.

                        ☐ The additional search fees were accompanied by the applicant's protest but the applicable protest fee was not paid within the time limit specified in the invitation.

                        ☐ No protest accompanied the payment of additional search fees.

Form PCT/ISA/210 (continuation of first sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021064901 A

**Non-patent literature cited in the description**

- NR Base Station (BS) radio transmission and reception (Release 15). *3GPP TS38.104,* December 2020
- **CHINA TELECOM.** New WID on NR coverage enhancements. *RP-202928,* December 2020
- NR Physical channels and modulation (Release 16). *3GPP TS38.211,* December 2020
- NR Multiplexing and channel coding (Release 16). *3GPP TS38.212,* December 2020
- NR Physical layer procedures for control (Release 16). *3GPP TS38.213,* December 2020
- NR Physical layer procedures for data (Release 16). *3GPP TS38.214,* December 2020
- **NOKIA ; NOKIA SHANGHAI BELL.** FL summary of TB processing over multi-slot PUSCH (SI 8.8.1.2). *R1-2102241,* 25 February 2021